# EUROPÄISCHE PATENTSCHRIFT

(11) **EP 3 238 898 B1**
(45) Veröffentlichungstag und Bekanntmachung des Hinweises auf die Patenterteilung: **16.10.2019**
(21) Anmeldenummer: 17168340.2
(22) Anmeldetag: 27.04.2017
(51) Int. Cl.: A22C 17/00, A22C 25/10, B26D 5/30, B26D 3/16, A22C 25/08, A22C 25/18, B26D 5/02, B26D 5/06, B26D 5/08, B26D 7/06, B26D 7/30, B26D 7/01

(54) **SCHNEIDEMASCHINE SOWIE VERFAHREN ZUM AUFSCHNEIDEN VON ELASTISCHEN STRÄNGEN, INSBESONDERE FLEISCHSTRÄNGEN**
CUTTING MACHINE AND METHOD FOR SLICING ELASTIC STRANDS, IN PARTICULAR MEAT STRANDS
MACHINE DE COUPE ET PROCÉDÉ DE COUPE DE CORDONS ÉLASTIQUES, EN PARTICULIER DES CORDONS DE VIANDE

(30) Priorität: 28.04.2016 DE 102016107849
(43) Veröffentlichungstag der Anmeldung: 01.11.2017
(73) Patentinhaber: TVI Entwicklung und Produktion GmbH, 83737 Irschenberg (DE)
(72) Erfinder: Mayr, Martin, 83549 Eiselfing (DE); Völkl, Thomas, 83052 Bruckmühl (DE)
(74) Vertreter: Weickmann & Weickmann PartmbB

(56) Entgegenhaltungen:
- EP-A2- 2 366 508
- DE-A1-102004 041 915
- DE-A1-102007 019 106

## Beschreibung

### I. Anwendungsgebiet

Die Erfindung betrifft das Aufschneiden eines elastischen Stranges wie etwa eines Fleischstranges in, insbesondere gewichtsgenaue, Scheiben.

### II. Technischer Hintergrund

Die Herstellung von gewichtsgenauen Scheiben oder Portionen aus einem elastischen Strangmaterial ist relativ problemlos möglich, wenn dieses Strangmaterial über seine Länge überall den gleichen Querschnitt besitzt und aus einem homogenen, überall gleich einfach zu durchtrennenden, Material besteht, wie etwa Wurst oder Käse.

Hierfür sind so genannte Slicer bekannt, die meist mit einem runden oder spiralförmigen, rotierenden Messer, welches quer zum Strang vor- und zurückgefahren werden kann, jeweils eine Scheibe abschneiden, während der dabei meist frei liegende Strang kontinuierlich vorwärts gefahren wird.

Ein Fleischstrang, z.B. Roastbeef, hat diese Eigenschaften jedoch nicht, denn jedes Stück besitzt eine andere Gestaltung und darüber hinaus einen sich über die Länge ändernden Querschnitt und besteht aus Materialien unterschiedlicher Konsistenz, Härte und Elastizität, beispielsweise aus den Fettanteilen, dem reinen Muskelstrang, der umgebenden Silberhaut und gegebenenfalls auch noch Knochen wie bei einem Kotelett-Strang, die sich mechanisch sehr unterschiedlich verhalten.

In diesem Zusammenhang ist es bereits bekannt, einen Lachs zunächst so zu verformen, dass dieser zumindest an dem Ende, an dem die nächste Scheibe abgeschnitten wird, vorzugsweise über die gesamte Länge, einen definierten, bekannten Querschnitt besitzt, zumindest im Zeitpunkt des Abschneidens der Scheibe. Dann kann eine Relation zwischen der einstellbaren Dicke der Scheibe und dem Gewicht der Scheibe hergestellt werden, wenn auch nicht hundertprozentig, da sich von einer Scheibe zur nächsten die Zusammensetzung des Fleisches , dessen Komponenten unterschiedliche spezifische Gewichte aufweisen, bereits ändern kann.

Um diese Verformung zu erreichen, wird der - in der Regel leicht angefrorene - Lachs zunächst in ein Formrohr eingesteckt, und in axialer Richtung mittels eines Längs-Pressstempels gegen einen Anschlag gepresst, sodass sich der Lachs in seinem Querschnitt so aufweitet, dass er den gesamten inneren Freiraum des Formrohres ausfüllt.

Dabei können Formrohre unterschiedlichen Querschnittes benutzt werden, je nach Abmessungen des Lachses, und der Querschnitt des Formrohres kann nach Einlegen des Lachses zusätzlich verändert werden, beispielsweise indem zwei gegenüberliegende Seitenwände des Formrohres aufeinander zu bewegt werden, und damit auch eine Querverpressung des Lachses bewirkt wird, was die Struktur des Fleisches schont.

Bei derartigen Schneidemaschinen kann der Lachs nur in das Formrohres eingeschoben werden, nachdem der Längspress-Stempel oder der Quer-pressstempel aus dem Formrohr entfernt wurde und die Beladeöffnung, meist die hintere Öffnung des Formrohres, frei zugänglich ist.

Dies bewirkt relativ lange Tot-Zeiten zwischen den Aufschneide-Phasen und erforderte bisher ein Beladen von Hand.

Für die Integration einer solchen Schneidemaschine in eine Verarbeitungs-Linie - meist bestehend aus einem Froster, einer oder mehreren parallel arbeitenden Schneidemaschinen, einer Waage, einem Portionierer/Einleger zum Einlegen der Portionen/Scheiben in eine Schale und gegebenenfalls einer Siegel-Maschine zum dichten Versiegeln der Schalen - ist dies jedoch hinderlich, da hierfür entweder ein Mitarbeiter zum Beladen von ein bis drei Schneidemaschinen benötigt wird oder ein hoher Automatisierungsaufwand betrieben werden muss, um diese Mitarbeiter einzusparen.

Zusätzlich müssen die einzelnen Formrohre, also Fleischstränge, möglichst individuell handhabbar sein, da zum Beispiel bei einer Oberschale nach Entfernen des Qualitäts-Anschnittes Schnitzel geschnitten werden können,

Dagegen können aus einem Schweinerücken nach Entfernen des Qualitäts-Anschnittes Minuten-Steaks geschnitten werden, und das Reststück aus rotem Fleisch als Braten verwendet werden.

In diesem Zusammenhang ist aus der DE 102004041915 A1 bereits eine Schneidemaschine gemäß dem Oberbegriff des Anspruchs 1 bekannt sowie ein Verfahren zum Herstellen von Scheiben aus einem Fleischstrang, bei dem vor dem Aufschneiden außer dem Längsverpressen ein Querverpressen des Fleischstranges nur in einer Querrichtung erfolgt.

### II. Darstellung der Erfindung

### a) Technische Aufgabe

Es ist daher die Aufgabe gemäß der Erfindung, eine Schneidemaschine sowie ein Verfahren zum Aufschneiden zur Verfügung zu stellen, welches trotz einfachem Aufbau und Ablauf geringe Totzeiten und damit einen hohen Durchsatz bei dennoch sehr gewichtsgenau erzielbaren Scheiben und Portionen ermöglicht.

### b) Lösung der Aufgabe

Diese Aufgabe wird durch die Merkmale der Ansprüche **1** und **23** gelöst. Vorteilhafte Ausführungsformen ergeben sich aus den Unteransprüchen.

Für die Zwecke der vorliegenden Erfindung wird im Folgenden ausschließlich von Fleischsträngen gesprochen, ohne die Erfindung auf diese spezielle Art eines Stranges aus elastischem Material zu beschränken.

Hinsichtlich des Verfahrens wird diese Aufgabe durch folgenden Verfahrensablauf gelöst:
Mehrere der länglichen Fleischstränge werden jeweils in einer ersten Querrichtung zu ihrer Längsrichtung etwa parallel nebeneinander liegend in je einem hinsichtlich seines Querschnitts veränderbaren, in Längsrichtung verlaufenden, Formrohr angeordnet. Anschließend werden diese Fleischstränge mit Hilfe des Formrohres jeweils in dieser ersten Querrichtung zusammengepresst und gleichzeitig oder danach ebenfalls mit Hilfe des in einer zweiten, zur ersten Querrichtung vorzugsweise senkrecht stehenden, Querrichtung ebenfalls zusammengepresst. Was Zusammenpressen in der einen, insbesondere der zweiten, Querrichtung kann für jeden der Fleischstränge unabhängig weit und/oder stark gegenüber den anderen Fleischsträngen erfolgen.

Die so quer-verpressten Fleischstränge werden in diesem quer-verpressten Zustand vorher, gleichzeitig oder anschließend im Formrohr in Längsrichtung mittels eines Längspressstempels zunächst gegen einen Anschlag längsverpresst und danach vorwärts geschoben über das vordere Schneidende des Formrohres hinaus und vor dem Schneidende des Formrohres von den Fleischsträngen jeweils eine Scheibe abgetrennt.

Das Verpressen dient dazu, dass der Strang den freien Querschnitt des Formrohres vollständig ausfüllt und damit die Scheiben eine definierte Fläche quer zu ihrer Längsrichtung besitzen.

Das Abtrennen je einer Scheibe kann durch ein- und dasselbe Messer und im gleichen Arbeitsgang über alle Formrohre und damit Fleischstränge erfolgen. Das Messer wird zum Abtrennen der Scheiben vorzugsweise in Querrichtung, insbesondere der zweiten Querrichtung, bei jedem Schnitt vor und zurück bewegt.

Zusätzlich wird beim Abtrennen der Scheiben das Messer - beispielsweise ein rotierende kreisscheibenförmiges oder sichelförmiges Messer oder ein osziellierendes balkenförmiges oder streifenförmiges Messer oder ein umlaufendes endloses bandförmiges Messer - hinsichtlich seiner Drehzahl und/oder der Geschwindigkeit seiner Querbewegung so gesteuert, dass angepasst auf das zu schneidende Material der erfolgende Schnitt in dem gewünschten Maß ein sogenannter ziehender Schnitt ist, also ein bestimmter Punkt der Schneide sich in Umfangsrichtung mit einer Geschwindigkeit bewegt, die um einen vorgegebenen Faktor grösser ist als die Geschwindigkeit in Querrichtung.

Das Quer-Verpressen der Fleischstränge in der ersten Querrichtung erfolgt vorzugsweise bis auf ein vorgegebenes, festes Maß, welches vorzugsweise für alle, vorzugsweise zwei, parallel liegende Formrohre und darin eingelegten Fleischstränge jeweils das gleiche Maß ist. Da das Quer-Verpressen in der ersten Querrichtung in aller Regel erfolgt, bevor das Quer-Verpressen in der zweiten Querrichtung durchgeführt wird, wird dieses Quer-Verpressen in der ersten Querrichtung im Folgenden weiterhin als Quer-Verpressen bezeichnet, de facto wird dabei jedoch lediglich der freie innere Querschnitt des Formrohres in dieser ersten Querrichtung auf eine bestimmte Breite eingestellt, und der darin liegende Fleischstrang nur wenig in dieser Richtung verpresst, beispielsweise bei einem länglichen Querschnitt nur etwas um seine Längsachse gedreht.

Dadurch kann das Quer-Verpressen in der zweiten Querrichtung - die vorzugsweise auf der ersten Querrichtung lotrecht steht und vorzugsweise beide lotrecht zur Längsrichtung stehen - mit einem Quer-Pressstempel einer bestimmten, nicht veränderbaren, Breite entsprechend dem Endmaß beim Quer-Verpressen in der ersten Querrichtung, erfolgen, vorzugsweise für die einzelnen Fleischstränge unabhängig voneinander hinsichtlich des Maßes der Quer-Verpressung in dieser zweiten Querrichtung.

Das Vorwärtsschieben der verpressten Fleischstränge kann synchron oder unabhängig voneinander erfolgen, und somit können in demselben Arbeitsgang bei unterschiedlich weit vorgeschobenen Fleischsträngen auch unterschiedlich dicke Scheiben und wegen der individuell einstellbaren Querverpressung zumindest in der zweiten Querrichtung auch Scheiben mit unterschiedlichem Querschnitt und damit Größe in einem Arbeitsgang abgetrennt werden.

Die Fleischstränge werden vorzugsweise in Längsrichtung gegen ein jeweils vor dem vorderen Ende des Formrohres angeordnetes Anschlagelement, insbesondere eine Anschlagplatte, gedrückt, welche vorzugsweise für jedes Formrohr unabhängig voneinander in ihrem axialen Abstand zu der axialen Schneidposition des Messers eingestellt werden kann entsprechend der gewünschten Dicke der abzutrennenden Scheibe. Da sich ja das Messer beim Schneiden entweder Anlage oder in einem fixen, sehr kleinen, axialen Abstand zum vorderen Schneidende des Formrohres befindet, wird damit das Anschlagelement in einem bestimmten axialen Abstand zum vorderen Schneidende des Formrohres eingestellt.

Eine erste Maßnahme zum Reduzieren der Totzeiten besteht darin, dass sich das Messer unmittelbar nach dem Abtrennen der vordersten Scheiben noch vor oder spätestens während des Zurückfahrens in Querrichtung axial, also in Vorschubrichtung, vorwärtsbewegt, insbesondere etwa um die Dicke einer Scheibe.

Dies bewirkt, dass das Vorwärtsschieben des Fleischstranges über das vordere Ende des Formrohres hinaus bis zur Anschlagplatte nicht erst dann erfolgen kann, wenn das Messer den Querschnittsbereich des inneren Freiraumes des Formrohres vollständig verlassen hat, sondern bereits vorher beginnen kann, was die Zeitspanne zwischen zwei aufeinanderfolgenden Schnitten deutlich verringert und damit die Effizienz der Maschine steigert.

Natürlich muss danach, also wenn das Messer in Querrichtung den Querschnittsbereich des Formrohres ganz verlassen hat, das Messer in axialer Richtung entgegen der Vorschubrichtung wieder in seine axiale Schneidposition zurückverfahren werden, so dass das Messer in der Seitenansicht auf die Längsrichtung einerseits und die zweite Querrichtung, die Bewegungsrichtung des Messers andererseits, bei jedem Schnitt einen beispielsweise rechteckförmigen oder trapezförmigen Weg beschreibt.

Hinsichtlich der Bewegung in der Querrichtung, in der sich das Messer bewegt, ist die Anschlagplatte mit dem Messer fest verbunden, lediglich deren axialer Abstand und/oder deren Abstand in der anderen Querrichtung kann verändert werden.

In Vorschubrichtung betrachtet überlappen die Anschlagplatte und das Messer - bei einem rotierenden nicht-kreisscheibenförmigen Messer der Flugkreis des Messers - vorzugsweise nicht miteinander, sondern dazwischen besteht ein schmaler Spalt.

Eine zweite Maßnahme zum Verringern der Totzeiten besteht darin, dass das Formrohr in seiner Längsrichtung zweiteilig ausgebildet ist und aus einem am vorderen Schneidende endenden Front-Formrohr und einem sich daran nach hinten anschließenden Heck-Formrohr besteht.

Zwischen diesen ist vorzugsweise eine Zwischenplatte in einer Querrichtung, insbesondere der zweiten Querrichtung, ein- und ausgefahrbar. Wie Quer-Verpressung im Front-Formrohr kann abhängig von der Quer-Verpressung im dahinter angeordneten Heck-Formrohr durchgeführt werden.

In der umfänglich geschlossenen, verpressenden Stellung des Formrohres werden die Querschnitte von Front-Formrohr und Heck-Formrohr natürlich identisch eingestellt, da sich ja der gleiche Fleischstrang und den Querschnitt vollständig ausfüllend, durch beide hindurch bewegen soll.

Vorzugsweise wird im Front-Formrohr keine Quer-Verpressung in beiden Querrichtungen, sondern nur in der zweiten Querrichtung durchgeführt.

Front-Formrohr und Heck-Formrohr können hinsichtlich des Zeitpunktes und der Stärke der Quer-Verpressung, - zumindest in einer Querrichtung, vorzugsweise in beiden Querrichtungen - unabhängig voneinander betätigt werden.

Sobald sich beim Aufschneiden eines Fleischstranges dessen hinterer Endbereich nur noch im Längsbereich des Front-Formrohres befindet und weiter mittels des axial von hinten drückenden Pressstempels vorwärts geschoben wird zum weiteren Aufschneiden, kann bereits gleichzeitig das untere Heck-Formteil im ganzen oder wenigstens sein hinterer Bereich, nach unten abgesenkt werden in eine mit dem Zuförderer für neue Fleischstränge fluchtende, insbesondere horizontale, Belade-Stellung.

Dabei wird insbesondere der innere freie Querschnitt des Heck-Formrohres hinsichtlich seines Querschnitts vergrößert, vorzugsweise in der Höhe vergrößert und/oder vorzugsweise auch in der Breite vergrößert.

Dadurch kann bereits während des Aufschneidens des Restes des vorangehenden Fleischstranges im Front-Formrohr in das geöffnete Heck-Formrohr desselben Formrohres bereits ein neuer Fleischstrang abseits, insbesondere unterhalb, der zum Front-Formrohr verlaufenden Kolbenstange des Längs-Pressstempels eingelegt werden und bis zum vorderen Ende des Heck-Formrohres, insbesondere einer dortigen Zwischenplatte, vorwärts transportiert werden.

Dadurch wird wieder wertvolle Zeit eingespart, gegenüber einer Lösung, bei der erst nach dem vollständigen Aufschneiden eines ersten Fleischstranges dieses Formrohr geöffnet und der nächste Fleischstrang eingelegt werden kann.

Um den inneren freien Querschnitt des Heck-Formrohres zu vergrößern, kann entweder das untere Heck-Formteil - welches im Querschnitt betrachtet U-förmig ausgebildet ist mit nach oben weisender Öffnung - parallel zum oberen Heck-Formteil - welches als in die Öffnung der U-Form eintauchbarer Quer-Pressstempel ausgebildet ist und dient - von diesem entfernt werden oder auch um eine quer verlaufende Achse, die sich insbesondere in der Nähe oder am vorderen Ende des unteren Heck-Formteiles befindet, das hintere Ende des Heck-Formrohrteiles nach unten geklappt werden.

Zusätzlich kann eine Seitenwand - bei zwei nebeneinander angeordneten Heck-Formrohren vorzugsweise die die äußere Seitenwand - als separates Teil in der ersten Querrichtung beweglich zum Rest des insgesamt U-förmigen unteren Heck-Formteiles ausgeführt sein und gegenüber diesem in Querrichtung nach außen gefahren werden, um den inneren Freiraum für das Einlegen eines neuen Fleischstranges zu erleichtern.

Sobald dieser eingelegt ist - in der Regel durch Einschieben von hinten mittels eines in Längsrichtung verfahrbaren Einschiebers, beispielsweise einer von oben her in den Freiraum des U-förmigen unteren Heck-Formteiles hineinragenden Einschiebers - wird zunächst - falls vorhanden - die in der ersten Querrichtung verfahrbare Seitenwand als Querpresswand des Heck-Formrohres nach innen gefahren zum Einstellen der Breite des U-förmigen, unteren Heck-Formteiles in dieser ersten Querrichtung, wobei gegebenenfalls auch ein Quer-Verpressen des Fleischstranges in der ersten Querrichtung stattfinden kann.

Der neue Fleischstrang befindet sich nun in dem unteren Teil des geöffneten Heck-Formrohres und der vorhergehende Fleischstrang wird noch vollständig aufgeschnitten und der Längs-Pressstempel zurückgezogen über das hintere Ende des neu eingelegten Fleischstranges hinaus - das jeweils konkret mittels eines Sensors ermittelt werden kann, so dass die Rückzugsbewegung des Längs-Pressstempels vorzugsweise nur bis dorthin erfolgt.

Dann wird das Heck-Formrohr wieder geschlossen, also das untere Heck-Formteil , das U-Teil, nach oben bewegt bzw. hoch geklappt, bis es mit dem unteren Front-Formteil fluchtet, und dadurch an den nicht mit herabgeklappten Quer-Pressstempel nicht nur angenähert, sondern der Quer-Pressstempel taucht dadurch in das U-Teil ein. Durch Beaufschlagen des Quer-Pressstempels in der zweiten Querrichtung, zum Beispiel mittels mindestens eines pneumatischen oder hydraulischen Arbeits-Zylinders, wird die Quer-Verpressung in dieser zweiten Querrichtung durchgeführt.

Die Längsverpressung des Fleischstranges beginnt danach durch eine Vorverpressung bis zu der Zwischenplatte als vorderem Anschlag am vorderen Ende des Heck-Formrohres, welches vor dem Längsverpressen in die verschließende Stellung in Querrichtung verfahren wurde, sodass es den freien inneren Querschnitt des Formrohres verschließt. Dadurch müssen die beim Längsverpressen auftretenden Kräfte nicht von einem anderen Element, z. B. der Anschlagplatte, aufgenommen werden, welches damit weniger schwer ausgebildet werden muss, was angesichts der ständigen Beschleunigung und Abbremsung beim Aufschneiden Geschwindigkeitsvorteile bringt.

Damit der Fleischstrang nach dem Vorverpressen ausschließlich im Heckformrohr nach Entfernen der Zwischenplatte aus dem freien Querschnitt des Heck-Formrohres weiter nach vorn geschoben werden kann in das Front-Formrohr, wird das Front-Formrohr vorher auf die gleiche Größe, insbesondere Höhe und/oder Breite, des freien inneren Querschnittes eingestellt wie das Heck-Formrohr. Vorzugweise besitzt das Front-Formrohr eine fixe Breite, und beim Querverpressen im Heck-Formrohr wird dieses auf genau diejenige Breite des freien inneren Querschnittes des Front- Formrohres eingestellt.

In der zweiten Querrichtung kann dies optional sehr einfach dadurch erreicht werden, dass der Quer-Pressstempel, der die Quer-Verpressung in der zweiten Querrichtung vollzieht, über Front-Formrohr und Heck-Formrohr durchgeht und gemeinsam relativ zu den übrigen Formrohr-Teilen in Querrichtung bewegt wird, also in der Regel von oben nach unten abgesenkt oder angehoben wird.

Vorzugsweise erfolgt die Quer-Verpressung in der zweiten Querrichtung bereits, während sich der Fleischstrang noch ausschließlich im Bereich des Heck-Formrohres befindet.

Danach wird die Zwischenplatte so verfahren, dass sie den freien inneren Querschnitt des Form-Rohres freigibt, und der quer-verpresste Fleischstrang mittels des Längs-Pressstempels weiter vorgefahren in das Front-Formrohr hinein und durch dieses hindurch bis insbesondere zur Anschlagplatte, und dann kann das Aufschneiden des neuen Fleischstranges beginnen.

Eine Quer-Verpressung in der ersten Querrichtung wird dabei im Front-Formrohr vorzugsweise nicht durchgeführt, sondern das Front-Formrohr besitzt in der ersten Querrichtung eine fixe Breite entsprechend dem in dieser ersten Querrichtung geschlossenen, verpressenden Zustand des Heck-Formrohres.

Statt im Heck-Formrohr kann eine Quer-Verpressung in der ersten Querrichtung alternativ auch diesem in Durchlaufrichtung vorgelagert in einer separaten Quer-Press-Vorrichtung, insbesondere einer Quer-Press-Wanne, durchgeführt werden, die analog zum im Querschnitt U-förmigen unteren Heck-Formteil ausgebildet ist.

Damit die Fleischstränge problemlos in das geöffnete Heck-Formrohr von hinten hinein gelangen können, sollte das hintere Ende des Heck-Formrohres in der Beladestellung zu dem Boden seines rinnenförmigen inneren Freiraumes mit dem angrenzenden vorderen Ende des Zuförderers, in der Regel eines Förderbandes, fluchtend angeordnet werden oder dieses etwas höher enden, eventuell nach unten geneigt sein.

Um zu vermeiden, dass ein sich auf diesem abfallenden Bereich des Zuförderers liegender Fleischstrang unbeabsichtigt vorwärts rutscht, wird bevorzugt der an das Heck-Formrohr angrenzende Teil des Zuförderers vertikal beweglich ausgebildet, indem - sobald sich ein Fleischstrang darauf befindet - das vordere Ende des Zuförderers nach unten herabgeklappt wird in fluchtende Position mit dem unteren hinteren Bereich des inneren Freiraumes des Heck-Formrohres oder zu dem gleichen Zweck stattdessen das hintere Ende des hochgeklappt wird.

Um das Einbringen des Fleischstranges in das Formrohr zu erleichtern, kann wenigstens eine Wandung des Formrohres, vorzugsweise die untere Wandung, ggf. auch die gegenüberliegende obere Wandung des Formrohres, in Längsrichtung beweglich ausgebildet sein, z. B. in Form eines Förderbandes, und wird mit dem einzubringenden Fleischstrang mitbewegt und insbesondere auch angetrieben, um den Fleischstrang axial vorwärts zu bewegen.

Die abgetrennten Scheiben und/oder die sich daraus aufbauenden Portionen werden möglichst unmittelbar nach dem Abtrennen vom Fleischstrang gewogen.

Sollte beim Verwiegen der einzelnen Scheiben oder Portionen stromabwärts des Messers sich herausstellen, dass mit dieser Einstellung die nachfolgenden Scheiben oder die im Entstehen begriffene Portion nicht das Zielgewicht haben wird, können die nachfolgenden abzutrennenden Scheiben durch entsprechende axiale Verstellung der Scheibendicke dicker oder dünner gewählt werden, sodass die nächste Scheibe das Sollgewicht besitzt beziehungsweise die fertiggestellte Position das Sollgewicht besitzt.

Hinsichtlich der Schneidemaschine wird diese Aufgabe durch die folgende Gestaltung gelöst, die unter anderem auch die zuvor beschriebene Vorgehensweise beim Aufschneiden ermöglicht:
Die Schneidemaschine umfasst mindestens ein Formrohr, insbesondere mehrere, vorzugsweise zwei parallel nebeneinander angeordnete, vorne und hinten offene, in Längsrichtung - die im umfänglich geschlossenen Zustand des Formrohres gleichzeitig die Längs-Pressrichtung ist - verlaufende Formrohre, in die je ein Fleischstrang eingelegt werden kann.

Zu jedem Formrohr ist ein Längs-Pressstempel vorhanden, der vom hinteren Beladeende des Formrohres aus axial, also in Längs-Pressrichtung, in das Formrohr einschiebbar ist und an den Innen-Umfangswänden von dessen innerem Freiraum dicht anliegt, und den darin befindlichen Fleischstrang vorwärts schiebt z.B. gegen ein im vorderen Endbereich vorhandenes Anschlagelement, beispielsweise die Zwischen-Platte, und damit in Längsrichtung verpressen kann.

Das Ziel besteht darin, dass die Querschnittsfläche jeder abzutrennenden Scheibe bekannt ist, indem der freie innere Querschnitt des Formrohres in seiner verpressten Stellung aufgrund der Position der Quer Pressstempel und der Querpresswanne bekannt ist, so dass daraus abgeschnittene Scheiben bei bekannter Scheibendicke ein berechenbares Volumen haben, da die Querschnittsfläche der Scheibe = freier innerer Querschnitt des Form-Rohres ebenfalls bekannt ist, denn der durch die Innen-Umfangswände des Formrohres, das Anschlagelement und den Längs-Pressstempel begrenzte Innenraum ist der durch das Verpressen vollständig mit dem Material des Fleischstranges gefüllt.

Die Formrohre bestehen in Umfangsrichtung aus mehreren Formteilen, die relativ zueinander, insbesondere in radialer Richtung des Formrohres, bewegbar sind, so dass der freie innere Querschnitt des Formrohres in beiden Querrichtungen variiert werden kann und die Formteile sogar im Querrichtung vollständig außer Eingriff zueinander gebracht werden können, zumindest bei einem Teil des Formrohres.

In der Regel besitzt der innere Freiraum einen Rauten-förmigen oder rechteckigen Querschnitt, natürlich mit abgerundeten Ecken, bis hin zu der Form einer Ellipse, dessen Kantenrichtungen je eine der Querrichtungen zur Längsrichtung definieren, in der sie Formrohrteile zueinander beweglich sind, vorzugsweise in einer lotrecht zur Längsrichtung liegenden Quer-Ebene.

Vor dem vorderen Schneideende des Formrohres ist ein Messer zum Abtrennen von Scheiben von den Fleischsträngen angeordnet.

Das Messer ist in einer ersten Messer-Querrichtung, in der es den Querschnitt des Fleischstranges beim Abtrennen einer Scheibe vollständig durchläuft, und die vorzugsweise die zweite Querrichtung der Maschine ist, vorzugsweise beweglich und gesteuert verfahrbar, um den Abtrennvorgang durchzuführen, und vorzugsweise zusätzlich auch in Längsrichtung, der Vorschubrichtung, um eine begrenzte Strecke gesteuert beweglich.

Es handelt sich vorzugsweise um ein balkenförmiges oder streifenförmiges Messer, welches eine gerade oder gebogene Schneidkante besitzt und bei dem die Schneidkante, vorzugsweise natürlich das gesamte Messer, eine oszillierende Bewegung in einer Oszillier-Richtung vollzieht, deren größte Komponente sich in Richtung der Schneidkante erstreckt.

Bei einer geraden Schneidkante stimmt die Oszillier-Richtung vorzugsweise mit der Verlaufsrichtung der Schneidkante überein oder verläuft zumindest unter einem spitzen Winkel zu dieser Verlaufsrichtung in der Messerebene.

Bei einer gebogenen Schneidkante bezieht sich diese Aussage auf die Verlaufsrichtung der Schneidkante auf eine Tangente der Schneidkante, insbesondere die Verbindungslinie zwischen dem Anfang und dem Ende der gebogenen Schneidkante.

Eine Alternative ist ein kreisscheiben-förmiges oder sichelförmiges Messer, mit einer außen am Umfang des Messers angeordneten Schneidkante, welches um eine Achse, die bei einem kreisscheiben-förmigen Messer in der Aufsicht betrachtet durch das Zentrum des Messers verläuft, rotierend antreibbar ist.

Das Messer kann so dimensioniert sein, dass sich seine Schneidkante, bei einem rotierenden sichelförmigen Messer sein Flugkreis, in der zweiten Messer-Quer Richtung, die lotrecht zur ersten Messer-Querrichtung steht, über die inneren Freiräume aller parallel angeordneten Formrohre hinweg erstreckt und somit bei einer Schnittbewegung von dem Fleischstrang in jedem Formrohr je eine Scheibe abtrennt, oder es kann pro Formrohr ein eigenes, separates Messer vorhanden sein.

Die Längs-Pressstempel der einzelnen Formrohre sind vorzugsweise unabhängig voneinander steuerbar, so dass das Aufschneiden der aus den einzelnen Formrohren herausgeschobenen Fleischstränge unabhängig voneinander erfolgen kann mittels einer entsprechenden Steuerung, die die Bewegungen sämtlicher beweglicher Teile der Schneidemaschine zueinander steuert.

Die Formrohre verlaufen in der umfänglich geschlossenen Schneide-Stellung schräg nach unten zu ihrem vorderen Schneidende hin, insbesondere unter einem spitzen Winkel von **20°** bis **70°,** besser von **30°** bis **60°,** besser von **40°** bis **50°** zur Horizontalen, so dass die am vorderen Ende abgetrennten Scheiben problemlos auf einen darunter befindlichen Abförderer, in der Regel ein Förderband, fallen und abtransportiert werden können, entweder einzeln oder nachdem auf dem Abförderer eine Portion aus beispielsweise gefächerten Scheiben erstellt wurde.

Als Anschlagelement für das vordere Ende des aus dem vorderen Schneidende des Formrohres heraus geschobenen Fleischstranges dient vorzugsweise eine Anschlagplatte, die sich vor dem Abtrennen einer Scheibe vor dem Querschnittsbereich des vorderen Ende des inneren Freiraumes des jeweiligen Formrohres befindet und vorzugsweise ebenfalls für jedes Formrohr separat und nicht über alle Formrohre hinweggehend ausgebildet ist, um eben die einzelnen Formrohre unterschiedlich steuern zu können, zum Beispiel unterschiedlich dicke Scheiben erzeugen zu können.

Anschlagplatte und das - gemeinsame oder die einzelnen - Messer bilden zusammen eine Schneideinheit, da sie zwar unabhängig voneinander in zumindest der axialen Richtung bewegbar sind, jedoch in der Querrichtung, in der das Messer für das Aufschneiden den Fleischstrang durchläuft, meist fest miteinander verbunden sind.

Mittels der Axialverstellung der Anschlagplatte zum Messer wird die Dicke der herzustellenden Scheiben festgelegt.

Die Anschlagplatte könnte jedoch nicht nur längs verstellbar zum Einstellen und Fixieren einer bestimmten Scheibendicke sein, sondern mittels der Steuerung in Längsrichtung automatisch verstellbar sein, sodass dann selbst innerhalb des Aufschneidens eines Fleischstranges die Scheibendicke verstellt werden könnte.

Das Messer führt dagegen bei jedem einzelnen Schnitt zusätzlich zu seiner Bewegung in Querrichtung auch die bei der Vorgehensweise beschriebene Bewegung in und gegen die Längs-Pressrichtung des Fleischstranges durch.

Vorzugsweise befindet sich - in Längs-Pressrichtung betrachtet - zwischen Anschlagplatte und Messer ein geringer Spalt. Wenn also das Messer kreisscheiben-förmig ist, besitzt die ihm zugewandte Kante der Anschlagplatte vorzugsweise eine entsprechend konkave Kontur. Ist das Messer zwar rotierend ausgebildet, aber nicht kreisscheibenförmig, so gilt das Gleiche für den Flugkreis des äußeren Endes des Messers.

Der Spalt sollte vorzugsweise weniger als **20** mm, insbesondere weniger als **10** mm, breit sein, und unter Berücksichtigung der Konsistenz des aufzunehmenden Materials und/oder der Scheibendicke gewählt werden, also mit zunehmender Scheibendicke ebenfalls zunehmen.

Dies ermöglicht auf der einen Seite eine gute Abstützung des Fleischstranges durch die Anschlagplatte vor Eintauchen des Messers in den Fleischstrang, und andererseits kann nach dem vollständigen Durchtrennen des Fleischstranges die erzeugte Scheibe unbehindert durch die Anschlagplatte nach vorne unten kippen.

Für die zeitliche Überlappung von Aufschneiden und Einlegen des nächsten Fleischstranges ist jedes Formrohr vorzugsweise in seiner Längsrichtung unterteilt in das Front-Formrohr und das Heck-Formrohr. **Dabei** besitzt das Front-Formrohr vorzugsweise eine Länge zwischen **2** % und **50** %, besser zwischen **5** % und **30** %, besser zwischen **10** % und **20** % der gesamten Länge des Formrohres. Das Front-Formrohr weist vorzugsweise eine Länge von mindestens 5 cm, besser mindestens 10 cm, besser mindestens 12 cm auf.

Zwischen dem Front-Formrohr und dem Heck-Formrohr ist - insbesondere bei allen Formrohren - jeweils eine separate oder eine über alle Formrohre durchgehende Zwischenplatte in Querrichtung so einfahrbar, dass sie im vollständig eingeschobenen Zustand, der Schließstellung, den Querschnitt des inneren Freiraumes des umfänglich geschlossenen, also in der Aufschneide-Stellung befindlichen, Formrohres vollständig verschließt, und in der Offenstellung diesen vollständig freigibt.

Die Zwischenplatte ist vorzugsweise an dem hinteren Ende des Front-Formrohres, insbesondere dessen unteren Front -Formteiles, verfahrbar angeordnet

Front-Formrohr und Heck-Formrohr unterscheiden sich in ihrem Aufbau:
Das Heck-Formrohr besteht aus mindestens zwei relativ zueinander in einer oder beiden Querrichtungen verfahrbaren Heck-Formteilen.

Dadurch wird der Aufbau der Formrohre vereinfacht. Der innere Freiraum der Formrohre ist in Längsrichtung betrachtet vorzugsweise rechteckig, besitzt also vier Wandungen, wobei die Ecken abgerundet sein sollten. Die Kantenrichtungen des Querschnittes des inneren Freiraumes definieren die beiden Querrichtungen, die in einer lotrechten Quer-Ebene zur Längs-Pressrichtung verlaufen, und in der die Längs-Pressstempel bewegbar sind.

Von den bei einem rechteckigen inneren Freiraum vorhandenen vier Wandungen des Formrohres, insbesondere des Heck-Formrohres, kann wenigstens eine Wandung aus dem Trum eines in Durchlaufrichtung der Maschine verlaufenden Zuförderband gebildet, insbesondere sogar zwei einander gegenüberliegende Wandungen von je einem solchen Zuförderband gebildet werden.

Das Heck-Formrohr kann in Umfangsrichtung betrachtet beispielswiese aus einem erstem gewinkelten Heck-Formteil bestehen, welches zwei aneinander angrenzende der vier Wandungen bildet, sowie zwei weiteren Heck-Formteilen, die jeweils nur eine einzige Wandung des rechteckigen Querschnittes bilden.

Vorzugsweise besteht das erste Heck-Formteilen mit den zwei Wandungen einerseits aus dem angesprochenen, in Längsrichtung beweglichen, Formrohrband als untere Wandung des Formrohr-Querschnittes und einer oder zwei daran angeordneten Seitenwänden, der Formrohrwand, die also zwei im Winkel zueinanderstehende Wandungen des Formrohres bilden, die ohne ein solches Zuförderband ein einfaches Winkelstück bilden.

Dieser an der Unterseite des Formrohres angeordneten Seitenwand steht eine Quer-Presswand gegenüber, die in einer ersten Querrichtung - also entlang der Ebene der Unterseite des Innenraumes des Formrohres - in Querrichtung auf die gegenüberliegende Seitenwand zu verfahrbar ist für eine Quer-Verpressung in dieser ersten Querrichtung.

Dabei fährt die Quer-Presswand eine fixe Endposition an, so dass nach Anfahren dieser fixen Endposition der Abstand zwischen Querpresswand und gegenüberliegender Seitenwand genau dem Breitenmaß eines von oben her dazwischen in einer zweiten Querrichtung einfahrbaren Quer-Pressstempels entspricht, der die vierte Wandung bildet und die Quer-Verpressung des Fleischstranges im Innenraum des Formrohres in der zweiten Querrichtung bewirkt.

Das Zuförderband kann eine größere Breite als der Abstand zwischen der Formrohr-Wand und der Querpress-Wand im vollständig vorwärts geschobenen Zustand besitzen und damit auch eine größere Breite als der größte Durchmesser eines zu verarbeitenden Fleischstranges.

Falls Unterseite und Oberseite des Querschnittes des Formrohres durch jeweils ein solches Zuförderband gebildet werden, besitzt zumindest die Querpress-Wand eine solche Erstreckung in der Höhe des Formrohr-Querschnittes im geschlossenen Zustand, dass die Querpress-Wand zwischen das obere und das untere Zuförderband eintauchen kann.

Vorzugsweise befindet sich auch die Seitenwand, die an dem einen Formrohr-Band oder den beiden Formel-Bändern angeordnet ist, zwischen den beiden Zuförderbändern.

In der Regel besteht jedoch das Heck-Formteil aus einem unteren Heck-Formteil, welches im Querschnitt U-förmig als U-Teil ausgebildet ist oder aus einem Winkelstück oder auch T-Stück und einem quer zu der einen Seitenwand des Winkelstückes verfahrbaren anderen Seitenwand, der Quer-Presswand, besteht.

In die nach oben weisende Öffnung dieses U-Teiles ist - in Längsrichtung betrachtet - ein weiteres Heck-Formteil als Quer-Pressstempel in der zweiten Querrichtung dicht anliegend an den Innenflanken des U-Teiles einfahrbar zum Querverpressen in der zweiten Querrichtung

Um den inneren Freiraum des Formrohres vom geschlossenen, den Fleischstrang quer verpressenden, Zustand in einen Zustand mit größerem Querschnitt zum Einlegen eines Fleischstranges zu bringen, können die beiden seitlichen Wandungen und die untere Wandung des Formrohres, insbesondere gemeinsam, nach unten abgesenkt werden, also insbesondere bei dem zuvor beschriebenen Aufbau das Zuförderband, die damit fest verbundene Formrohrwand und die Querpresswand.

Diese zwei oder drei, den unteren U-Teil bildenden, Formrohr-Teile des Heck-Formrohres werden um einen vorbestimmten Weg vorzugsweise mit Hilfe eines Scherengestänges nach unten abgesenkt in paralleler Annäherung und Beabstandung zu dem oberen Quer-Pressstempel oder verschwenkt um eine Querachse, die in der ersten Querrichtung verläuft und an oder nahe an dem vorderen Ende des Heck-Formrohres angeordnet ist.

Alle Heck-Formteile wie vorzugsweise mit Formrohr-Wand und die Querpress-Wand erstrecken sich über die gesamte axiale Länge des Heck-Formrohres, und der Querpress-Stempel sogar vorzugsweise darüber hinaus bis zum vorderen Ende des Front-Formrohres.

Statt einer in Längsrichtung einstückigen Ausbildung des Querpress-Stempels in Front-Formrohr und Heck-Formrohr können dies auch zwei separate, in der zweiten Querrichtung jedoch fest miteinander gekoppelte, Teile sein.

Alternativ kann die Quer-Verpressung in der ersten Querrichtung mit einer separaten Quer-Presswanne mit aufeinander zu beweglichen Seitenwänden vollzogen werden, die in Durchlaufrichtung dem Heck-Formteil vorgelagert ist, wobei dann die Quer-Presswanne auf eine Breite in der ersten Querrichtung zusammengefahren wird, die der Breite des U-Teiles des unteren Heck-Formteiles entspricht.

Aus dieser Quer-Presswanne kann das in der ersten Querrichtung quer-verpresste Fleischstrang mittels eines Einschiebers in das in die Beladestellung abgesenkte und mit der Quer-Presswanne oder dem Zuförderer fluchtende Heck-Formrohr eingeschoben werden.

Beim Front-Formrohr werden vorzugsweise die drei unteren Wandungen durch ein einstückiges U-Teil gebildet, welches eine zu der oberen Kante hin offene Ausnehmung besitzt, in die der Querpress-Stempel des Front-Formrohres bzw. der über Front-Formrohr und Heck-Formrohr durchgehende Querpress-Stempel genau hineinpasst und von oben eintauchen kann.

Bei der Anordnung von genau zwei Formrohren parallel nebeneinander wird als fest mit dem unteren Formrohr-Band oder einem festen Boden des unteren Heck-Formteiles verbundene Seitenwand diejenige Seitenwand gewählt, die dem jeweils anderen Formrohr zugewandt ist, so dass es sich um eine Mittelwand handelt, die als feste Seitenwand für beide benachbarte Formrohre dient, während die Querpress-Wände jeweils auf der Außenseite jedes Formrohres angeordnet und in der ersten Querrichtung verfahrbar sind.

Im in Querrichtung vollständig geschlossenen, also verpressenden, Zustand des Formrohres sind die Querschnitte des inneren Freiraumes von Front-Formrohr und Heck-Formrohr gleich groß und gleich gestaltet und fluchten zueinander, da sich ja der Fleischstrang vom Heck-Formrohr aus durch das Front-Formrohr hindurch zu dem davor befindlichen Messer weitergeschoben und auch längs verpresst werden soll.

Die Längs- und Quer-Verpressung dient ja wie aus dem Stand der Technik bekannt dazu, dass der möglicherweise z. B. birnenförmige Fleischstrang über seine gesamte Länge umfänglich überall an der Innenkontur des Formrohres im verpressten Zustand anliegt, und auch an der vorderen Anschlagplatte sowie am hinteren Längs-Pressstempel, und damit ein bekannter Querschnitt des Fleischstranges und auch eine bekannte Länge vorliegt, die das Abtrennen von in Querrichtung gleich großen Scheiben erst ermöglicht. Nur bei einer immer gleichen Querschnittsfläche kann über die Einstellung der Dicke der Scheibe das gewünschte Volumen und damit Gewicht der Scheibe gesteuert werden zumindest bei Knochen-freiem Material.

Bei knochigem Material werden die Scheiben vorzugsweise gewogen, und zusätzlich der Querschnitt bestimmt, während die Dicke der Scheibe ja aufgrund der Messereinstellung bekannt ist oder separat nochmals gemessen wird.

Um zumindest im verpressenden, geschlossenen Zustand einen umfänglich geschlossenen inneren Freiraum zu erzielen, läuft die Querpress-Wand bei ihrer Annäherung an die gegenüber liegende Seitenwand mit ihrer unteren Längskante möglichst dicht auf dem nach oben weisenden Trum des die untere Wandung des Formrohres bildenden Formrohr-Bands oder dem Bodenschenkel des unteren Heck-Formteiles.

Bei der Quer-Verpressung ist der Querpress-Stempel vorzugsweise positionsgesteuert, insbesondere kraftbegrenzt, wobei über die Detektion der vollständig vorgeschobenen Endposition des Querpress-Stempels mittels eines entsprechenden Positions-Sensors und in Kenntnis des Abstandes von Querpress-Wand zur gegenüberliegenden Seitenwand und der im geschlossenen Zustand des Formrohres bekannten Position der unteren Wandung des Formrohres, z. B. des Formrohr-Bandes, die Größe des Querschnittes der verpressten Fleischstranges bekannt ist und die Steuerung daraus die notwendige Dicke der Scheiben berechnen kann, damit die Scheiben das vorgegebene Zielgewicht haben.

Denn unmittelbar stromabwärts des Formrohres befindet sich eine Waage, die die abgeschnittenen und darauf fallenden Scheiben bzw. sich aus den Scheiben aufbauenden Portionen wiegt. Um hier möglichst genau wiegen zu können, ist die Waage vorzugsweise nicht mit der Schneidemaschine verbunden, sondern als separates Teil auf dem Untergrund aufgesetzt ohne Verbindung zur Schneidemaschine, um die Übertragung von Erschütterungen auf die Waage zu vermeiden.

Da der im verpressenden Zustand gewünschte innere Querschnitt des Formrohres je nach Größe der zu verarbeitenden Fleischstränge unterschiedlich sein kann, indem die vorgeschobene Endposition der Quer-Presswand anders festgelegt wird, und dementsprechend ein anderer oberer Quer-Pressstempel mit anderer Breite verwendet wird, muss auch der Längs-Pressstempel den entsprechenden Querschnitt des geschlossenen, also in der Verpress-Stellung befindlichen, Formrohres besitzen und deshalb leicht austauschbar am vorderen Ende der ihn bewegenden Kolbenstange angeordnet sein oder in der ersten und/oder zweiten Querrichtung in seiner Größe variabel sein, insbesondere gegen die Kraft einer Feder zusammendrückbar sein.

Die abgerundeten Ecken des Querschnittes des inneren Freiraumes des Formrohres erleichtern das vollständige Ausfüllen des inneren Freiraumes durch den Fleischstrang beim Verpressen.

Um diese abgerundeten Ecken zu erzielen, besitzen sowohl die Querpress-Wand als auch die fest mit der unteren Wandung, vorzugsweise dem Formrohr-Band, verbundene Seitenwand an ihren unteren, dem inneren Freiraum zugewandten, Längskanten als auch der Quer-Pressstempel an seinen beiden unteren Längskanten jeweils einen leistenförmigen, sich über die gesamte Länge dieses Teiles erstreckenden, Vorsprung, der in seinem Querschnitt ein rechtwinkliges Dreieck darstellt, dessen Hypotenuse konkav gekrümmt ist in Form eines z.B. Viertel-Kreises. Diese Vorsprünge sind so angeordnet, dass sich im Zusammenwirken der Formrohr-Teile ein rechteckiger Querschnitt mit abgerundeten Ecken ergibt.

Eines der Heck-Formteile, vorzugsweise der Heck-Quer-Pressstempel, kann - insbesondere auch im axialen Bereich des Front-Formrohres - aus seiner Kontaktfläche vorstehende Tastfinger aufweisen, die durch Druck auf seine Kontaktfläche gegen die Kraft einer Feder zurückgeschoben werden können und deren Vorschub-Position detektiert wird, um dort gegebenenfalls die Kontur eines nicht-elastischen Anteils des Fleischstranges, z. B. der Knochen bei einem Kotelettstrang, abzutasten und damit eine Querschnittsbestimmung auch eines solchen unhomogenen Fleischstranges zu ermöglichen.

### c) Ausführungsbeispiele

Ausführungsformen gemäß der Erfindung sind im Folgenden beispielhaft näher beschrieben. Es zeigen:
- Fig. **1**a - **1**e:: eine erste Bauform der Schneidemaschine in Beladestellung in unterschiedlichen Ansichten,
- Fig. **2**a - d:: die erste Bauform der Schneidemaschine in der Aufschneidestellung in unterschiedlichen Ansichten,
- Fig. **3**a, b:: einen Schnitt in Querrichtung durch das Heck-Formteil beim Hochfahren aus der Beladestellung gemäß Figur **1**c,

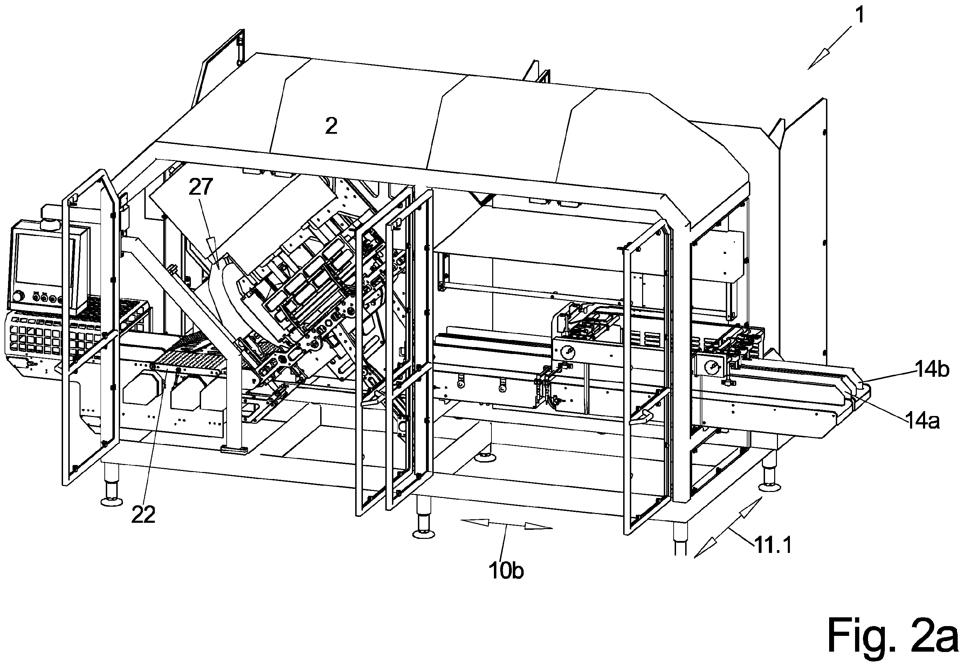

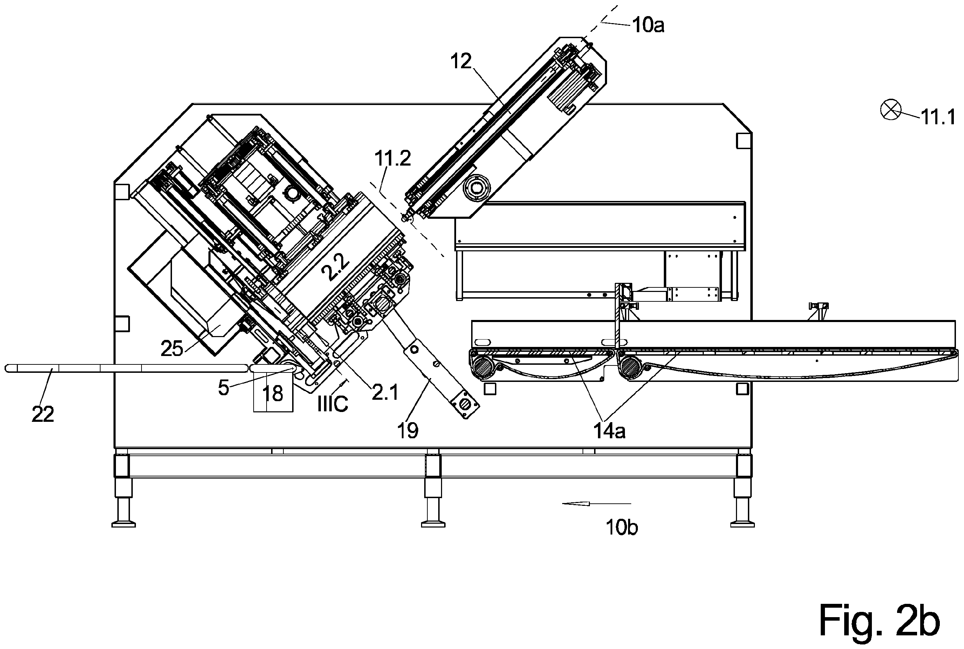

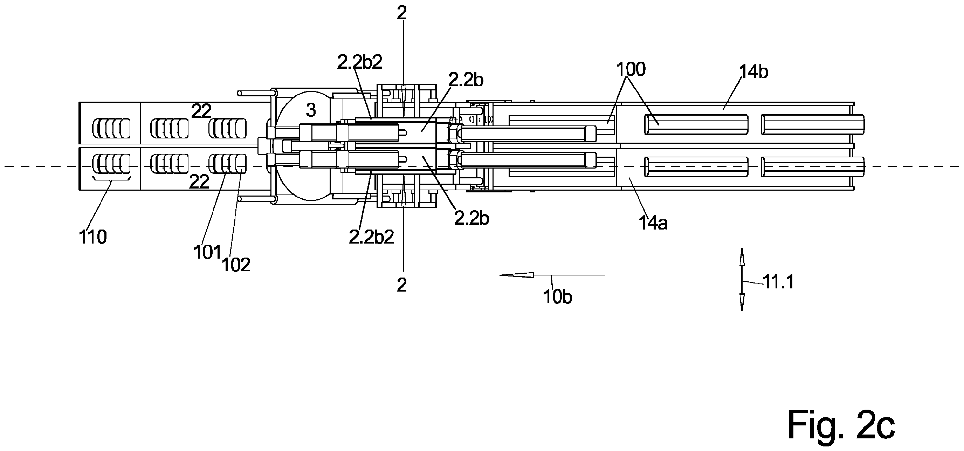

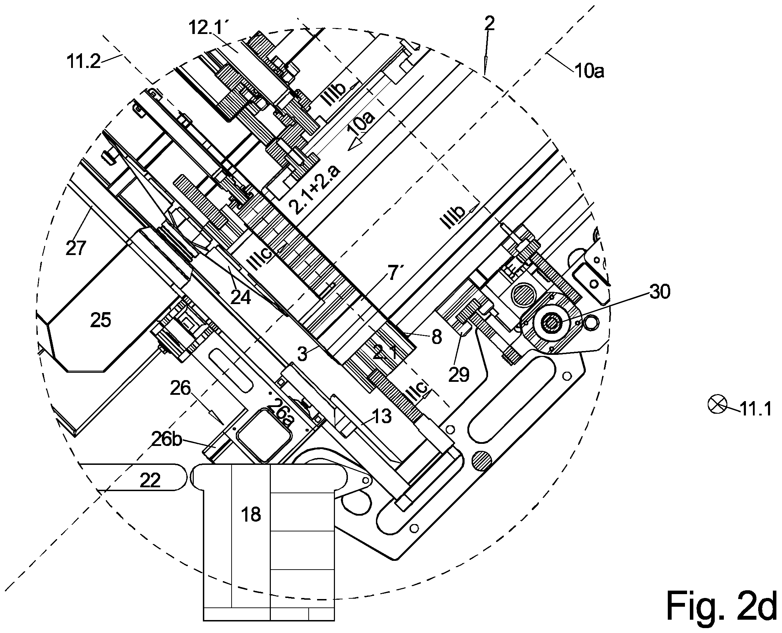

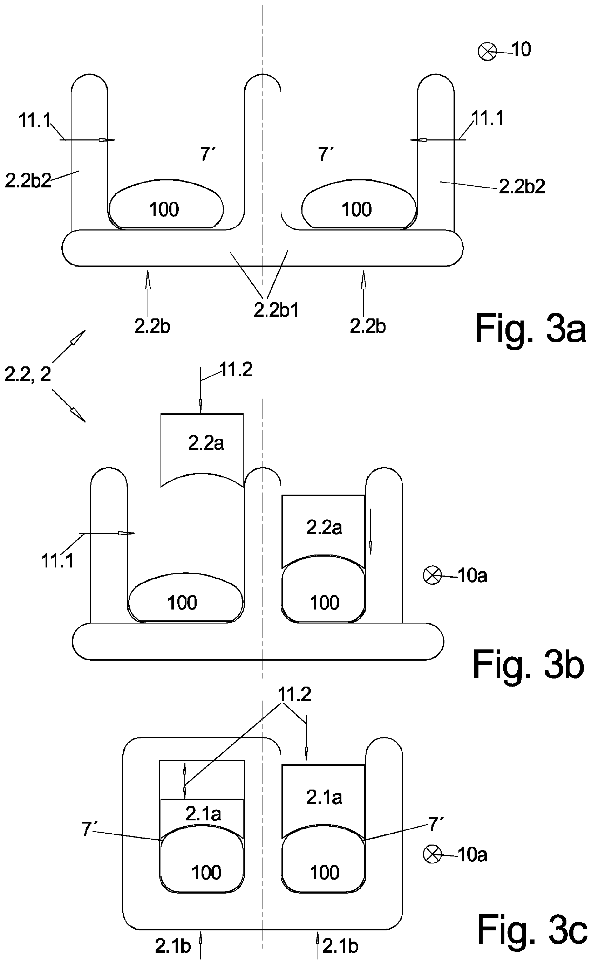

- Fig. **3**c:: einen Schnitt in Querrichtung durch das Front-Formteil gemäß Figur **2**d,

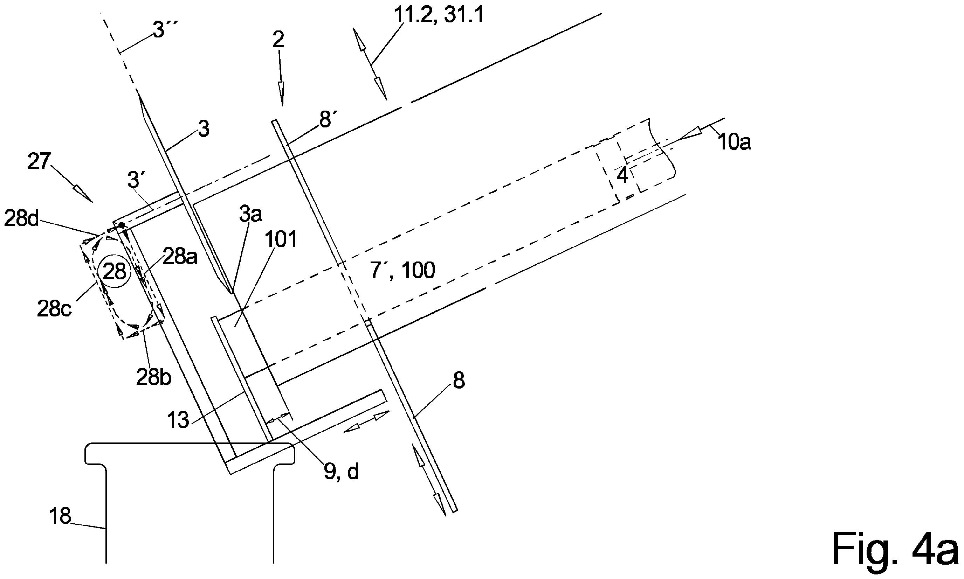

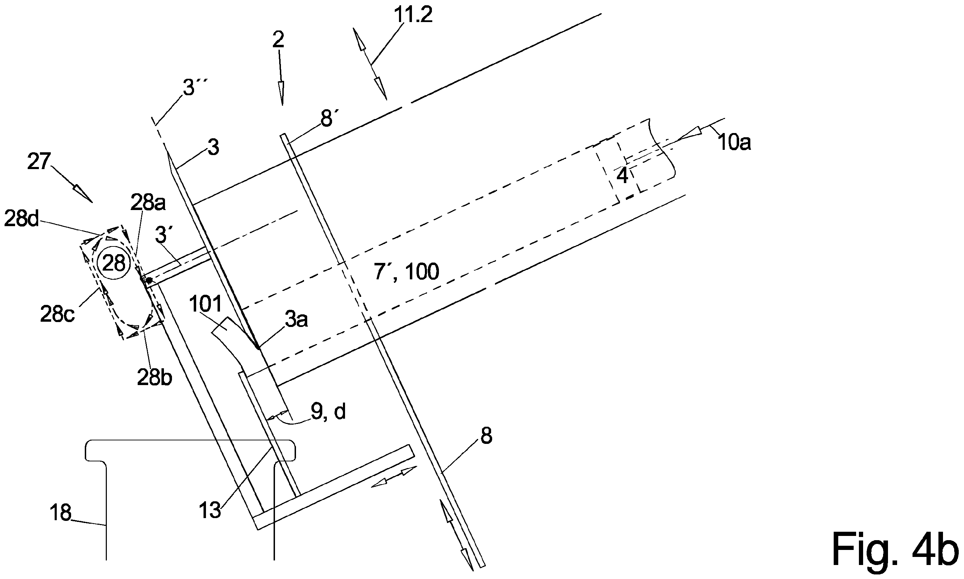

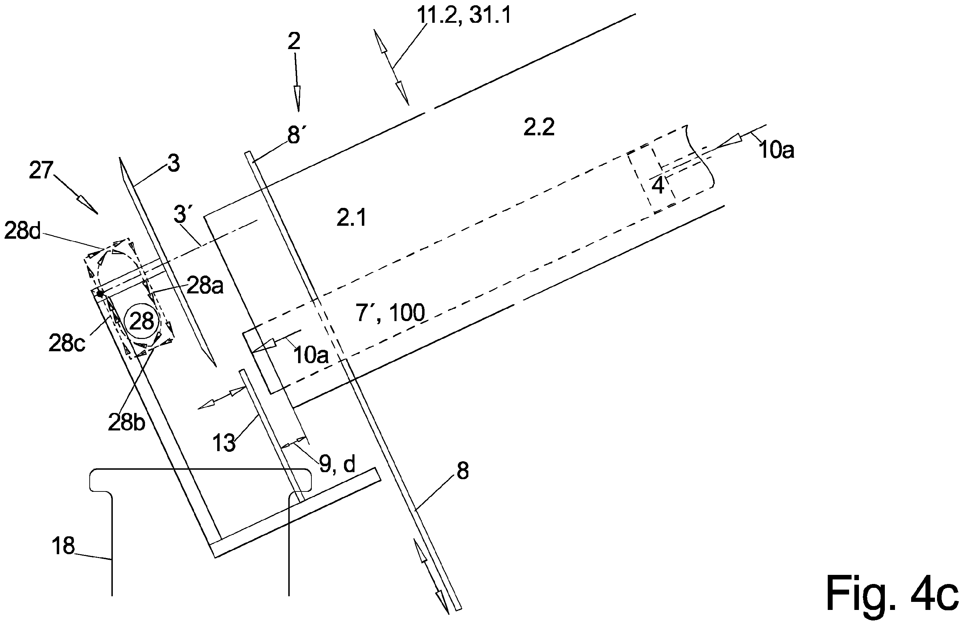

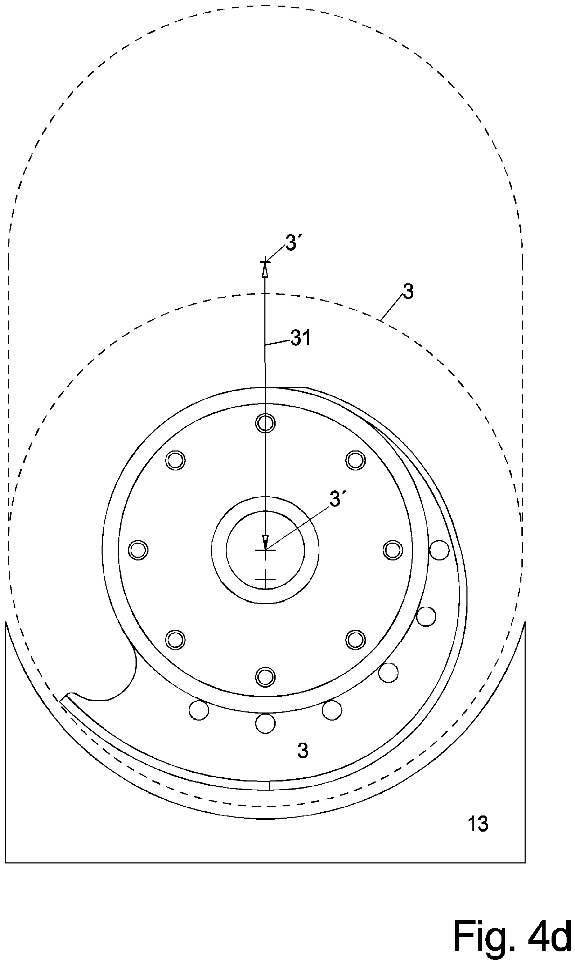

- Fig. **4**a - c:: eine Prinzipdarstellung einer ersten Schneideeinheit in unterschiedlichen Funktionsstellungen,

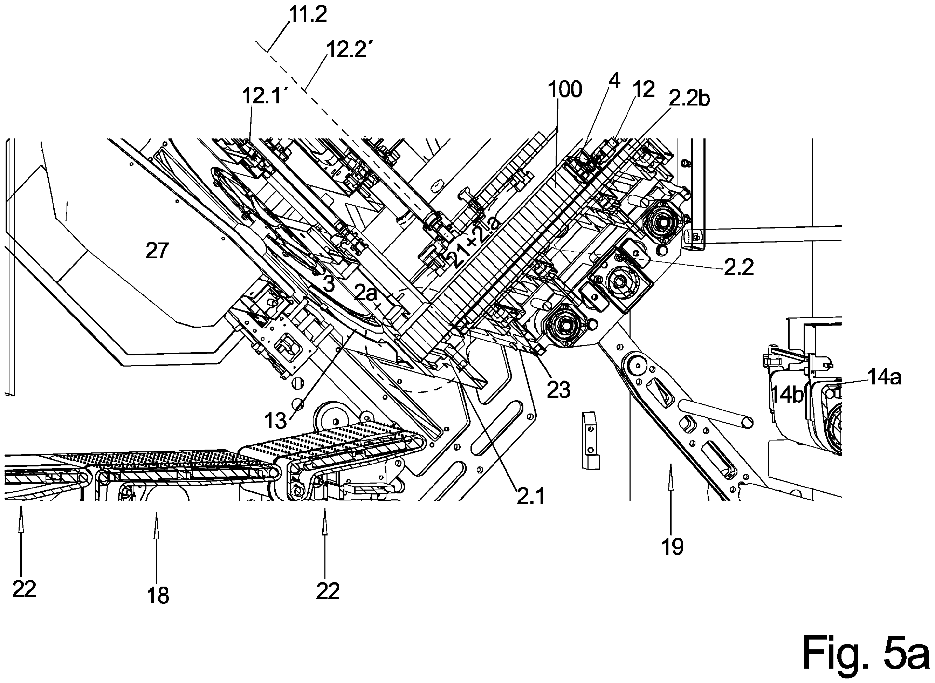

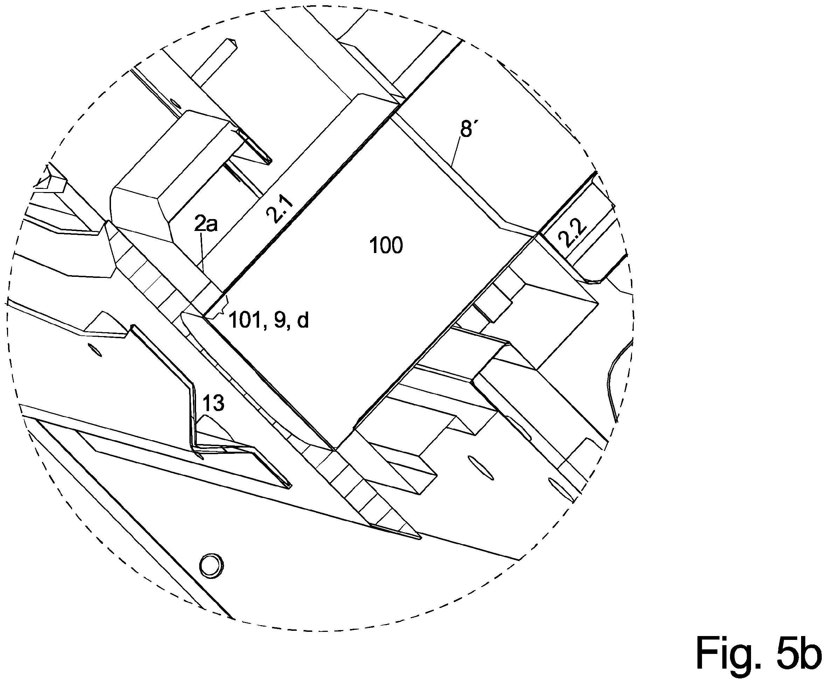

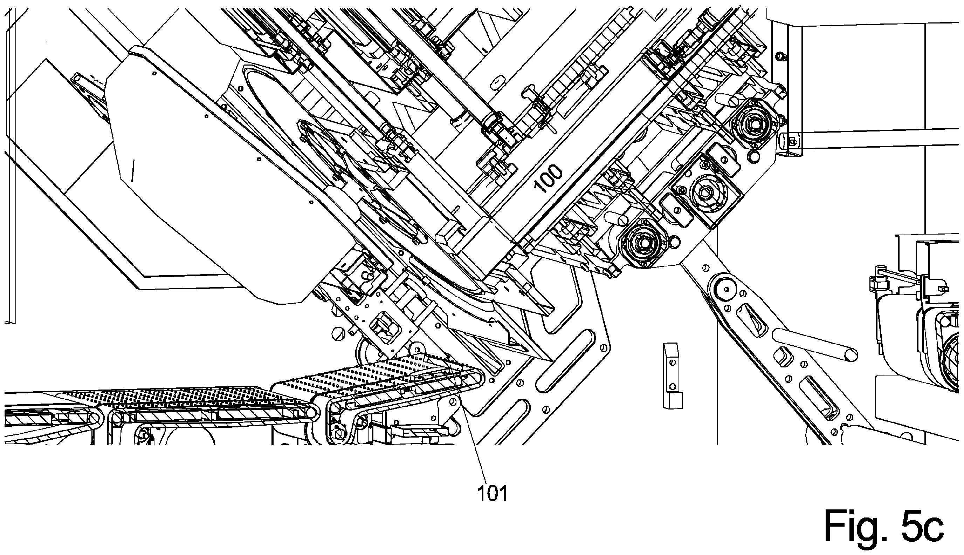

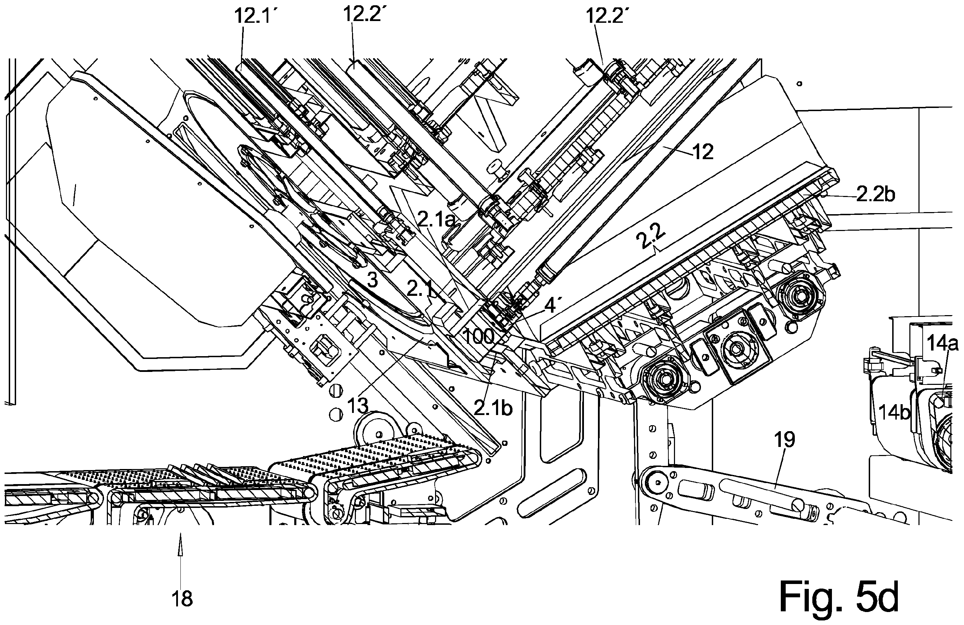

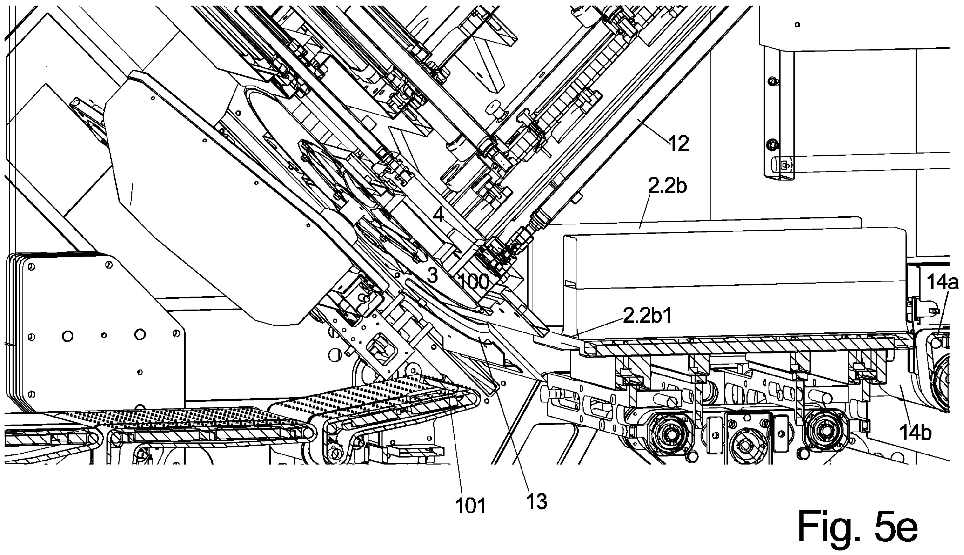

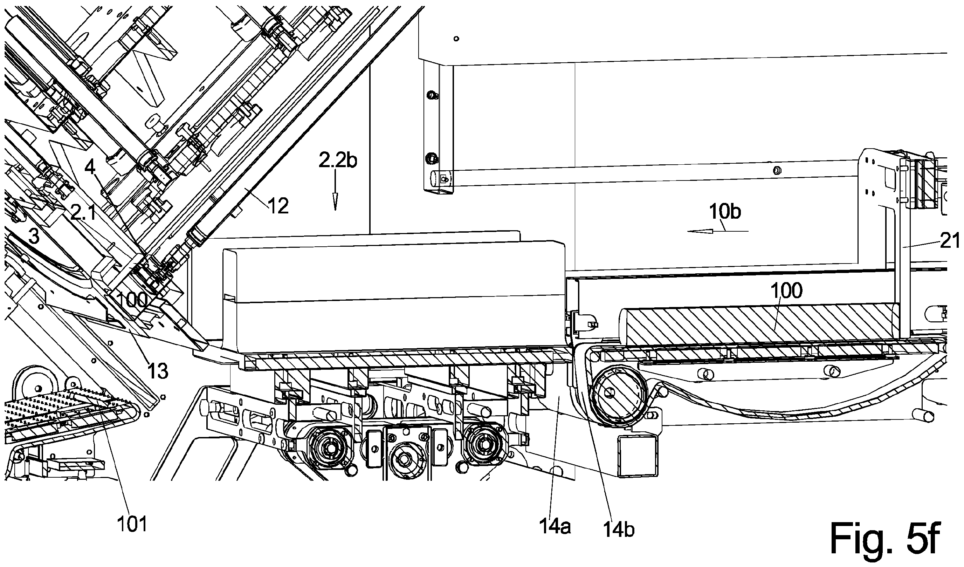

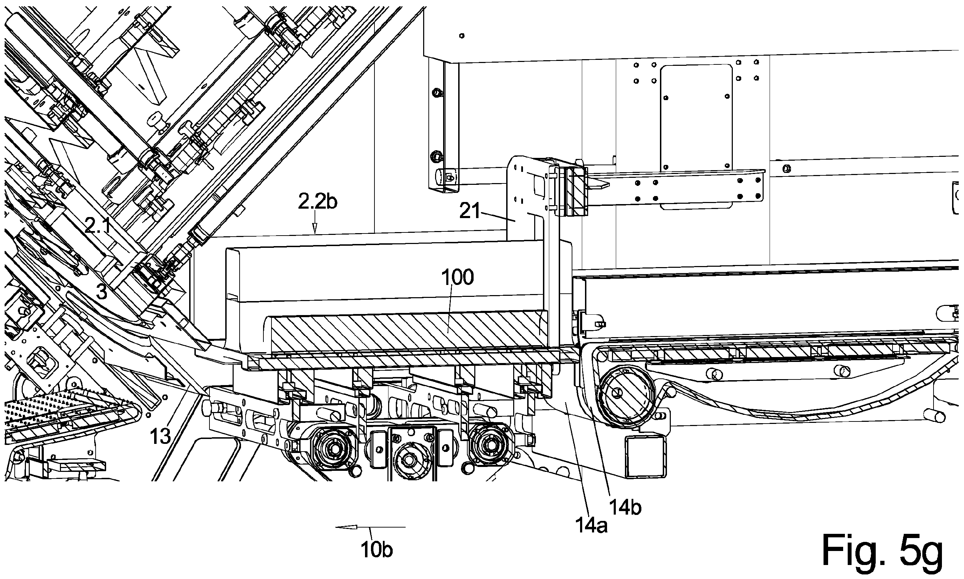

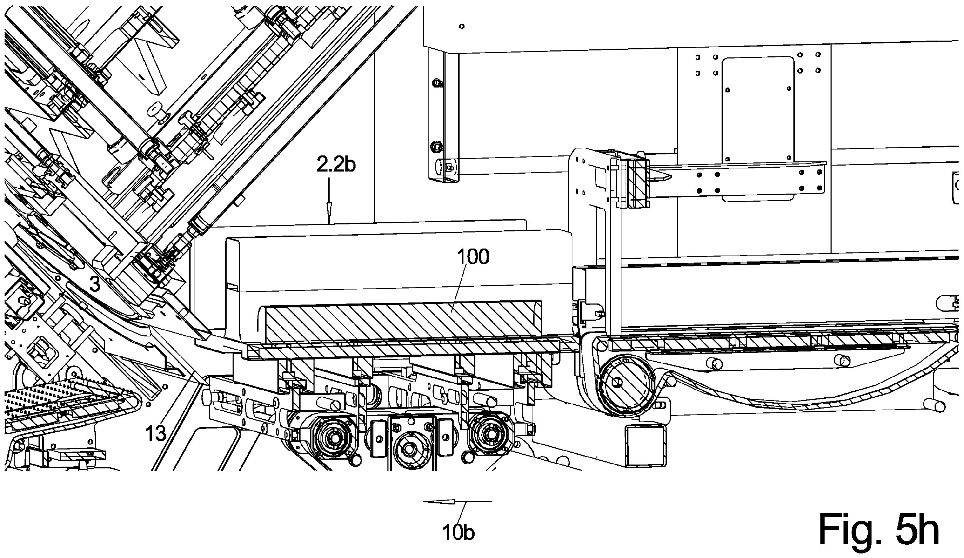

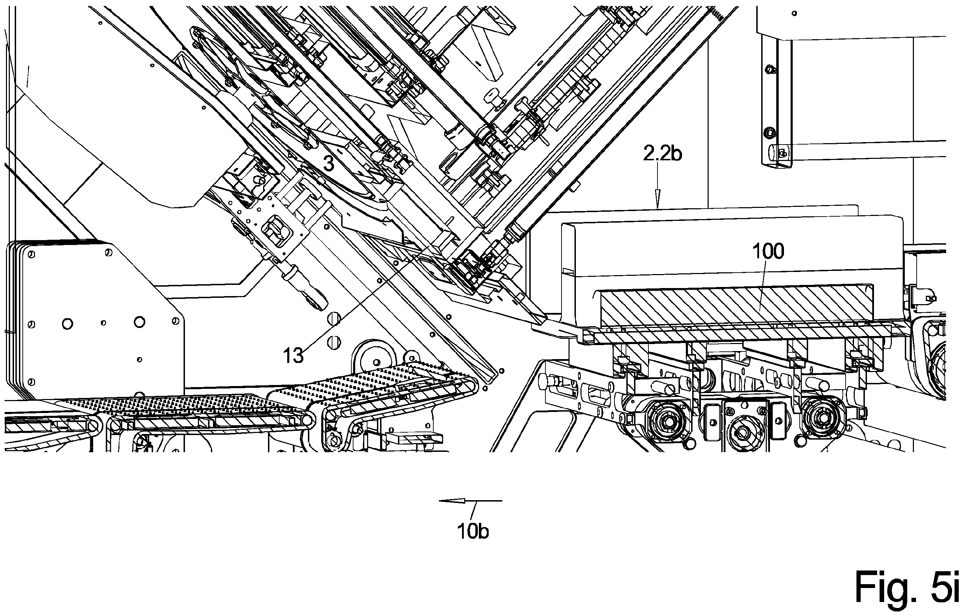

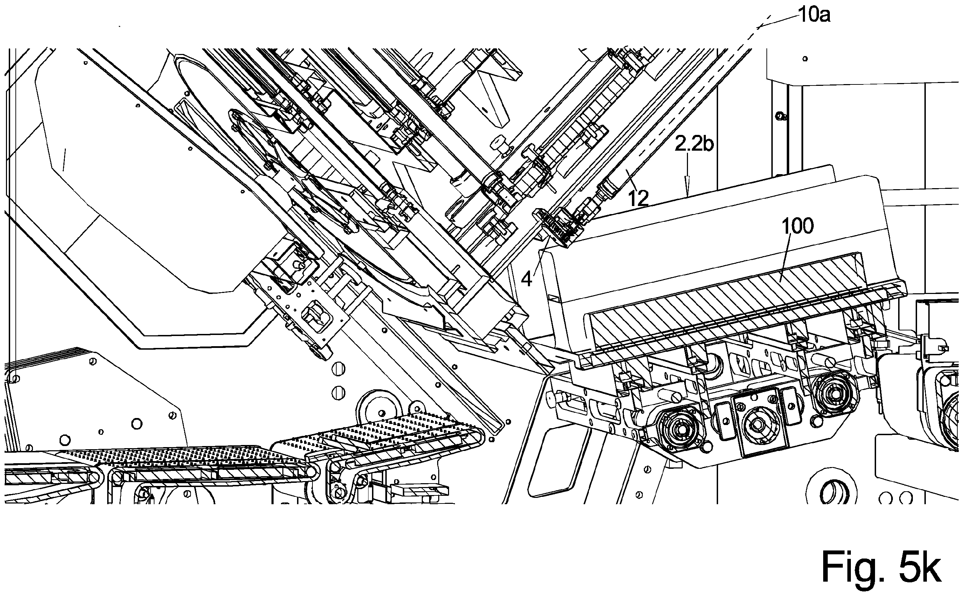

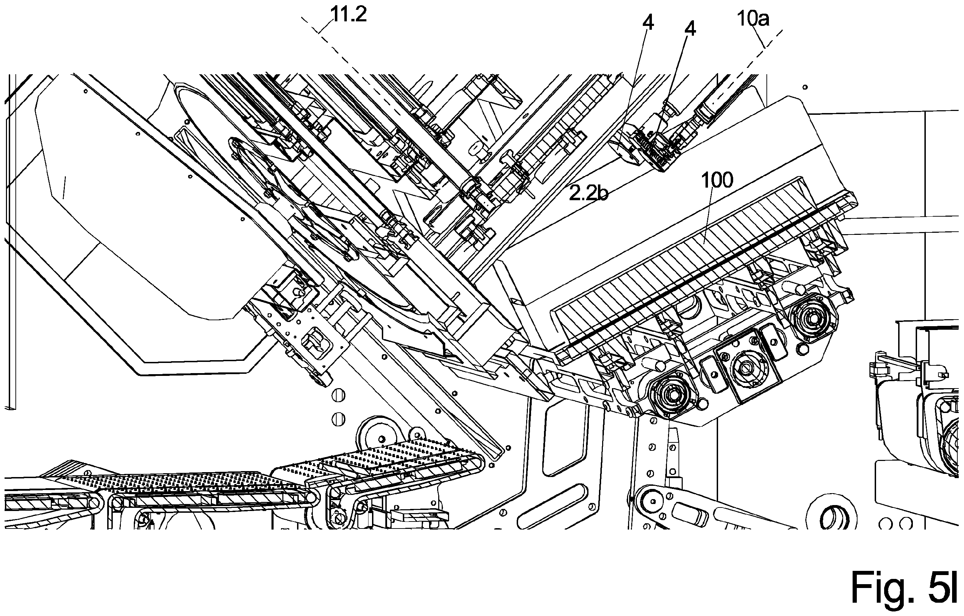

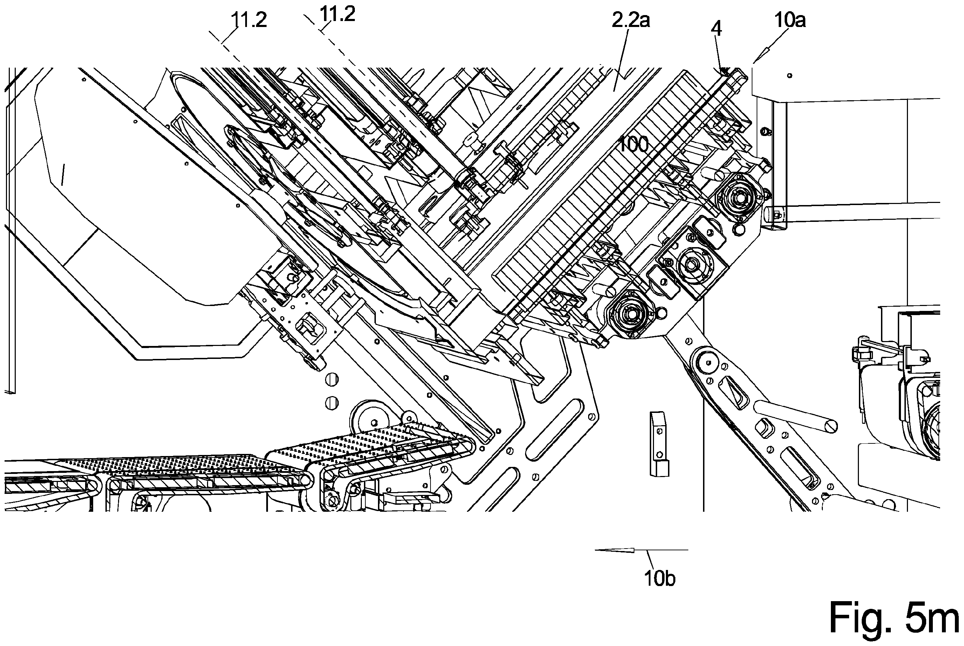

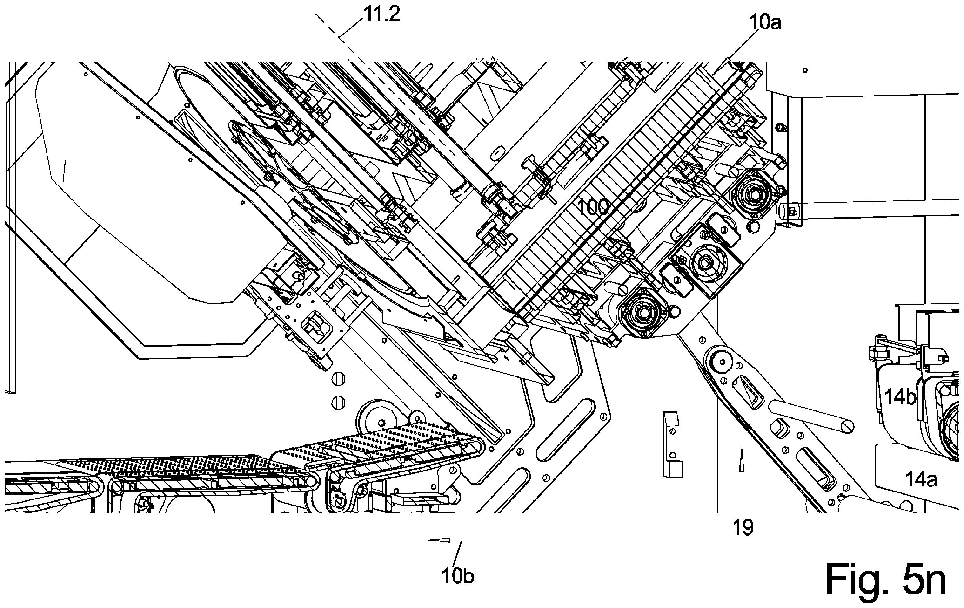

- Fig. **5**a - n:: verschiedene Betriebszustände der ersten Bauform jeweils in einem leicht perspektivischen Längsschnitt,

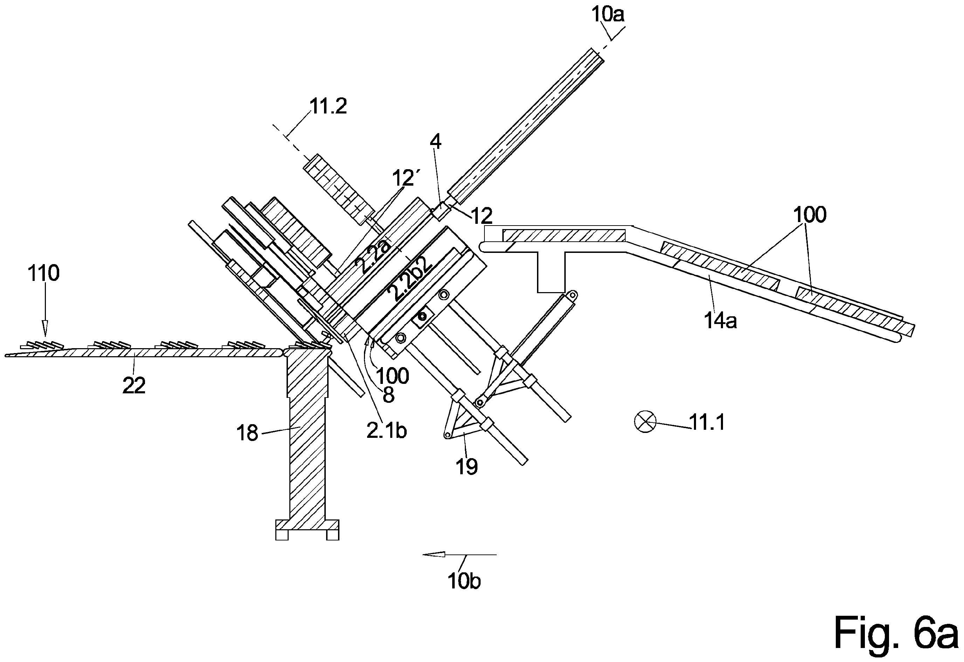

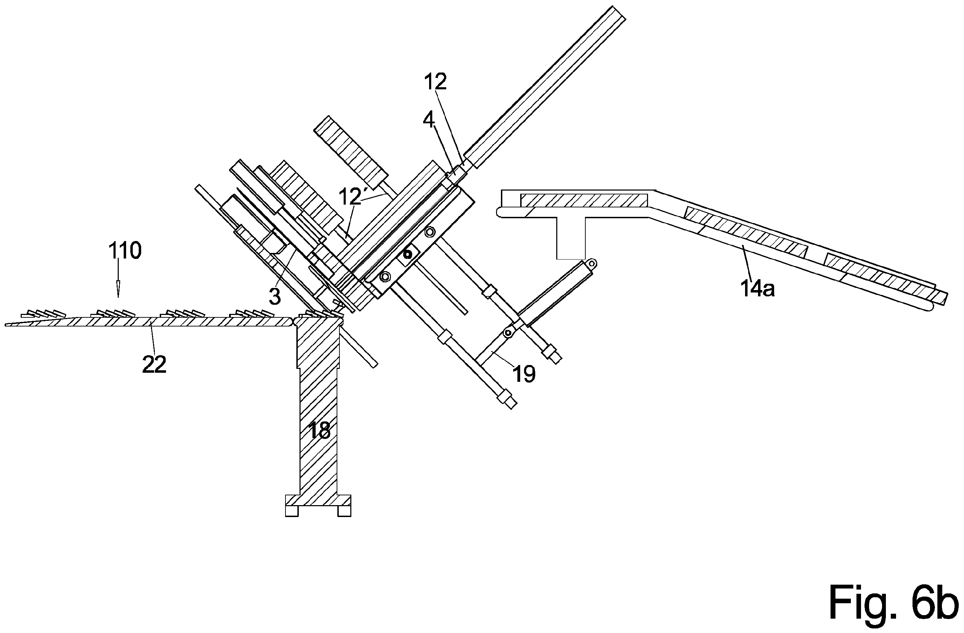

- Fig. **6**a, b:: eine zweite Bauform der Schneidemaschine in Beladestellung und in Aufschneidestellung,

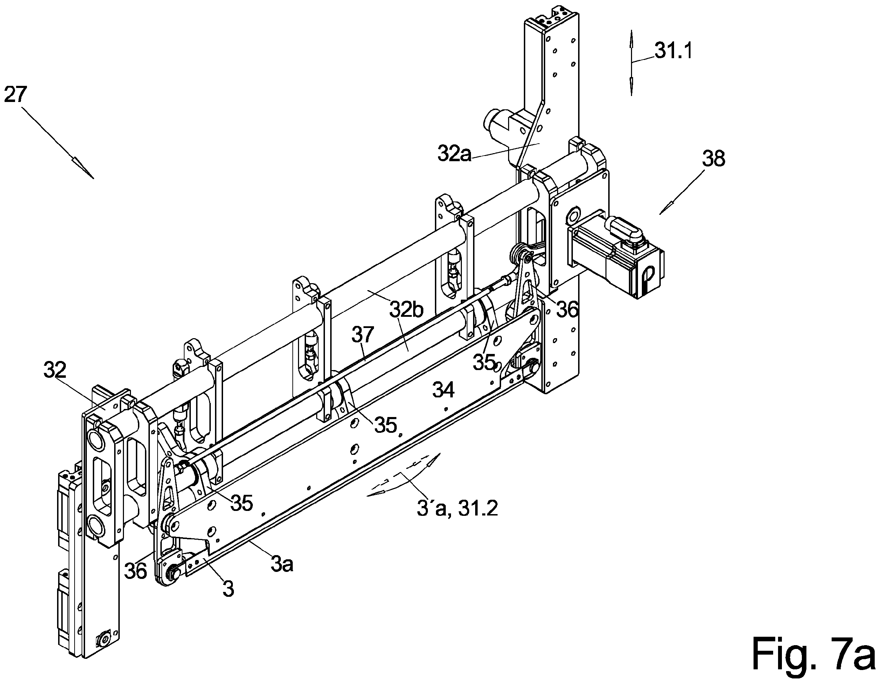

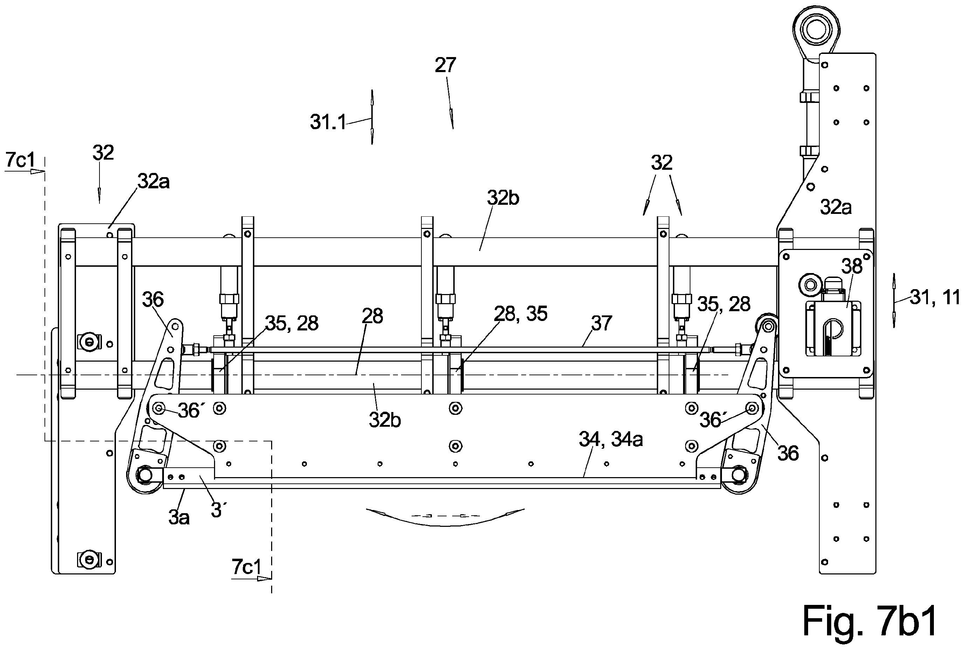

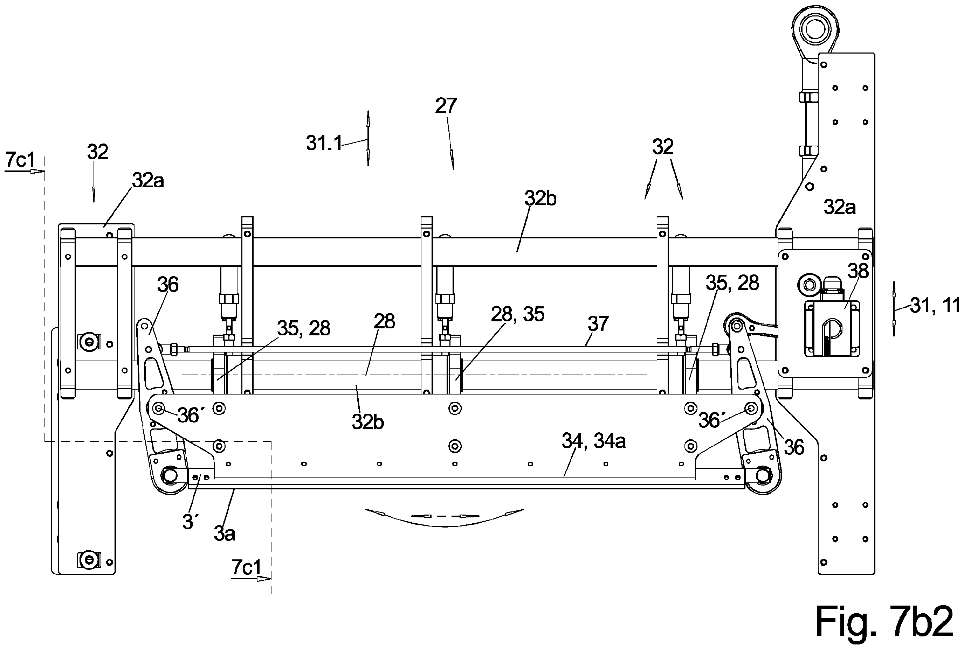

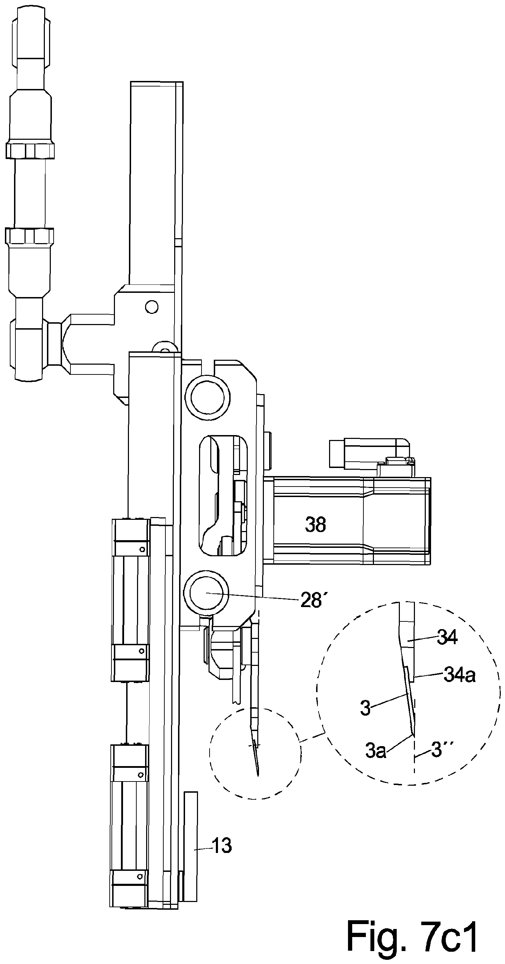

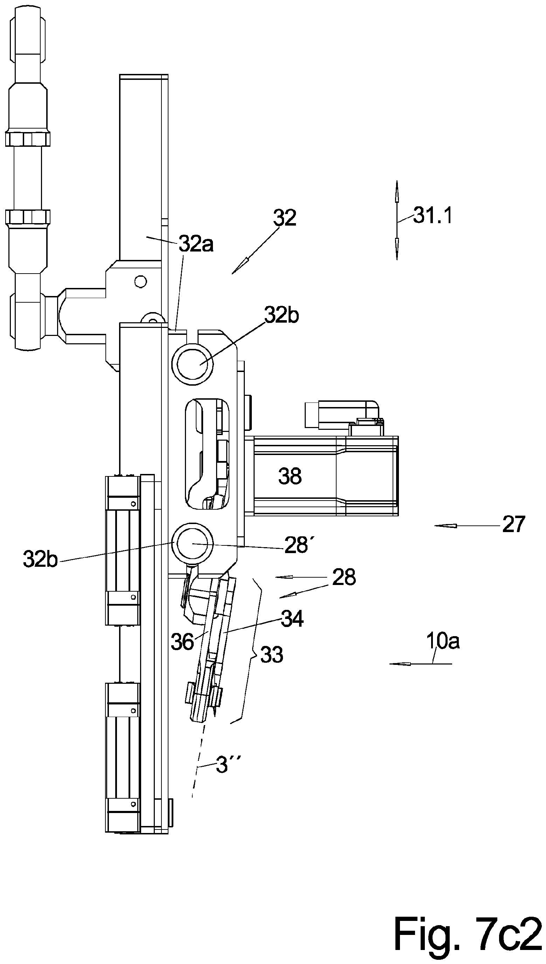

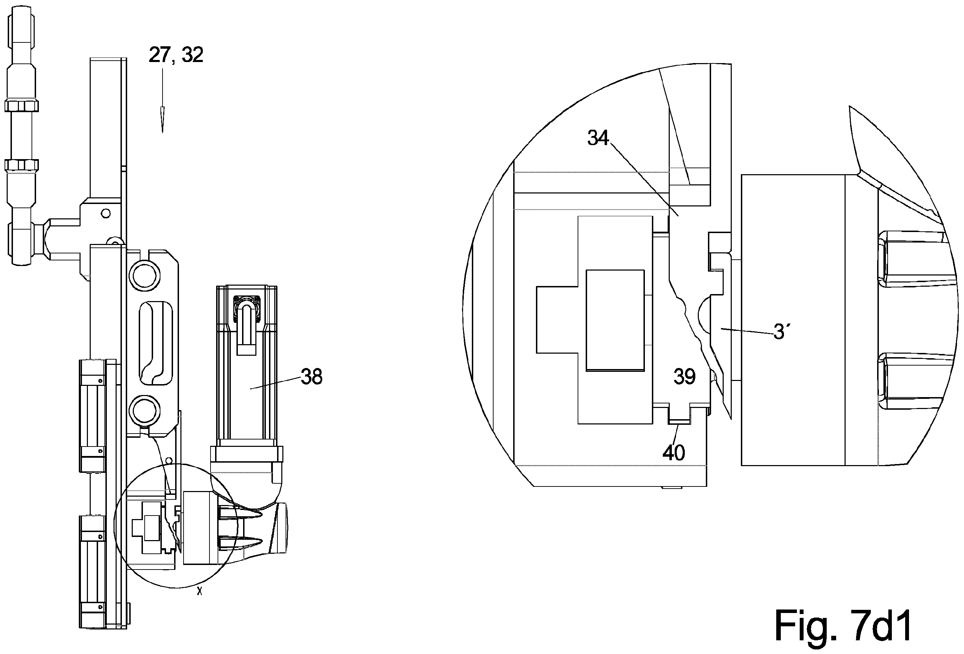

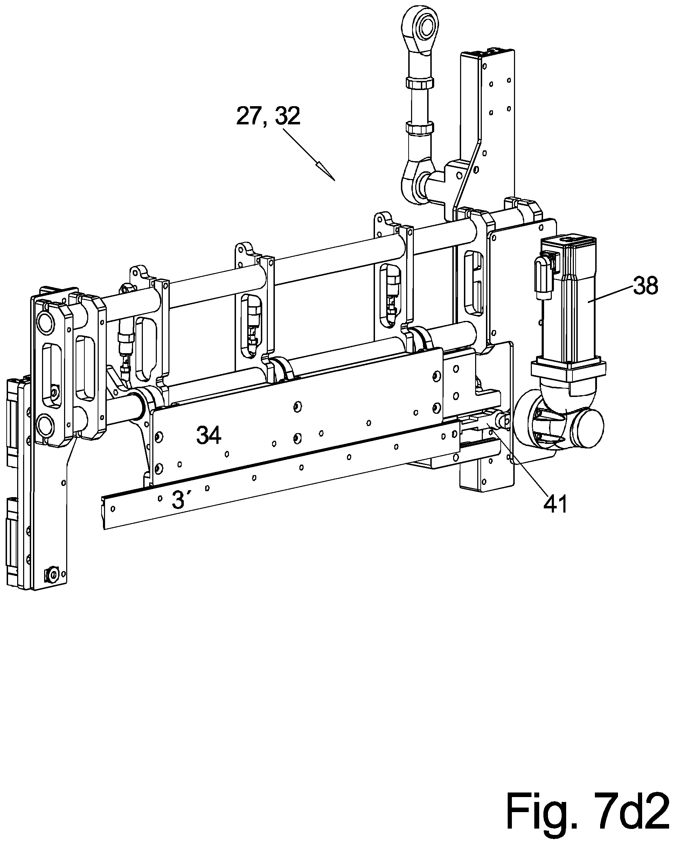

- Fig. **7**a:: eine perspektivische Darstellung einer zweiten Schneideeinheit
- Fig. **7**b**1**, **7**b**2**:: in Frontansicht, der Vorschubrichtung, betrachtet unterschiedliche Funktionsstellungen der Schneideinheit gemäß Figur **7**a,
- Fig. **7**c**1**, **7**c**2**:: die Funktionsstellungen der Schneideinheit gemäß Figur **7**a betrachtet in der Seitenansicht,
- Fig. **7**d**1**, **7**d**2**:: eine perspektivische Darstellung einer dritten, von der zweiten Schneideinheit gemäß Figur **7**a abgewandelten Schneideeinheit,

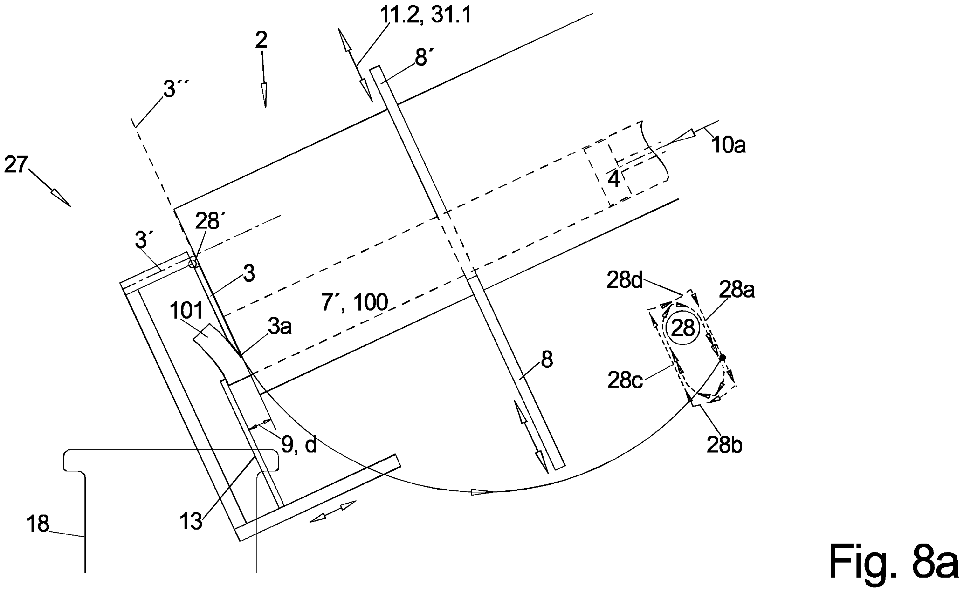

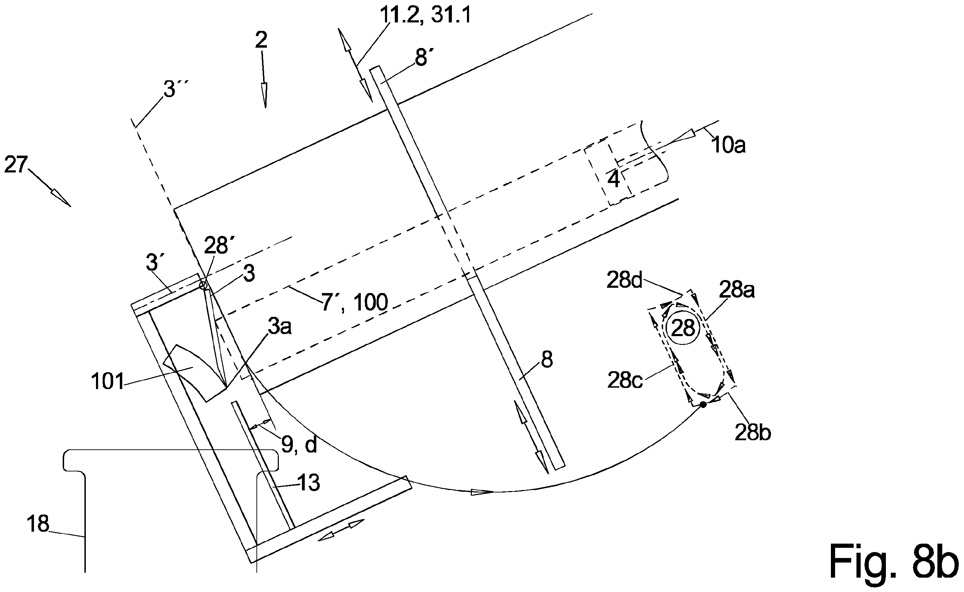

- Fig. **8**a, b:: eine Prinzipdarstellung der zweiten Schneideeinheit in unterschiedlichen Funktionsstellungen.

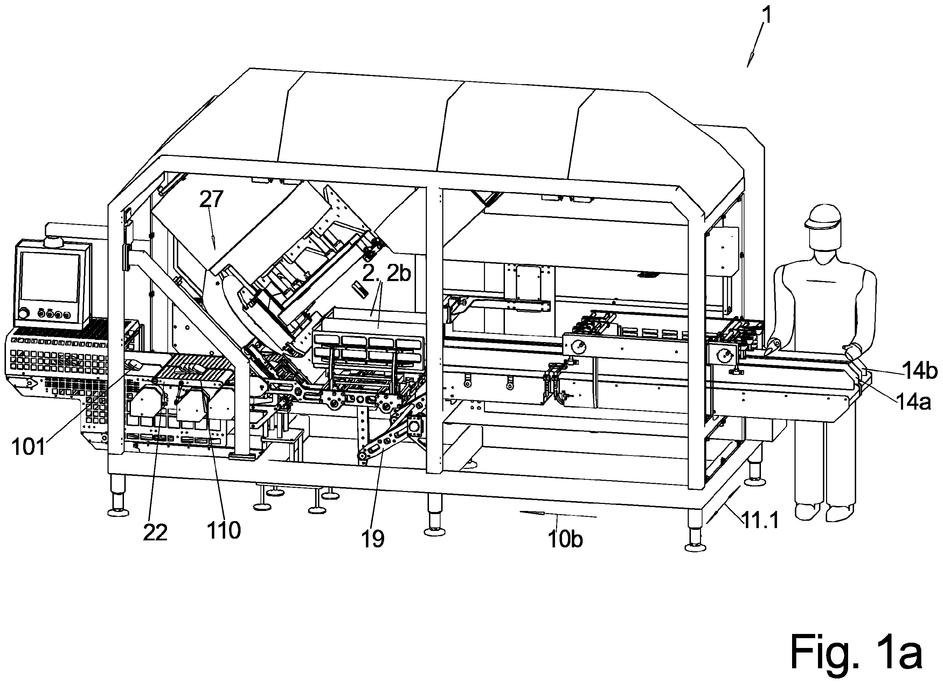

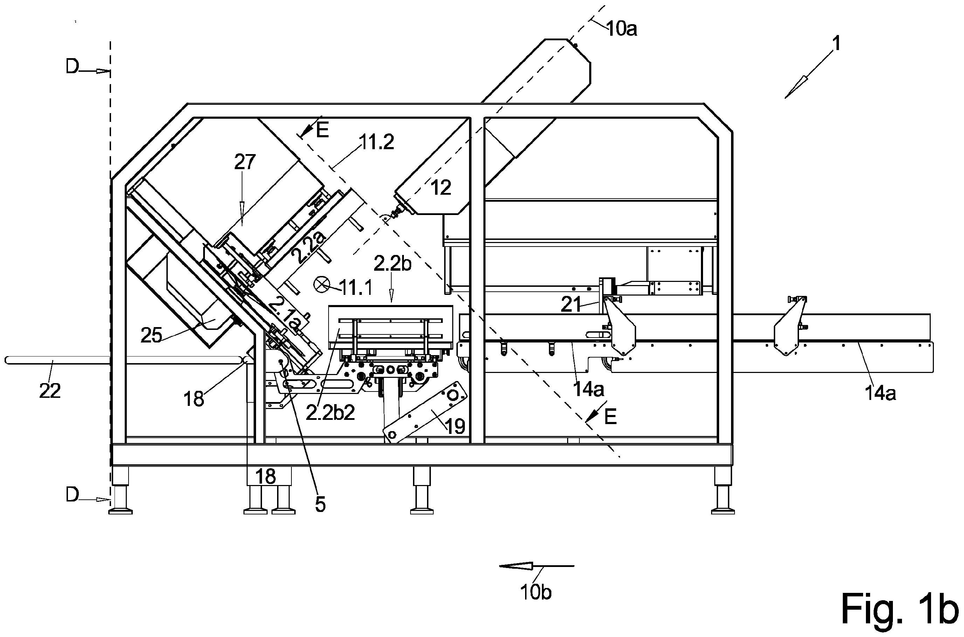

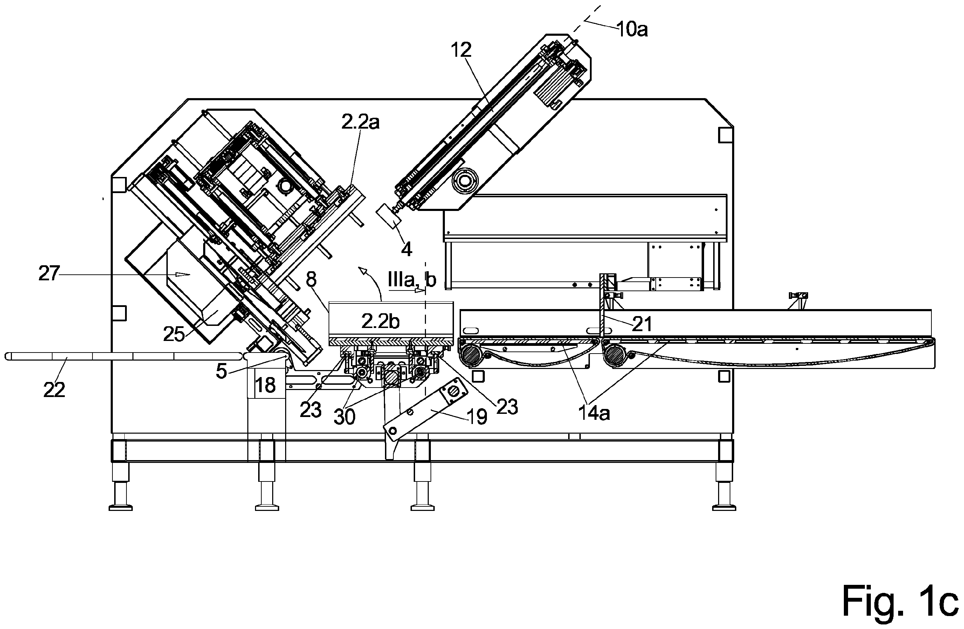

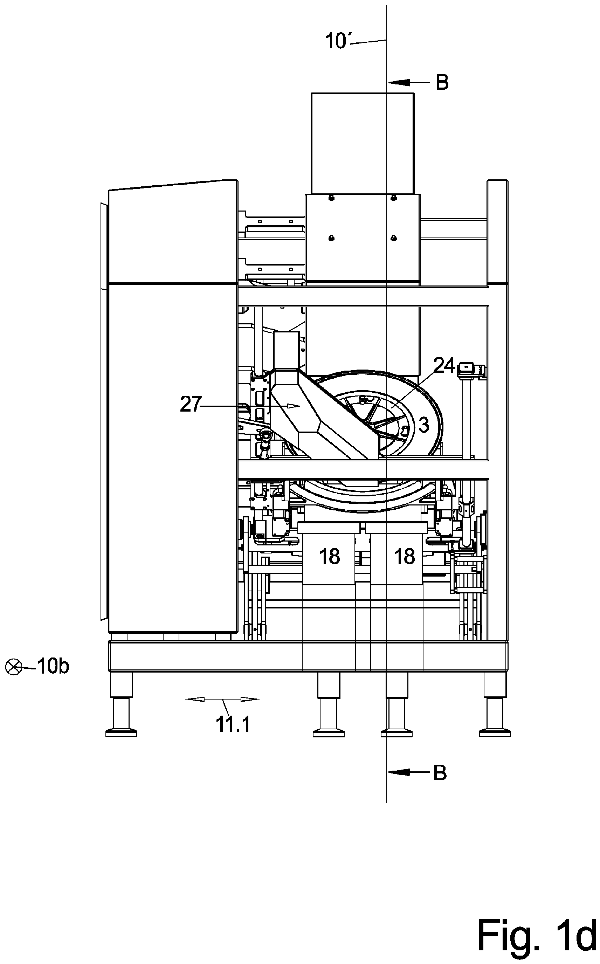

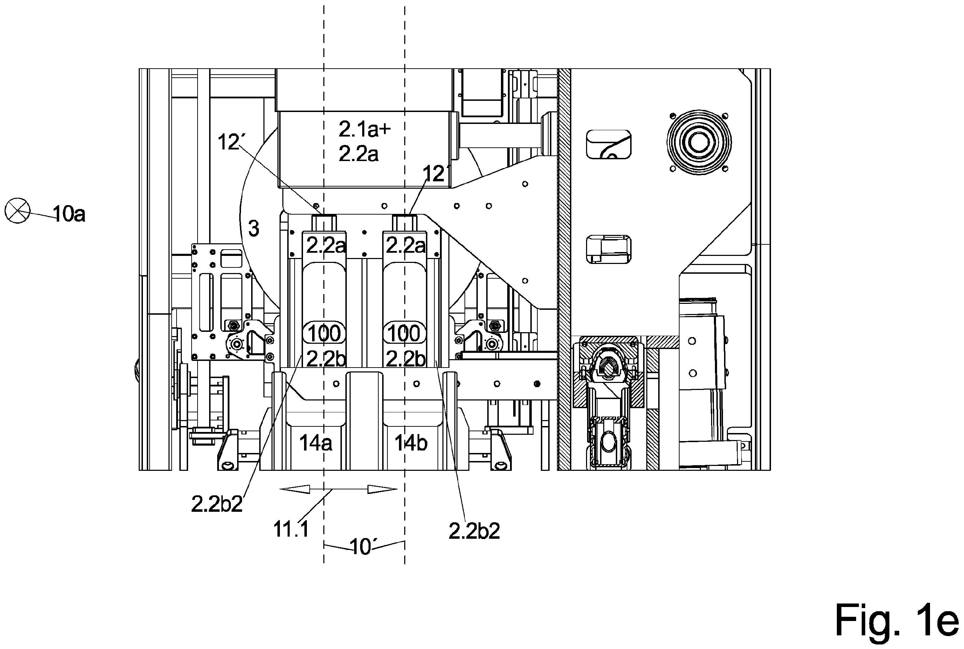

Das Grundprinzip der erfindungsgemäßen Schneidemaschine kann am besten anhand der Figuren **1**a - e, **2**a, b beschrieben werden:
Es werden auf zwei in der ersten Querrichtung **11.1** nebeneinander liegenden Spuren je ein Fleischstrang **100** parallel nebeneinander, im Wesentlichen synchron, verarbeitet, also verpresst und dann in Scheiben **101** aufgeschnitten.

Zu diesem Zweck werden in Längsrichtung **10**b, der Durchlaufrichtung durch die Schneide-Maschine **1,** auf jeweils einem von zwei parallelen, nebeneinander liegenden und separat antreibbaren Zuförderern **14**a, b, wie am besten in Figur **2**c zu erkennen, aufzuschneidende Fleischstränge angeliefert. Die Zuförderer **14**a, b besitzen dabei Seitenwände, um das seitliche Herabfallen der darauf in Längsrichtung **10**b sich erstreckenden, länglichen Fleischstränge **100** zu vermeiden. Statt der beiden separaten Zuförderer **14**a, b nebeneinander kann auch nur ein in der ersten Querrichtung **11.1** durchgehender, einziger, insbesondere von einer Mittelwand in zwei Hälften unterteilter, Zuförderer benutzt werden, jedoch können dann die Fleischstränge **100** auf den beiden Spuren des einzigen Zuförderers **14**a nicht mehr unabhängig voneinander heran gefördert werden. Indem die Mittelwand entfernt war ist, kann die gesamte Breite des zu Förderers **14** h für sehr große Fleischstränge **100** benutzt werden

Die beiden Fleischstränge **100** werden dann jeweils in ein fluchtend in Längsrichtung **10**b vor dem vorderen Ende des jeweiligen Zuförderers **14**a, b angeordnetes, verschwenkbares hinteres U-Teil **2.2**b - wie in Figur **1**a, b, c zu sehen - eingeschoben, dessen in dieser Schwenklage, der Belade-Stellung, sich in Längsrichtung **10**b erstreckender U-förmiger Querschnitt nach oben offen ist.

Da dieses Einschieben nicht allein mit Hilfe der Zuförderer **14** möglich ist, erfolgt dies mit Unterstützung durch einen Einschieber **21,** der in Längsrichtung **10**b beweglich mit jeder seiner zwei nach unten gerichteten Zinken bis jeweils knapp über die Oberseite eines der beiden Zuförderer **14**a, b herab reicht und gegen das hintere Ende des darauf liegenden Fleischstranges **100** drücken und diesen vorwärts schieben kann in das jeweilige U-Teil **2.2**b, entweder bis zu einem dort vorhandenen, aber entfernbaren Anschlag oder besser bis zu einer vorgegebenen in Position des Einschiebers **21.**

Das jeweilige sich in der Längsrichtung **10** - je nach Betriebsstellung die Verpressrichtung **10**a oder die Durchlaufrichtung **10**b durch die Maschine oder eine dazwischen liegende Richtung - erstreckende U-Teil **2.2**b ist Bestandteil eines von zwei nebeneinanderliegenden Formrohren **2,** welche aus in mindestens einer der Querrichtungen **11.1, 11.2** mehreren zueinander bewegbaren Formteilen besteht.

In der Längspressrichtung **10**a, der Vorschubrichtung eines Fleischstranges durch ein Formrohr **2,** besteht das Formrohr **2** aus einem in Vorschubrichtung **10**a vorderen Front-Formrohr **2.1** und einem sich daran nach hinten anschließenden Heck-Formrohr **2.2** (Fig. **2**b).

Das Heck-Formrohr **2.2** kann sogar durch hin- und her bewegen mindestens eines der Formteile zwischen einem umfänglich geschlossenen Zustand und einem umfänglich geöffneten Zustand verändert werden:
Wie die Querschnittsdarstellungen der Figuren **3**a, b - die später näher erläutert werden -der Heck-Formrohre **2.2,** im offenen Zustand und im umfänglich geschlossenen Zustand zeigen, besteht - im geschlossenen Zustand gemäß Figur **3**b, rechts - jedes Heck-Formrohr **2.2** im Wesentlichen aus einem von zwei nebeneinander liegenden, nach oben offenen U-Teilen **2.2**b, die eine gemeinsame Mittelwand besitzen, und zwei genau in die Breite der Querschnitts-Öffnungen gemäß Figur **3**b, rechts passenden und von oben einführbaren Quer-Pressstempeln **2.2**a.

Dieser umfänglich geschlossene Zustand, bei dem die Quer-Pressstempel **2.2**a an dem Fleischstrang **100** nicht nur anliegen, sondern auf diesen auch Druck ausüben - die so genannte zweite Querverpressung, die in der zweiten Querrichtung **11.2** durchgeführt wird - wird für die Heck-Formrohre **2.2** erreicht, indem die beiden hinteren U-Teile **2.2**b gemeinsam aus der in Figur **1**a, b, c dargestellten Belade-Stellung - Figur **1**c zeigt dies im Längsschnitt - in die Aufschneidestellung gemäß der Figuren **2**a, b hoch geschwenkt werden, und dadurch die Quer-Press Stempel **2.2**a in das jeweilige hintere U-Teil **2.2**b eintauchen.

Wie am besten die Seitenansicht der Figur **2**b zeigt, verlaufen die beiden in Blickrichtung der Figur **2**b hintereinander liegenden, parallel verlaufenden Formrohre **2** in ihrem umfänglich geschlossenen Zustand, der Aufschneidestellung, in einer in einer vertikalen Längsebene **10'** liegenden, jedoch zur in der Regel horizontalen Durchlaufrichtung **10**b, der Längsrichtung der Schneidemaschine **1,** von hinten nach vorn schräg nach unten abwärts geneigten Längspressrichtung **10**a.

In dieser umfänglich geschlossenen Aufschneidestellung der Formrohre **2** gemäß Figur **2**a, b kann der in dem jeweiligen Formrohr liegende Fleischstrang **100** in Längspressrichtung **10**a nach vorwärts unten geschoben werden mit Hilfe je eines in den inneren Querschnitt **7'** des jeweiligen, umfänglich geschlossenen Formrohres **2** genau passenden und eintauchenden Längspressstempels **4** - nur in Fig. **1**c dargestellt -, der an dem vorderen Ende einer von zwei parallel verlaufenden Kolbenstangen **12** befestigt ist, die in Längspressrichtung **10**a gesteuert angetrieben werden können, vorzugsweise unabhängig voneinander.

Jeder Fleischstrang **100** wird zum Aufschneiden in Scheiben **101** über das vordere, untere Ende seines Formrohres **2** jeweils hinausgeschoben, bis er mit seinem vorderen stirnseitigen Ende an einer Anschlagplatte **13** (Fig. **2**d, Fig. **4**a, b) anliegt. Sodann kann durch ein Messer **3** (Fig. **4**c, Fig. **7****,** **8**), welches breiter ist als die beiden nebeneinander liegenden Formrohre **2,** durch Herabfahren des rotierenden Messers in der zweiten Querrichtung **11.2** unmittelbar vor dem vorderen Ende der beiden Formrohre **2** jeweils eine Scheibe **101, 102** von jedem der beiden Fleischstränge **100** in den beiden Formrohren **2** abgetrennt werden.

Dabei bestimmt der eingestellte Abstand in Längspressrichtung **10**a zwischen der Anschlagplatte **13** und dem Messer **3** die Dicke der Scheibe **101, 102.**

Die abgetrennten Scheiben **101, 102** fallen auf jeweils eine von zwei nebeneinander angeordneten Wiegestationen **18,** und werden dort entweder einzeln verwogen, oder - wenn die Scheiben **101, 102** zu Portionen **110** zusammengestellt werden sollen - das nach jeder neuen Scheibe erzielte Gewicht der sich aufbauenden und auf der Wiegestation **18** verbleibenden Portion **110.**

Anschließend wird die Scheibe oder die erstellte Portion von der Wiegestation **18,** deren Oberseite als in Durchlaufrichtung **10**b transportierender Förderer aufgebaut ist, an einen sich stromabwärts daran anschließenden Abförderer **22** übergeben und abtransportiert, die vorzugsweise ebenfalls jeweils separat für jede Spur der Schneidemaschine nebeneinander vorhanden sind.

Um die Totzeit zwischen dem Aufschneiden eines ersten Fleischstranges **100** und eines nachfolgend aufzuschneidenden zweiten Fleischstranges **100** zu vermindern, ist jedes Formrohr **2** -wie oben erwähnt - in Längspressrichtung **10**a unterteilt in ein Front-Formrohr **2.1** und ein Heck-Formrohr **2.2.**

Beide bestehen (Figuren **3**a - c) - betrachtet in Längs-Pressrichtung **10**a - aus dem erwähnten, nach oben offenen vorderen bzw. hinteren, U-Teil **2.1**b bzw. **2.2**b und dem darin eintauchenden und in der zweiten Querrichtung **11.2** verpressenden, vorderen bzw. hinteren, Quer-Pressstempel **2.1**a bzw. **2.2**a.

Beim Front-Formrohr **2.1** (Fig. **3**c) bleibt das vordere U-Teil **2.1**b als eines der Front-Formteile **2.1**a, b immer unverändert in seiner Lage, während der vordere Quer-Pressstempel **2.1**a, als ebenfalls eines der Front-Formteile sich relativ dazu in der zweiten Querrichtung **11.2** bewegen kann.

Letzteres gilt auch für das Heck-Formrohr **2.2,** jedoch ist dort zusätzlich - wie die Figuren **1**a, b zeigen - das hintere U-Teil **2.2**b als eines der Heck-Formteile **2.2**a, **2.2**b zusätzlich nach unten von dem hinteren Quer-Pressstempel **2.2**a soweit entfernbar, dass die beiden Teile in der zweiten Querrichtung **11.2** vollständig außer Eingriff geraten, was in aller Regel bei dem Front-Formrohr **2.1** nicht möglich ist.

Bei der ersten Bauform gemäß der Figuren **1** - **5** wird zu diesem Zweck das hintere U-Teil **2.2**b um eine in der ersten Querrichtung **11.1** verlaufende Heck-Schwenkachse **5** nach unten geschwenkt, sodass sich die Heck-Formrohre **2.2** nun in der umfänglich geöffneten Beladestellung befinden, wie eingangs beschrieben.

Zwischen dem Heck-Formrohr **2.2** und dem Front-Formrohr **2.1** ist eine in der lotrechten Ebene zur Längs-Pressrichtung **10**a verfahrbare Zwischenplatte **8** angeordnet, die am besten in Figur **2**d zu erkennen ist, und vorzugsweise am hinteren Ende des vorderen U-Teil **2.1** angeordnet ist.

Sobald die in den geschlossenen Formrohren **2** in der Aufschneidestellung befindlichen Fleischstränge **100** weitgehend aufgeschnitten sind und sich die verbliebenen hinteren Enden der Fleischstrange **100** nur noch im Längsbereich der Front-Formrohres **2.1** befinden und darin von den Längs-Pressstempeln **4** weiter vorwärts geschoben und weiter aufgeschnitten werden, können bereits die meist über die gemeinsame Mittelwand miteinander verbundenen hinteren U-Teile **2.2**b der Heck-Formrohre **2.2** in ihrer Breite wieder vergrößert und in die Beladestellung herabgeklappt werden. Von den Zuförderern **14**a, b aus können nun mit Hilfe des Einschiebers **21** die nächsten beiden aufzuschneidenden Fleischstränge **100** in die in eine fluchtende Lage zu den Zuförderern **14**a, b herabgeklappten hinteren U-Teile **2.2**b eingeschoben werden, um die Nachladezeit beim Wechsel auf die nächsten Fleischstränge **100** beim Aufschneiden zu verringern.

Das Ziel, Scheiben **101,102** mit einem vorgegebenen Zielgewicht von einem im Querschnitt unregelmäßigen Fleischstrang **100** abzuschneiden, kann nur erreicht werden, wenn man das Volumen dieser Fleischscheibe gezielt steuern kann:
Hierfür wird zum einen die Scheibendicke d definiert eingestellt durch Einstellung des Abstandes **9** der Anschlagplatte **13** zu dem Messer **3** während des Abtrennens einer Scheibe **101.**

Die Seitenansicht der Figuren **4**a, b, c einer ersten Bauform einer Schneideinheit **27** zeigt, - insbesondere in Figur **4**a - dass hierfür die Anschlagplatte **13** in axialer Richtung **10**a und/oder in der ersten Querrichtung verstellbar zu dem Messer **3** und der Messerebene **3"** , die definiert ist durch die zum Schneidgut hin gerichtete Kontaktfläche des Messers **3,** in der bei einem nur auf der davon abgewandten Seite angeschliffenen Messer **3** auch die Schneidkante **3**a des Messers **3** liegt.

Wenn das Messer **3** zum Abschneiden einer Scheibe **101** von seiner Ausgangsstellung gemäß Figur **4**a in der ersten Messer-Querrichtung **31.1,** hier der zweiten Querrichtung **11.2** der Maschine in einer Schneidbewegung **28**a nach schräg unten über den freien inneren Querschnitt **7'** der Formrohre **2** hinweg verfahren wird, bewegt sich die Anschlagplatte **13,** die mit dem Messer **3** in einer Schneideinheit **27** zusammengefasst ist, zusammen mit diesem in dieser ersten Messer-Querrichtung **31.1,** hier der zweiten Querrichtung **11.2** mit, damit durch den Spalt dazwischen die zunehmend abgetrennte Scheibe **101** austreten kann gemäß Figur **4**b und nach vollständigem Abtrennen herab fällt auf die Wiegestation **18** oder einen stattdessen dort vorhandenen Abförderer **22.**

Zur weiteren Reduzierung der Nachladezeit hebt das Messer **3** zusätzlich nach dem Abtrennen je einer Scheibe **101,** also Überfahren des inneren Querschnittes **7'** des mindestens einen Formrohres **2,** in Vorschubrichtung **10**a in einer Abhebebewegung **28**b von der vorderen Stirnfläche des Front-Formrohres **2.1,** an dem es sich zum Abtrennen der Scheiben **101** kontaktierend oder in sehr engem Abstand entlang bewegt hat, ab und beginnt anschließend oder gleichzeitig mit dieser Abhebebewegung **28**b seine Rückfahrbewegung **28**c - deren Ende hin Figur **4**c dargestellt ist - in der zweiten Querrichtung **11.2** entgegen der Schneidbewegung **28**a.

Anschließend erfolgt durch eine Rückstellbewegung **28**d entgegen der Vorschubrichtung **10**a die Rückkehr des Messers **3** zur Ausgangsstellung des Abtrennvorganges, wie in den Figuren **4**a, b, c anhand eines an der Messerachse **3'** eingezeichneten Orientierungspunktes leicht erkennbar.

In der ersten Querrichtung **11.1** betrachtet, vollzieht somit das Messer **3** - bewirkt durch eine angedeutete Abhebevorrichtung **28** - eine Umlauf-Bewegung in Form eines Rechteckes oder einer Linsenform.

Die Anschlagplatte **13** vollzieht jedoch weder die axiale Abhebebewegung **28**b noch die Rückstellbewegung **28**d des Messers **3** mit, sondern lediglich dessen Schneidbewegung **28**a und Rückfahrbewegung **28**c, bleibt also während des Abtrennvorganges einer Scheibe immer in der gleichen axialen Position. Lediglich zwischen den Abtrennvorgängen wird gelegentlich die axiale Position der Schneidplatte **13** zum Verändern der Dicke der herzustellenden Scheiben **101** verändert werden.

Die Schneideinheit **27** ist also so ausgebildet, dass während des Schneidvorganges die Anschlagplatte **13** lediglich in der zweiten Querrichtung **11.2** fest mit dem Messer **3** gekoppelt ist.

Der Abstand in dieser zweiten Querrichtung **11.2** zwischen der Messerachse **3'** und der Anschlagplatte **13** ist ebenfalls einstellbar, da der in Vorschubrichtung **10**a betrachtete Spalt zwischen dem Flugkreis **3*** und der analog konkaven, dem Messer **3** zugewandten, Vorderkante der Anschlagplatte **13** - wie in Figur **4**d ersichtlich - vorzugsweise zusätzlich an der Schneideinheit **27** einstellbar sein soll, abhängig von der Dicke der herzustellenden Scheiben **101.**

Durch diese Abhebebewegung **28**b unmittelbar nach Abtrennen einer Scheibe oder eines Paares von Scheiben kann das Vorwärtsschieben der Fleischstränge **100** bereits beginnen, selbst wenn - in Vorschubrichtung **10**a betrachtet - in der zweiten Querrichtung **11.2** das Messer **3** noch nicht vollständig den freien inneren Querschnitt **7'** der Formrohre **2** verlassen hat.

Zusätzlich zur Scheibendicke muss für das Erzielen eines bestimmten Soll-Gewichts und damit Soll-Volumens der Scheiben **101** auch deren Fläche, also quer zur Dicke, bekannt und steuerbar sein. Diesem Zweck dient die Verpressung des elastischen Fleischstranges **100** in einem Formrohr **2** vor dem Aufschneiden des Fleischstranges **100** zu einem definierten Querschnitt:
Wenn das Formrohr **2,** welches sowohl umfänglich von den Formrohr-Teilen als auch in Längspressrichtung **10**a durch die Zwischenplatte **8** einerseits als auch den Längs-Pressstempel **4** andererseits begrenzt einen definierten inneren Freiraum **7** aufweist, und dieser vollständig von dem Fleischstrang **100** ausgefüllt wird, ist der Querschnitt des Fleischstranges **100** identisch mit dem inneren freien Querschnitt **7'** des Formrohres **2,** und damit die Fläche der abzutrennenden Scheibe **101,102** und auch das Volumen und damit das Gewicht der abgetrennten Scheibe, sofern die Dicke bekannt ist und/oder gesteuert werden kann, auch wenn sich die Scheibe nach dem Abtrennen hinsichtlich ihrer Kontur wieder rückverformt.

Damit ein vorhandener innerer definierter Freiraum **7** im Formrohr **2** vollständig von dem elastischen - im unverpressten Zustand ungleichmäßig geformten - Fleischstrang **100** ausgefüllt wird, muss dieser in dem Formrohr **2** verpresst werden, damit möglichst keine nicht ausgefüllten Hohlräume im Formrohr **2** verbleiben.

Zu diesem Zweck wird vorliegend der Fleischstrang **100** sowohl in beiden Querrichtungen **11.1, 11.2** als auch in Längspressrichtung **10**a verpresst.

Gemäß Figur **3**a und **3**b wird der Fleischstrang **100** zunächst in das gemäß Figur **1**a, b, c in die Beladestellung herabgeklappte hintere U-Teil **2.2**b des Heck-Formteiles **2.2,** wie eingangs beschrieben mittels des Einschiebers **21** in Durchlaufrichtung **10**b eingeschoben. Zu diesem Zweck muss der Innenraum des hinteren U-Teiles **2. 2**b eine größere Breite besitzen als die größte auftretende Breite eines noch unverformten Fleischstranges **100.**

Die hinteren beiden U-Teile **2.2**b besitzen eine gemeinsame Mittelwand, die als dem anderen Heck-Formrohr **2.2** zugewandte fixe Seitenwand dient, die einstückig zusammen mit dem jeweiligen Boden des Heck-Formteiles **2.2**b als Winkelteil **2.2**b**1** ausgebildet ist. Die beiden Winkelteile **2.2**b**1** bilden durch einstückige Ausführung für beide Heck-Formrohre **2.2** gemeinsam ein im Querschnitt etwa umgekehrt T-förmiges T-Teil.

Der jeweils verbleibende innere freie Querschnitt **7'** ist etwa rechteckig mit abgerundeten Ecken, damit sich der elastische Fleischstrang **100** auch bis in die Ecken hinein gut anlegen kann, was umso besser möglich ist, je stärker die Ecken gerundet sind.

Zu diesem Zweck sind die Innen-Ecken der Querschnitte der U-Teile **2.2**b gerundet und die Quer-Pressstempel **2.2**a besitzen an ihren Längskanten der freien Stirnfläche einen nach vorn vorstehenden, etwa dreieckigen Fortsatz mit kreisbogenförmig konkaver, zum inneren freien Querschnitt **7'** hin weisenden, Hypotenuse.

Die bei jedem Formrohr **2** äußere Seitenwand ist in der ersten Querrichtung **11.1** beweglich zum Winkelteil oder T-Teil **2.2**b**1** als Quer-Presswand **2.2**b**2** ausgebildet und mit seiner unteren Schmalseite dicht entlang der Oberseite des horizontalen Schenkels des jeweiligen Winkelteiles **2.2**b**1** gegen die Mittelwand hin oder von dieser weg verfahrbar.

Zum Einfahren eines neuen Fleischstranges 100 ist die Quer-Presswand 2.2b2 auf maximalen Abstand zur Mittelwand nach außen gefahren, wobei sie immer noch auf der Oberseite des Winkelteiles 2.2b1 aufsitzt (Fig. 3a).

Danach wird die Quer-Presswand 2.2b2 Richtung Mittelwand verfahren (Fig. 3b, links) bis auf eine definierte End-Breite des Innenraumes des U-Teiles 2.2b (Fig. 3b, rechts). Dadurch erfährt der darin liegende Fleischstrang 100 unter Umständen eine erste Quer-Verpressung auf eine definierte Breite in der ersten Querrichtung **11.1.**

Das nach Innen fahren der Quer-Presswände **2.2**b**2** auf eine definierte End-Breite des U-Teiles **2.2**b ist notwendig, da beim anschließenden Hochklappen der hinteren U-Teile **2.2**b, die immer in der Schrägstellung zur Durchlaufrichtung **10** b verbleibenden hinteren Querpressstempel **2.2**a eine definierte Breite besitzen und damit beim Eintauchen in die U-Teile **2.2**b - was die zweite Quer- Verpressung darstellt, vor allem wenn der oder die beiden Quer Pressstempel **2.2**a nach dem Eintauchen zusätzlich gegen die U-Teile **2.2**b vorwärts gefahren werden - deren Oberseite verschließen sollen.

Das Hochklappen der hinteren U-Teile **2.2**b - was hier wegen des einstückigen T-Teiles nur für beide Formrohre **2** gemeinsam möglich ist, bei getrennt für jedes Formrohr **2** ausgebildeten hinteren U-Teilen **2.2**b und Winkel-Teilen **2. 2**b**1** jedoch auch getrennt und unabhängig voneinander möglich wäre - mit dem darin jeweils eingelegten neuen Fleischstrang **100** ist natürlich erst dann möglich, nachdem der zuvor aufgeschnittene Fleischstrang **100** vollständig aufgeschnitten ist und der Längspressstempel **4** soweit entgegen der Längs-Pressrichtung **10**a zurückgezogen ist, dass er sich beim Hochklappen des im jeweiligen U-Teil **2.2**b befindlichen Fleischstranges **100** hinter dessen hinterem Ende befindet.

Vorzugsweise wird die Position dieses hinteren Endes ermittelt, indem die Endposition des Einschiebers **21** - der dann jeweils separat für die beiden Spuren vorhanden sein und betätigt was sein muss - zum jeweiligen U-Teil **2.2**b am Ende des Einschiebevorganges des neuen Fleischstranges **100** ermittelt und an die Steuerung gemeldet wird, sodass der Längspressstempel **4** nur bis knapp hinter diese Position zurückgezogen werden muss, um Totzeiten weiter zu reduzieren.

Durch Einfahren des hinteren Quer-Pressstempels **2.2**a in das hintere U-Teil **2.2**b bis auf eine fixe, vorgegebene Endposition, damit der freie Querschnitt der Fläche des eingesetzten Längs-Pressstempels **4** entspricht, ist - zusammen mit der Soll-Breite - die Fläche des freien inneren Querschnittes **7'** des jeweiligen Formrohres **2** und damit der Querschnitt des Fleischstranges **100** im verpressten Zustand bekannt, sodass Scheiben **101, 102** eines definiert gesteuerten Volumens abgetrennt werden können.

Der Längs-Pressstempels **4** kann zu diesem Zweck abhängig von der Dicke der zu verarbeitenden Fleischstränge **100** leicht an der Kolbenstange **12** gegen einen anderen Längs-Pressstempels **4** mit einem anderen Querschnitt ausgewechselt werden.

Um das vollständige Ausfüllen des inneren Freiraumes **7** jedes Formrohres **2** beim Verpressen durch das Material des Fleischstranges **100** zu erleichtern, besitzt der freie innere Querschnitt **7'** trotz Rechteckform oder Trapezform mit je zwei einander gegenüber liegenden, parallel zueinander verlaufenden Innenflächen relativ stark gerundete Innenecken:
An dem einstückigen Winkelteil **2.2**b**1** kann diese Rundung schon bei der Herstellung vorgesehen werden. Die andere Rundung ist an der freien unteren, nach innen gerichteten Längskante der Quer-Presswand **2.2**b**2** eingearbeitet, indem von deren nach innen weisenden Seitenfläche ein Vorsprung **17** nach innen vorsteht, der die Form eines vorzugsweise rechtwinkligen Dreiecks mit konkav in Form eines Viertelkreises ausgebildeter Hypotenuse besitzt.

Die gleichen Vorsprünge **17** sind an den unteren Längskanten des Quer-Pressstempels **2.2**a ausgebildet.

Diese kann entweder aufgebaut sein wie anhand der Figuren **3**a, b erläutert, oder der Boden deren U-Teile **2. 2**b kann durch den Zuförderer **14** gebildet werden, sodass lediglich eine fixe, stabile Mittelwand und zwei beidseits davon in der ersten Querrichtung **11.1** auf diese zu und von dieser weg bewegliche Quer-Presswände vorhanden sind, die den Fleischstrang **100** in der ersten Quer-Pressrichtung verpressen.

Dann wird anschließend - wiederum unterstützt durch einen Einschieber **21** -der in der ersten Quer-Pressrichtung **11.1** verpresste Fleischstrang **100** in das U-Teil **2.2**b des Heckformrohres **2.2** eingeschoben, dessen Breite des Querschnittes des U-Teiles dann bereits der Soll-Breite entspricht. Damit kann das U-Teil **2.2**b des Heckformrohres **2.2** auch einstückig ausgebildet sein.

In Figur **1**c sind die Querführungen **23** unter dem Boden des U-Teiles **2.2**b zu erkennen, entlang denen die Quer-Presswände **2.2**b**2** in der ersten Quer-Pressrichtung **11.1** verschoben werden.

Vorzugsweise am in Längspressrichtung **10**a vorderen Ende des hinteren U-Teiles **2.2**b befindet sich eine daran in der zweiten Querrichtung **11.2** zum Formrohr **2** bewegliche Zwischenplatte **8,** - entweder separat für jedes Formrohr **2** oder über beide Formrohre **2** in der ersten Querrichtung **11.1** durchgehend - die sich nach dem Hochklappen des hinteren U-Teils **2.2**b dann in Längspressrichtung **10**a zwischen dem Frontformrohr **2.1** und dem Heckformrohr **2.2** befindet.

Diese Zwischenplatte **8** kann zwischen einer den inneren Querschnitt **7'** des Formrohres **2** verschließenden Schließstellung und einer diesen freigebenden Offenstellung hin- und her bewegt werden.

Nach dem Hochschwenken des hinteren U-Teiles **2.2**b in die Aufschneidestellung mittels eines Scherengestänges **19** befindet sich die Zwischenplatte **8** zunächst immer noch in der Schließstellung, und zwar so lange der im Heckformrohr **2.2** liegende, in beide Querrichtungen **11.1, 11.2** quer verpresste Fleischstrang **100** nun anschließend mittels des Längs-Presstempels **4** auch in Längs-Pressrichtung **10**a verpresst wird, wobei die Zwischenplatte **8** als Anschlag in Längspressrichtung **10**a dient. Da sie stromabwärts dabei vom Front-Formrohr **2.1** abgestützt wird, kann sie sehr dünn ausgeführt werden.

Das Längs-Verpressen, also Vorwärtsfahren des Längs-Pressstempels **4** mittels der angetriebenen Kolbenstange **12,** erfolgt bis zum Erreichen einer definierten Presskraft, sodass durch Ermittlung der Endposition des Längs-Pressstempels **4** mittels eines - nicht dargestellten - Positionssensors dessen Abstand zur Zwischenplatte **8** und damit nunmehr das Gesamtvolumen des Fleischstranges **100** bekannt ist und damit auch vorab berechnet werden kann, wie viele Scheiben eines definierten Volumens, also mit definierter Dicke, daraus aufgeschnitten werden können. Denn falls die Ist-End-Position des Längspress-Stempels nicht eine vorher erwartete Soll-Endposition annehmen kann, ist zumindest die Abweichung davon in Form der erreichten Ist-Endposition bekannt, und kann bei der Berechnung berücksichtigt werden. Denn in gewissen Grenzen ist auch der Längs-Press-Stempel, der in der Erstreckung in der zweiten Querrichtung zweiteilig ausgebildet sein kann, variabel.

Da die zwei parallel eingelegten Fleischstränge **100** niemals hinsichtlich ihres Volumens und auch ihrer Form identisch sind, werden sich die Längen der vollständig verpressten Fleischstränge **100** und damit auch die Zahl daraus erzielbarer identischer Scheiben **101,102** bei den beiden Fleischsträngen **100** unterscheiden, und beispielsweise beim Aufschneiden der eine der beiden Fleischstränge **100** früher den Längsbereich seines Heck-Formrohres **2.2** verlassen.

Bei separater Ausbildung der U-Teile **2.2**b für die beiden Formrohre **2** kann dieses U-Teil **2.2**b früher mittels des Scherengestänges **19** nach unten verschwenkt werden. Ebenso kann der Längs-Pressstempel **4** des früher vollständig aufgeschnittenen der beiden Fleischstränge **100** früher in seine zurückgezogene Stellung zurückbewegt werden.

Wenn auch die Anschlagplatten **13** ggf. separat und unabhängig voneinander ausgebildet sind und in ihrem Abstand - auch zu einem gemeinsamen Messer **3** -, also hinsichtlich der erzielten Scheibendicke, unabhängig voneinander eingestellt werden können, können auf den beiden Spuren der Schneidemaschine **1,** also aus den beiden Formrohren **2,** Scheiben **101, 102** unterschiedlicher Dicke produziert werden.

Nachdem die Längs-Verpressung erfolgt ist, also der jeweilige Längs-Pressstempel **4** seine Soll-Presskraft erreicht hat, wird die Zwischenplatte **8** in Querrichtung von der Schließstellung in die Offenstellung verfahren mittels eines Zwischenplatten-Antriebes.

Je nach Dicke der Zwischenplatte **8** kann die dadurch in Vorschubrichtung **10**a entstehende Lücke zwischen dem Front-Formrohr **2.1** und dem Heckformrohr **2.2** geschlossen werden durch Einschieben einer Füllplatte **8'** gemäß Figur **4**a bis c, die die gleiche axiale Dicke wie die Zwischenplatte **8** besitzt, jedoch eine so große, in der axialen Richtung durchgängige, Durchgangsöffnung, dass im vollständig eingeschobenen Zustand der Füllplatte **8'** deren innere Umfangskontur mit der Innen-Umfangskontur des Formrohres **2** fluchtet.

Der Längs-Pressstempel **4** wird weiter vorwärts ins Heckformrohr **2.2** hinein gefahren, und dadurch das vordere Ende des darin aufgenommenen Fleischstranges **100** vorwärts geschoben in das Front-Formrohr **2.1** hinein und durch dieses hindurch bis zum Anliegen an der Anschlagplatte **13.**

Im vollständig verpressten Zustand des Fleischstranges, also der Verpressungs-Stellung des Formrohres **2,** besitzt das Front-Formrohr **2.1** den gleichen freien inneren Querschnitt **7'** wie das Heckformrohr **2.2:**
Wie in Figur **3**c dargestellt besitzt das vordere U-Teil **2.1**b von Anfang an und unveränderbar eine definierte Breite in der ersten Querrichtung **1.1** seines inneren Freiraumes entsprechend des hinteren U-Teiles **2.2**b in der bereits schmalen, evtl. verpressten, Stellung. Deshalb ist beim Front-Formrohr **2.1** keine Quer-Presswand vorhanden, sondern
- entweder ein im Querschnitt einstückiges U-Teil **2.1**b pro Front-Formrohr **2.1,** und für die beiden nebeneinanderliegenden Front-Formrohre **2.1** bei gemeinsamer Mittelwand ein W-Teil, wie im rechten Teil der Figur **3**c dargestellt,
- oder ein für jedes Formrohr ringförmig geschlossenes O-Teil **2.1**b, indem ein Front-Quer Pressstempel verschiebbar gelagert ist, wie im linken Teil der Figur **3**c dargestellt.

Der vordere Quer-Pressstempel **2.1**a taucht dabei genausoweit in sein vorderes U-Teil **2.1**b ein wie der hintere Quer-Pressstempel **2.2**a in sein hinteres U-Teil **2.2**b**.** Deshalb können vorderer und hinterer Quer-Pressstempel **2.1**a und **2.2**a auch für jedes Formrohr **2** einstückig miteinander ausgebildet sein und bewegt werden, ja sogar über beide Formrohre **2** hinweg als gemeinsame Quer-Pressstempel-Einheit, sofern an beiden Kolbenstangen **12** der gleiche Längs-Pressstempel **4,** also mit zumindest in der zweiten Querrichtung **11.2** gleich große Erstreckung, vorzugsweise gleich großer Frontfläche, eingesetzt wird.

In der Ansicht der Figur **1**d - einem Schnitt entlang der Linie D - D der Figur **1**b - sind zum einen das schrägstehende kreisscheibenförmige Messer **3** mit seiner einen demgegenüber kleineren Durchmesser aufweisenden unterstützenden Stützplatte **24** zu erkennen als auch die beiden einzelnen nebeneinander befindlichen Wiegestationen **18.**

Figur **1**b zeigt einen in Längsrichtung **10**b liegenden Vertikalschnitt entlang der Linie B - B der Figur **1**d.

Figur **1**e zeigt - betrachtet in Vorschubrichtung **10**a - einen Querschnitt entlang der Linie E - E der Figur **1**b. Dabei ist das in dieser Blickrichtung kreisrunde Schneidmesser **3** zu erkennen sowie das Front-Formrohr **2.1** mit Blick in dessen Erstreckungsrichtung, also in Längs-Pressrichtung **10**a, und vor allem der vordere Quer-Press Stempel **2.1**a, der in diesem Fall durchgeht über die gesamte Länge des Formrohres **2** und damit gleichzeitig auch der hintere Quer-Pressstempel **2.2**a ist Zu sehen sind ferner die Kolbenstangen **12',** die die beiden nebeneinanderliegenden Quer-Pressstempel **2.1a** + **2.2**a jeweils in der zweiten Quer-Pressrichtung **11.2** antreiben, sowie die vorderen Enden der beiden Zuförderer **14.**a und **14**.b.

Die Längsschnitte der Figuren **1**c und **2**b, d zeigen - vor allem in der vergrößerten Darstellung der Figur **2**d - zum einen die Schneideinheit **27** mit dem Messer **3**, welches sich unmittelbar an der vorderen Stirnfläche des Front-Formrohres **2.1** in der zweiten Querrichtung **11.2** entlang bewegt und in der dargestellten Stellung den inneren freien Querschnitt **7'** überdeckt und auf der vom Formrohr **2** abgewandten Seite von der kegelförmigen Stützplatte **24** abgestützt wird und von einem Motor **25** drehend angetrieben wird.

Die Anschlagplatte **13** ist In Längs-Pressrichtung **10**a einstellbar in ihrem axialen Abstand zum Messer **3,** wobei zu erkennen ist, dass sich in Längs-Pressrichtung **10**a betrachtet die Anschlagplatte **13** und das Messer **3** vorzugsweise nicht überlappen.

Zwischen dem Front-Formrohr **2.1** und dem Heck-Formrohr **2.2** ist wiederum die Zwischenplatte **8** zu erkennen, die in diesem Fall einschließlich ihres Antriebs an der hinteren Stirnseite des Front-Formrohres **2.1** befestigt ist.

Bei dieser Realisierung ist vorzugsweise an dem vorderen Ende des Heck-Formrohres **2.2** eine - nicht dargestellte - weitere, den inneren freien Querschnitt des hinteren U-Teiles **2.2**b verschließenden, ebenfalls in Querrichtung bewegliches Anschlagelement zum Beispiel in Form einer Endplatte vorhanden als Anschlag beim Einschieben eines Fleischstranges **100** in der Beladestellung.

Nach dem Hochklappen des hinteren U-Teiles **2.2**b und vor dem Längs-Verpressen wird dann die Zwischenplatte **8** in die den inneren freien Querschnitt **7'** verschließende Schließstellung bewegt und schiebt dabei die in der gleichen Ebene und Richtung bewegliche, vorzugsweise gleich dicke, Endplatte aus dem freien inneren Querschnitt **7'** hinaus.

Figur **2**d zeigt ferner die Einstellvorrichtung **26** zum Einstellen des Abstandes **9** der Anschlagplatte **13** zum Messer **3** in Längspressrichtung **10**a.

Die Schneideinheit **27,** die den Motor **25** und die Stützplatte **24** mit Messer **3** trägt, trägt auch eine Aufnahme **26**a für die Anschlagplatte **13,** die entlang von Führungen **26**b, die an der Aufnahme **26**a ausgebildet sind, in Längs-Pressrichtung **10**a innerhalb der Schneideinheit **27** verstellt werden kann, wie anhand von Figur **4**a und b beschrieben, wodurch zumindest das Messer **3,** insbesondere die gesamte Schneideinheit **27,** bei jedem Schnitt betrachtet in der Seitenansicht eine Umlauf-Bewegung, insbesondere eine Rechteck-Bewegung, vollziehen kann.

Die Figuren **5**a - n zeigen unterschiedliche Betriebszustände der Schneidemaschine in einer leicht perspektivischen Ansicht mit einem vertikalen Längsschnitt entlang der Linie B - B der Figur **1**d. Der Schnitt liegt in Blickrichtung der Figur **1**b in der vorderen Verarbeitungs-Spur, also zum Beispiel dem Zuförderer **14**a, aber nahe deren in dieser Blickrichtung hinteren Ende.

Figur **5**a lässt hinsichtlich des Formrohres **2** den axialen Bereich des Front-Formrohres **2.1** und des Heck- Formrohres **2.2** erkennen, über deren gemeinsame Länge der Quer-Pressstempel **2.1+2**.a durchgeht und der von mehreren Kolbenstangen **12.1', 12.2'** in der zweiten Querrichtung **11.2** beaufschlagt wird. Davon befindet sich die eine Kolbenstange **12.1'** im Bereich des Front- Formrohres **2.1.**

Die von dem Messer **3** am vorderen Ende des Formrohres **2** abgetrennten Scheiben fallen auf eine Wiegestation **18** die die Scheiben - oder auch Portionen - nach dem Verwiegen auf einen ersten Abförderer **22** übergibt. Die Wiegestation **18** ist gemäß der Figur **1**b nicht mit dem Gestell der restlichen Schneidemaschine verbunden sondern ruht selbst auf dem Untergrund, um die Übertragung von Schwingungen aus der Schneidemaschine in die Wiegestation **18** zu minimieren.

Figur **5**a zeigt zusammen mit der Ausschnittvergrößerung in Figur 5b beispielsweise den Beginn des Aufschneidevorganges (im Folgenden nur für das im Schnitt dargestellte Formrohr **2** und die entsprechende Bearbeitungs-Spur beschrieben, parallel dazu kann auf der dahinterliegenden Bearbeitungs-Spur der gleiche Vorgang ablaufen, wobei das Messer **3** immer bei beiden Formrohren gleichzeitig eine Scheibe abschneidet), bei dem der Fleischstrang **100** vom Längs-Pressstempel **4** vorwärts gepresst ist bis über das vordere Ende des Formrohres **2** hinaus bis in Anlage an die Anschlagplatte **13.**

Das Messer **3** befindet sich noch vollständig oberhalb des bzw. der zwei beiden nebeneinanderliegenden Formrohre **2.**

In Figur **5**b ist der Abstand **9** zwischen dem vorderen Ende des Formrohres **2** und der Anschlagplatte **13,** die den freien inneren Querschnitt der Formrohre abdeckt, zu erkennen, der gleichzeitig der Abstand **9** zwischen der Schneidkante des Messers **3** und der Schneidplatte **13** - wiederum in axialer Richtung - darstellt.

Nach Herabfahren des Messers **3** deckt das Messer **3** den freien inneren Querschnitt der beiden - Formrohre **2** ab und die abgetrennten Scheiben - wovon in Figur **5**c nur die auf dem der hinteren Verarbeitungs-Spur abgetrennte Scheibe **101** zu sehen ist - fallen auf den ersten Abförderer **22** und können abtransportiert und weiterverarbeitet werden, wie in Figur **5**c in einem Zustand einige Scheiben später dargestellt. Danach schiebt der Längs-Pressstempel **4** den Fleißstrang **100** weiter vorwärts wieder bis zur Anlage an die Anschlagplatte **13** für das Abtrennen der nächsten Scheibe

Figur **5**d zeigt den Zustand, wenn der Fleischstrang **100** soweit aufgeschnitten ist, dass er sich nur noch im axialen Bereich des Front- Formrohres **2.1** befindet und auch der Längs-Pressstempel **4** sich bereits im Formrohr **2.1** befindet.

Sobald dies gegeben ist, schwenkt mithilfe des Scherengestänges **19** das hintere U-Teil **2. 2**b des Heck-Formrohres **2.2** um eine besser in Figur **1**c sichtbare Schwenkachse **5** mit seinem hinteren Ende nach unten - während der im Front-Formrohr **2.1** befindliche Rest des Fleischstranges **100** weiter aufgeschnitten wird - bis gemäß Figur **5**e das hintere U-Teil **2.2**b hinsichtlich der Unterseite seines Innenraumes mit der Oberseite der Zuförderers **14**a, b fluchtet.

Die Quer-Presswände **2.2**b**2** sind dabei relativ zur Mittelwand des WinkelTeiles **2.2**b**1** (siehe Figur **3**a) maximal nach außen gefahren, so dass die in Figur **5**f auf den Zuförderern **14**a, b herangeführten Fleischstränge **100** in Durchlaufrichtung **10**b bis unmittelbar vor das hintere Ende des hinteren U-Teile **2.2**b herangefahren werden können und in dieser Richtung mittels des Einschiebers **21** mit seinen an den hinteren Enden der Fleischstränge **100** angreifenden beiden Zinken in die hinteren U-Teile **2.2**b der beiden Formrohres **2** eingeschoben werden können, wie in Figur **5g** dargestellt.

In diesem Zustand kann immer noch der letzte Rest des Fleischstranges **100** im Front-Formrohr **2.1** vom Längs-Pressstempel **4** vorwärts geschoben und weiter aufgeschnitten werden.

Sobald sich der Einschieber **21** wieder entgegen der Vorschubrichtung **10**b aus den hinteren U-Teilen **2.2**b heraus bewegt hat gemäß Figur **5**h und im Front-Formrohr **2.1** der letzte Rest des dortigen Fleischstranges **100** durch Aufschneiden verbraucht ist gemäß Figur **5**i, können gleichzeitig
- einerseits gemäß Figur **5**k, l die hinteren U-Teile **2.2**b nach dem oder während sich der längs-Pressstempel **4** mittels der Kolbenstange **12** entgegen der längs-Press Richtung **10**a zurückzieht, bereits wieder hoch geschwenkt werden.

Um Kollisionen zwischen dem neuen Fleischstrang **100** und dem Längs-Pressstempel **4** zu vermeiden, muss sich dieser bei Erreichen der vollständig angehobenen Lage der hinteren U-Teile **2.2**b hinter den hinteren Enden der darin befindlichen Fleischstränge **100** befinden, wie in Figur **5**m dargestellt.
- Andererseits kann gemäß Figur **5**m auch der hintere Quer-Pressstempel **2.2**a von seiner verpressenden Stellung angehoben werden, um in der Höhe ausreichend Raum zu schaffen, so dass allein durch Hochschwenken der hinteren U-Teile **2.2**b noch keine Quer-Verpressung in der zweiten Querrichtung **11.2** stattfindet.

Dies erfolgt - nachdem die Heck-U-Teile **2.2**b ihre vollständig hoch geklappte Stellung erreicht haben - gemäß Figur **5**n erst durch herab fahren der hinteren Quer-Pressstempel **2.2**a gegen die neuen Fleischstränge **100.**

Nachdem diese nun in den hinteren Formrohren**2.2** in beiden Querrichtungen **11.1, 11.2** quer verpresst sind und die hinteren Formular **2.2** damit den gleichen freien inneren Querschnitt besitzen wie die Front- Formrohre **22.1,** kann das Längsverpressen durch vorwärtsfahren der Längs-Pressstempel **4** in Längs-Pressrichtung **10**a und anschließende Ausschneiden - wie vorstehend beschrieben - mit dem neuen Fleischstrang **100** begonnen werden.

Eine zweite Ausführungsform der Schneidemaschine **1** gegenüber den Figuren **1** - **5** zeigen die Figuren **6**a, b mit den beiden nebeneinanderliegenden - auch diese Bauform kann auf zwei nebeneinanderliegenden Spuren je zwei Fleischstränge **100** gleichzeitig verarbeiten - Formrohren **2** in Figur **6**a in Beladestellung und in Figur **6**b in der Aufschneide-Stellung.

Diese zweite Bauform unterscheidet sich wie folgt von derjenigen der Figur **1** bis **5****:**
Zum einen werden zum Annähern und Beabstanden der hinteren U-Teile **2.2**b gegenüber den hinteren Quer-Presstempeln **2.2**a oder den über die gesamte axiale Länge der Formrohre durchgehenden Quer-Pressstempel **2.1+2**.a diese - in der ersten Quer Richtung **11.1** betrachtet - auseinander oder gegeneinander gefahren, wobei die beiden Teile ihre parallele Lage zueinander beibehalten, indem - wiederum mit Hilfe eine Scherengestänges **19** - das hintere U-Teil **2.2**b unter Beibehaltung der parallelen Lage zum Rest des Formrohres **2** von diesem beanstandet wird, also nicht durch Verschwenken um eine Schwenkachse.

Dadurch verläuft jedes hintere U-Teil **2.2**b auch in der in Figur **6**a dargestellten Beladestellung nach vorwärts unten geneigt mit der Folge, dass ein ans hintere Ende mittels des Zuförderer **14**a, b heran transportierter und zum Schluss über das vordere Ende des Zuförderers **14**a, b hinaus ragender Fleischstrang **100** abgekippt wird in das U-Teil **2.2**b hinein und in diesem nach unten rutscht, sodass auf einen separaten Einschieber verzichtet werden kann.

Zu diesem Zweck muss der Zuförderer **14**a, b die Fleischstränge **100** auf die Höhe des hinteren Endes des in der Beladestellung befindlichen hinteren U-Teils **2.2**b bringen und kann zum leichteren Hineinfallen an seinem vorderen Ende nicht nur waagrecht, sondern auch leicht nach unten geneigt ausgebildet sein.

Die Figuren **7**a bis **7**c**1** zeigen eine zweite Bauform einer Schneideinheit **27,** deren grundsätzlicher Bewegungsablauf in den Figuren **8**a, b erläutert wird.

Wie die konkrete Bauform in den Figuren **7**a bis **7**c**1** erkennen lässt, besitzt diese Schneideinheit **27** ein balkenförmiges Messer **3**, wobei der balkenförmige Querschnitt so dünn ist, dass man wohl besser von einem streifenförmigen Messer **3** spricht.

Die Schneideinheit **27** ist aufgebaut aus einem Grundkörper **32,** der zum Abtrennen einer Scheibe in der ersten Messer-Querrichtung **31.1** soweit nach unten verfahren wird, dass die in diesem Fall gerade Schneidkante **3**a des darin befestigten Messers **3** den Querschnitt eines Fleischstranges **100** vollständig durchläuft, wie in Figur **7**c**1** angedeutet.

Der Grundkörper **32** besteht aus zwei zueinander beabstandeten Seiten-Trägern **32**a, die durch zwei parallel zueinander beabstandete und quer zu der sich in der ersten Messer-Querrichtung **31.1** erstreckenden Verlaufsrichtung der Seiten-Träger **32**a verlaufende Distanz-Stangen **32**b, die einen runden Querschnitt aufweisen, zu einem rahmenförmigen Grundkörper **32** ergänzt werden.

An der unteren der beiden Distanz-Stangen **32**b ist die Messereinheit **33** befestigt, in der sich das Messer **3** befindet:
Die Messereinheit **33** umfasst drei in Längsrichtung der unteren Distanz-Stange **32**b beabstandete Tragstreben **35,** die an dieser Distanz-Stange **32**b Schwenkbar gelagert sind und an ihrem freien Ende mit einer über alle drei Tragstreben **35** durchgehenden Stützplatte **34** fest verbunden sind. Die Stützplatte **34** erstreckt sich somit in der gleichen Richtung wie die Distanz-Stange **32** b, also in der zweiten Messer Querrichtung **31.2.**

Das streifenförmige Messer **3** ist in Vorschubrichtung **10**a unmittelbar hinter der Rückseite der Stützplatte **34** so angeordnet, dass es mit seiner an der Unterkante des Messers **3** angeordneten Schneidkante **3**a über die Stützkante **34**a der Stützplatte **34** vorsteht, aber relativ zu dieser etwa in der zweiten Messer-Querrichtung **31.2,** der Verlaufsrichtung der Messerkante **3**a, beweglich ist.

Wie die vergrößerte Detaildarstellung in Figur **7**c**1** zeigt, liegt das Messer **4** mit seiner Frontfläche an einer in der Rückseite der Stützplatte **34** eingearbeiteten Schulter an, wobei die Schulter schräg gestellt ist zu der Frontseite der Stützplatte **34**.

Dadurch steht das Messer **3** mit seinem Querschnitt schräg zum Querschnitt der Stützplatte **34,** und die Schneidkante **3**a des Messers **3** steht entgegen der Vorschubrichtung gegebenenfalls sogar etwas über die Frontfläche der Stützplatte **34** vor.

Deshalb ist in diesem Fall das Messer **3** auch auf seiner Frontfläche angeschrägt zur Bildung einer Schneidkante **3**a, wobei diese Anschrägung der Frontfläche des Messers **3** die Messerebene **3"** definiert, die wie gesagt unter Umständen entgegen der Vorschubrichtung **10**a etwas in Richtung Formrohr vor der Frontfläche der Stützplatte **34** liegen kann.

Dies wird erreicht, indem das Messer **3** mit jedem seiner Endes an dem freien Ende je eines Antriebshebels **36** befestigt ist, der jeweils als zweiarmiger Antriebshebel ausgebildet ist und in seinem mittleren Bereich an je einem der in der Haupterstreckungsrichtung der Messerplatte **34**, der zweiten Messer-Querrichtung **31.2**, gegenüberliegenden Enden der Stützplatte **34** verschwenkbar um eine quer zur Messerebene **3"** und damit auch der Stützplatte-Ebene **34'** verlaufende Hebelachse **36'** sind.

Die beiden anderen freien Enden der Antriebshebel **36** sind über eine Koppelstange **37** miteinander verbunden, so dass die von einem Messer-Motor **38** bewirkte oszillierende Hin- und Herbewegung des einen angetriebenen Schwenkhebels **36** nicht nur über das Messer **3** selbst, sondern auch über die Koppelstange **37** auf den anderen Schwenkhebel **36** übertragen wird, und dadurch das Messer **3** weniger stabil ausgebildet werden kann.

Es versteht sich von selbst, dass die Schwenkhebel **36** auch als einarmige Hebel ausgebildet sein könnten, und dann der Angriffspunkt des vom Messer-Motor **38** angetriebenen und mit dem angetriebenen Schwenkhebel **36** in Wirkverbindung stehenden Schwenkhebels zwischen der Schwenkachse **36'** und dem Befestigungspunkt des Messers **3** an diesem Schwenkhebel **36** angreifen müsste.

Wegen der Verschwenkung der Schwenkhebel **36** um ihre Hebelachse **36'** vollzieht das Messer **3** und auch seine Schneidkante **3**a keine exakt lineare oszillierende Bewegung in Richtung seiner geraden Schneidkante **34**a, sondern eine schwach bogenförmige Bewegung, deren Krümmungsradius dem Abstand zwischen Hebelachse **36'** und dem Befestigungsende des Messers **3** bei jedem der Schwenkhebel **36** entspricht. Im Folgenden wird vereinfacht von einer oszillierenden Hin- und Herbewegung gesprochen.

Aufgrund der schwenkbaren Befestigung der Tragstreben **35** um die untere Distanz-Stange **32**b kann ferner die gesamte Messereinheit **33** - bestehend aus Tragstreben **35,** Stützplatte **34,** Messer **3,** Antriebshebeln **36** - um die als Schwenkachse **28'**dienende untere, im Querschnitt runde, Distanz-Stange **32**b hin und her verschwenkt werden, nämlich von einer Schneidstellung in eine Abhebestellung.

In Figur **7**c**1** ist die Schneidstellung dargestellt, in der die Messerebene **3"** parallel liegt zur ersten Messer-Querrichtung **31.1,** in der zum Scheiben abtrennen der Grundkörper **32** entlang des Gestelles der Maschine verfahren wird.

Figur **7**c**2** zeigt demgegenüber die Abhebestellung, in der die Messereinheit **33** um die Schwenkachse **28',** also um die untere Distanz-Stange **32**b, etwas verschwenkbar ist in Vorschubrichtung **10**a, also vom Fleischstrang weg.

Die Figuren **7**d**1** und **7**d**2** zeigen eine Bauform die sich von derjenigen der Figuren **7**c**1**, **2** nur geringfügig unterscheidet.

Zum einen ist der Motor **38** am Grundkörper **27** nicht nach vorne abstehend angeordnet, sondern parallel zu dem rahmenförmigen Grundkörper **27** an dessen Seite verläuft.

Er treibt über ein Pleuel **41** das Messer **3'** direkt oszillierend entlang seiner Erstreckungsrichtung an, wobei das Messer mit einem Schlitten **39** wirkverbunden ist, welcher in einer Führung **40,** die in der Erstreckungsrichtung des Messers **3'** verläuft, geführt ist.

Der sich daraus ergebende Bewegungsablauf des Messers **3** ist aus den Figuren **8**a, b ersichtlich, die an die Darstellungen der Figuren **4**a bis c angelehnt sind und die gleiche Blickrichtung besitzen:
Figur **8**a zeigt den Zustand, in dem beim Abtrennen einer Scheibe mittels der Schneidbewegung **28**a in der ersten Messer-Querrichtung **31.1** und dem dabei überlagerten hin und her bewegen der Schneidkante **3**a in der zweiten Messer-Querrichtung **31.2** das Messer **3** - welches sich bezüglich der Schneideinheit **27** in der Schneidstellung gemäß Figur **7**c**1** befindet - die Scheibe **101** gerade vollständig abgetrennt hat.

Die Figur **8**b zeigt den Zustand, in dem nach dem vollständigen Abtrennen einer Scheibe **101** sich die Messeeinheit **33** mit dem Messer **3** in die Abhebestellung verschwenkt wurde und dadurch die abgetrennte Scheibe **101** vom Fleischstrang **100** weg schiebt und dadurch das Abwerfen auf die Wägestation **18** erleichtert, vor allem aber sofort, also noch bevor die Rückfahrbewegung **28**c in der ersten Messer-Quer Richtung **31.1** begonnen hat, bereits das vorwärts schieben des Fleischstranges **100** ermöglicht, was ja auch das Ziel der Messerbewegungen **28**a bis d in den Figuren **4**a bis c war.

Im Gegensatz zur dortigen Lösung vollzieht hier also primär nur die Schneidkante **3**a des Messers **3** die ringförmige Umlaufbewegung bestehend aus Schneidbewegung **28**a, Abhebebewegung.**28**b, Rückfahrbewegung **28**c und Zustellbewegung **28**d wie in den Figuren **4**a bis C beschrieben, mit dem Unterschied, dass die Abhebebewegung **28**b hier in den Figuren **8**a, b keine geradlinige Bewegung, sondern eine leicht bogenförmige Bewegung in der Messerebene **3"** ist.

Die Schwenkbewegung vollzieht natürlich außer der Schneidkante **3**a die gesamte Schneideinheit **33,** aber das Abheben von der Stirnseite des Fleischstranges **100** ist entsprechend geringer als das der Schneidkante **3**a entsprechend dem geringeren Abstand zur Schwenkachse **28'.**

Durch diese Bauform der Schneideinheit **33** werden also hinsichtlich des früh beginnenden Vorschubes des Fleischstranges **100** für das Abtrennen der neuen Scheibe **101** die gleichen Vorteile erreicht, jedoch der Nachteil der Lösung eines rotierenden kreisscheibenförmigen oder sichelförmigen Messers **3** vermieden, welches darin besteht, dass ein solches Messer **3** - bei einer Erstreckung über zwei oder gar noch mehr nebeneinanderliegende Fleischstränge **100** und deren gleichzeitiges Aufschneiden - die dann sehr große Masse eines solchen Messers vermieden wird, die ja bei jedem Schneidvorgang erneut beschleunigt und abgebremst werden muss.

### BEZUGSZEICHENLISTE

- **1**: Schneidemaschine
- **2**: Formrohr
- **2.1**: Front-Formrohr
- **2.1**a: Front- Formteil, vorderer Quer-Pressstempel
- **2.1**b: Front- Formteil, vorderes U-Teil
- **2.2**: Heck-Formrohr
- **2.2**a: Heck-Formteil, hinterer Quer-Pressstempel
- **2.2**b: Heck-Formteil, hinteres U-Teil
- **2.1+2.**a: gemeinsamer Querpresstempel
- **2.2**b**1**: Heck-Formteil, Winkel-Teil
- **2.2**b**2**: Heck-Formteil, Quer-Presswand
- **2.2**b**1+2**: T-Teil
- **2**a: Schneid-Ende
- **2**b: Belade-Ende
- **3**: Messer
- **3'**: Messer-Achse
- **3"**: Messer-Ebene
- **3**a: Schneidkante
- **3'** a: Erstreckungsrichtung der Schneidkante
- **3***: Flugkreis
- **4**: Längs-Pressstempel
- **5**: Heck-Schwenkachse
- **6**: Formrohr-Band
- **6**a: Trum
- **7**: innerer Freiraum
- **7'**: innerer freier Querschnitt
- **8**: Zwischenplatte
- **8'**: Füllplatte
- **9**: Abstand
- **10**a: Längs-Press Richtung, axiale Richtung, Vorschubrichtung, Längsrichtung
- **10b**: Durchlaufrichtung der Maschine, Längsrichtung,
- **10'**: vertikale Längsebene
- **11**: Querrichtung (zu **10**a)
- **11.1**: erste Querrichtung
- **11.2**: zweite Querrichtung
- **12, 12'**: Kolbenstange
- **13**: Anschlagplatte
- **14**a, b: Zuförderer
- **15**: Winkel
- **16**: Querpress-Wanne
- **17**: Vorsprung
- **18**: Wiegestation
- **19**: Scherengestänge
- **20**: Steuerung
- **21**: Einschieber
- **22**: Abförderer
- **23**: Querführung
- **24**: Stützplatte
- **25**: Motor
- **26**: Einstell-Vorrichtung
- **26**a: Aufnahme
- **26**b: Führung
- **27**: Schneideinheit
- **28**: Abhebe-Vorrichtung
- **28'**: Schwenkachse
- **28**a: Schneidbewegung
- **28**b: Abhebebewegung
- **28**c: Rückfahrbewegung
- **28**d: Zustellbewegung
- **29**: Querführung
- **30**: Quer-Antrieb
- **31.1**: Messerweg, erste Messer-Querrichtung
- **31.2**: zweite Messer-Querrichtung, Oszillier- Richtung
- **32**: Grundkörper
- **33**: Messereinheit
- **34**: Stützplatte
- **34** a: Stützkante
- **35**: Tragstrebe
- **36**: Antriebshebel
- **36'**: Hebelachse
- **37**: Koppelstange
- **38**: Messer-Motor
- **39**: Schlitten
- **40**: Führung
- **41**: Pleuel

- **100**: Fleischstrang
- **101**: Scheibe
- **102**: Scheibe
- **110**: Portion

- d: Dicke
- V: Vertikale

## Patentansprüche

1. Schneidemaschine **(1)** um aus Strängen **(100)** eines elastischen Materials, z.B. Fleischsträngen **(100),** Scheiben **(101, 102)** und insbesondere aus mehreren Scheiben zusammengesetzte Portionen **(110),** insbesondere gewichtsgenau, herzustellen,
wobei die Schneidemaschine **(1)**
- mindestens ein vorne und hinten offenes, in Längs-Pressrichtung (**10**a), der Axialrichtung, verlaufendes Formrohr **(2)** für je einen Fleischstrang **(100)** umfasst, vorzugsweise mehrere solche parallel nebeneinander angeordnete Formrohre **(2),**
- für jedes der Formrohre **(2)** ein Längs-Pressstempel **(4)** vorhanden ist, der in das Formrohr **(2)** vom hinteren Belade-Ende **(2**b**)** aus in Längs-Pressrichtung **(10a)** des Formrohres **(2)** einschiebbar ist,
- am vorderen Schneid-Ende **(2a)** des Formrohres (2) ein Messer **(3)** zum Abtrennen von Scheiben **(101, 102)** von den Fleischsträngen **(100)** angeordnet ist,
**dadurch gekennzeichnet, dass**
- das Formrohr **(2)** in Umfangsrichtung aus mehreren relativ zueinander in beiden Querrichtungen **(11.1, 11.2)** zur Längs-Pressrichtung **(10**a**)** beweglichen Formrohr-Teilen besteht und dadurch einen in beiden Querrichtungen zur Längsrichtung verstellbaren Querschnitt besitzt.

2. Schneidemaschine nach Anspruch **1,**
**dadurch gekennzeichnet, dass**
- das Messer **(3)** in einer Querrichtung **(11),** der ersten Messer-Querrichtung **(31.1)** und insbesondere in Axialrichtung **(10**a**),** der Vorschubrichtung, zu dem Formrohr **(2)** gesteuert verfahrbar ist mittels einer Schneideinheit **(27),**
und/oder
- das Messer **(3)** sich in der Breite über alle Formrohre **(2)** hinweg erstreckt, um in einem Schnitt Scheiben **(101,102)** von allen nebeneinander benachbarten Formrohren **(2)** in einem Arbeitsgang abtrennen zu können,
und/oder
- das Messer **(3)** ein, insbesondere in Erstreckungsrichtung (**3**'a) seiner Messerkante **(3**a**)** oszillierendes, insbesondere balkenförmiges oder streifenförmiges, Messer **(3)** ist oder ein rotierendes, insbesondere kreisscheiben-förmiges Messer **(3)** ist.

3. Schneidemaschine nach einem der vorhergehenden Ansprüche, **dadurch gekennzeichnet, dass**
- die in einer Querrichtung **(11.1, 11.2)** verfahrbare Anschlagplatte **(13)** insbesondere in der gleichen Querrichtung, der ersten Messer-Quer Richtung **(31.1),** verfahrbar ist wie das Messer **(3)** und insbesondere in dieser Querrichtung fest mit dem Messer **(3)** verbunden ist, und
- betrachtet in Längs-Pressrichtung **(10**a**)** das Messer **(3)** und die Anschlagplatte **(13)** insbesondere einander nicht überlappen, vorzugsweise aber in der Quer-Ebene nur ein schmaler Spalt von weniger als **20** mm, insbesondere weniger als **10** mm, dazwischen vorhanden ist.

4. Schneidemaschine nach einem der vorhergehenden Ansprüche,
**dadurch gekennzeichnet, dass**
- der innere freie Querschnitt **(7')** der Formrohre **(2)** je zwei einander gegenüberliegende, parallel zueinander verlaufende, Seiten aufweist und insbesondere rechteckig oder parallelogrammförmig ist,
und/oder
- die Längs-Pressstempel **(4)** für die einzelnen Formrohre **(2)** unabhängig voneinander in ihrem axialen Vorschub steuerbar sind und insbesondere einen Sensor zum Detektieren der axialen Position des Längs-Pressstempels **(4)** aufweisen.

5. Schneidemaschine nach einem der vorhergehenden Ansprüche,
**dadurch gekennzeichnet, dass**
- das Formrohr **(2)** im umfänglich geschlossenen Zustand in Längs-Pressrichtung **(10**a**)** schräg nach unten zu ihrem vorderen Schneidende **(2**a**)** hin geneigt sind, insbesondere um einen Winkel **(15)** zwischen **20°** und **70°,** besser zwischen **30°** und **60°,** besser zwischen **40°** und **50°** gegenüber der Horizontalen,
und/oder
- eine sich parallel zur Messer-Ebene **(3"),** insbesondere lotrecht zur Längs-Pressrichtung **(10**a**),** erstreckende Anschlagplatte **(13)** auf der dem Formrohr **(2)** gegenüberliegenden Seite des Messers **(3)** angeordnet ist, welches in seinem axialen Abstand **(9)** zum Messer **(3)** einstellbar ist.

6. Schneidemaschine nach einem der vorhergehenden Ansprüche,
**dadurch gekennzeichnet, dass**
jedes Formrohr **(2)** in Längs-Pressrichtung **(10**a**)** unterteilt ist in ein Front-Formrohr **(2.1)** und ein sich insbesondere unmittelbar daran anschließendes Heck-Formrohr **(2.2),** wobei das Front-Formrohr **(2**a**)** vorzugsweise
- eine Länge zwischen **2** % und **50** %, besser zwischen **5** % und **30** %, besser zwischen **10** % und **20** % der gesamten Länge des Formrohres **(2)** aufweist
und/oder
- eine Länge von mindestens 5 cm, besser mindestens 10 cm, besser mindestens 12 cm aufweist.

7. Schneidemaschine nach einem der vorhergehenden Ansprüche, **dadurch gekennzeichnet, dass**
zwischen dem Front-Formrohr **(2.1)** und dem Heck-Formrohr **(2.2),** insbesondere bei jedem Formrohr **(2)** separat, eine Zwischenplatte **(8)** vorhanden ist, die in Querrichtung **(11)** zur Längs-Pressrichtung **(10**a**)** zwischen einer Schließstellung, in der sie den freien inneren Querschnitt **(7')** des Formrohres **(2)** verschließt, und einer Offenstellung, in der sie diesen offen lässt, gesteuert, insbesondere separat, verfahrbar ist und insbesondere an dem Heck-Formrohr **(2.2)** befestigt ist.

8. Schneidemaschine nach einem der vorhergehenden Ansprüche,
**dadurch gekennzeichnet, dass**
- jedes Heck-Formrohr **(2.2)** betrachtet in Längsrichtung **(10a,b)** aus mindestens zwei relativ zueinander in wenigstens der zweiten Querrichtung **(11.2)** zur Längsrichtung **(10)** verfahrbaren Heck-Formteilen **(2.2**a**,** b) besteht
und/oder
- die beiden Heck-Formteile (**2.2**a**,** b) des Heck-Formrohres **(2.2)** in der zweiten Querrichtung **(11.2)** vollständig außer Eingriff und auf Abstand zueinander bringbar sind.

9. Schneidemaschine nach einem der vorhergehenden Ansprüche,
**dadurch gekennzeichnet, dass**
- wenigstens das die untere Wandung des inneren Freiraumes **(7)** des Heck-Formrohres **(2.2)** aufweisende Heck-Formteil **(2.2**b**)** in eine, insbesondere horizontale, Beladestellung absenkbar, insbesondere herabklappbar, ist, in der es insbesondere mit einem Zuförderer (**14**a**,** b) für Stränge **(100)** fluchtet.
und/oder
- die Zwischenplatte **(8)** an dem die untere Wandung des inneren Freiraumes **(7)** des Heck-Formrohres **(2.2)** aufweisenden Heck-Formteil (**2.2**b) befestigt ist.

10. Schneidemaschine nach einem der vorhergehenden Ansprüche,
**dadurch gekennzeichnet, dass**
- das Heck-Formrohr **(2.2)** aus, insbesondere nur, zwei Heck-Formteilen (**2.2**a**,** b) besteht und betrachtet in Längs-Pressrichtung **(10**a**)** das eine Heck-Formteil **(2.2**b**)** jedes Heck-Formrohres **(2.2)** als U-förmiges U-Teil (**2.2**b) ausgebildet ist und das andere Heck-Formteil **(2.2**a**)** als hierzu beweglicher Quer-Pressstempel **(2.2**a**)** ausgebildet ist, der in der zweiten Querrichtung **(11.2)** in die offene Umfangs-Seite des U-Teiles **(2.2**b**)** dicht hineinpasst und in diese hinein einfahrbar ist und insbesondere
- stromaufwärts des in die Beladestellung abgesenkten U-Teiles **(2.2**b**)** eine in Längsrichtung **(10**b**)** vorne und hinten sowie oben offene Querpress-Wanne **(16)** als weiteres Formrohr-Teil insbesondere unmittelbar vorgelagert ist, in der die beiden einander gegenüberliegenden Seitenwände der Querpress-Wanne **(16)** in der ersten Querrichtung **(11.1)** relativ zueinander verfahrbar sind.

11. Schneidemaschine nach einem der vorhergehenden Ansprüche,
**dadurch gekennzeichnet, dass**
die eine Seitenwand der Querpress-Wanne **(16)** fest mit dem Boden der Querpress-Wanne **(16)** verbunden ist, und
- entweder der Boden durch ein Längsrichtung **(10**b**)** der Querpress-Wanne **(16)** bewegbares Zufuhrband **(6)** für die Stränge **(100)** gebildet wird
- oder ein Einschieber **(21)** vorhanden ist, der in Längsrichtung **(10**b**)** verschiebbar und in den inneren Freiraum der Querpress-Wanne **(16)** und/oder des U-Teiles **(2.2**b**)** einfahrbar ist, und insbesondere ein Positionssensor zur Bestimmung der Längsposition des Einschiebers **(21)** vorhanden ist.

12. Schneidemaschine nach einem der vorhergehenden Ansprüche,
**dadurch gekennzeichnet, dass**
- das als U-Teil ausgebildete Heck-Formteil **(2. 2**b**)** in Längs-Pressrichtung **(10**a**)** betrachtet aus einem in Vorschubrichtung **(10**a**)** verlaufenden Winkel-Teil **(2.2**b**1)** sowie einem parallel zu dessen mittleren Schenkel verlaufenden und auf der Innenseite eines der anderen Schenkel dicht anliegenden und in einer, insbesondere der ersten, Querrichtung **(11.1)** verfahrbaren Quer-Presswand **(2.2**b**2)** besteht und
- insbesondere die Quer-Presswand **(2.2**b**2)** gegen einen solchen Anschlag in Querrichtung verfahrbar ist, dass dann die Breite des inneren Freiraumes **(7)** des U-Teiles **(2.2**b**)** der Breite des darin einzuführenden Quer-Pressstempels **(2.2**a**)** entspricht.

13. Schneidemaschine nach einem der vorhergehenden Ansprüche, **dadurch gekennzeichnet, dass**
die Winkel-Teile **(2.2**b**1)** zweier benachbarter Heck-Formrohre **(2.2)** in Längsrichtung **(10)** betrachtet einstückig miteinander als T-Teil **(2.2**b**1+1)** ausgebildet sind und auf deren zueinander fluchtenden Schenkeln jeweils eine Quer-Presswand **(2.2**b**2)** verfahrbar ist mit gegeneinander gerichteten Press-Richtungen.

14. Schneidemaschine nach einem der vorhergehenden Ansprüche, **dadurch gekennzeichnet, dass**
von den bei einem in Längsrichtung **(10a,b)** betrachtet im Wesentlichen rechteckigen inneren Freiraum **(7)** des Heck-Formrohres **(2.2)** vorhandenen vier den Freiraum **(7)** umgebenden Wandungen des Heck-Formrohres **(2.2)** wenigstens die untere Wandung aus dem Trum **(6**a**)** eines in Längsrichtung **(10a)** des, insbesondere in Beladestellung befindlichen, Heck-Formrohres **(2.2)** laufenden Formrohrbandes **(6)** gebildet wird, welches Bestandteil des entsprechenden Heck-Formteiles **(2.2**b**)** ist, insbesondere zwei bis vier Wandungen durch Formrohr-Bänder **(6)** gebildet werden.

15. Schneidemaschine nach einem der vorhergehenden Ansprüche, **dadurch gekennzeichnet, dass**
das U-Teil **(2. 2**b**),** insbesondere einschließlich des Formrohr-Bandes **(6)** und/oder der Quer-Presswand **(2.2**b**)** gemeinsam in der zweiten Querrichtung **(11.2)** bewegbar sind, insbesondere mittels eines Scherengestänges **(19).**

16. Schneidemaschine nach einem der vorhergehenden Ansprüche, **dadurch gekennzeichnet, dass**
das wenigstens eine Formrohr-Band **(6)** eine größere Breite besitzt als der größte Durchmesser des zu verarbeitenden Stranges **(100),** und insbesondere bei zwei einander gegenüberliegenden Formrohr-Bändern die die beiden anderen Wandungen bildenden Querpress-Stempel zwischen die beiden Formrohr-Bänder **(6)** in Querrichtung einfahren können.

17. Schneidemaschine nach einem der vorhergehenden Ansprüche, **dadurch gekennzeichnet, dass**
- die Quer-Presswand **(2.2**b**2)** mit einer ihrer Längskanten auf der dem inneren Freiraum **(7)** zugewandten Trum des Formrohr-Bandes **(6)** entlang in Querrichtung **(11.1)** verfahrbar ist
und/oder
- die Quer-Presswand **(2.2**b**2)** eine einstellbare Querposition anfahren kann.

18. Schneidemaschine nach einem der vorhergehenden Ansprüche, **dadurch gekennzeichnet, dass**
- die dem Formrohr-Band **(6)** gegenüberliegende Wandung des Formrohres durch einen Querpress-Stempel **(5)** gebildet wird, der in das U-Teil **(2. 2**b**)** einfahrbar ist,
und/oder
- der Quer-Pressstempel **(5)** in der zweiten Querrichtung **(11.2)** beweglich angeordnet ist und die beiden Formrohr-Teile bestehend aus Querpress-Wand **(9)** einerseits und Formrohr-Band **(6)** zusammen mit daran befestigter Seitenwand andererseits ebenfalls in der zweiten Querrichtung **(11.2)** beweglich sind.

19. Schneidemaschine nach einem der vorhergehenden Ansprüche, **dadurch gekennzeichnet, dass**
jedes Front-Formrohr **(2.1)** aus zwei Front-Formteilen (**2.1**a, b) besteht, wovon eines als in Längsrichtung **(10)** betrachtet U-förmiges U-Teil **(2.1**b**)** ausgebildet ist und das andere als hierzu beweglicher Quer-Pressstempel **(2.1**a**),** der in den freien inneren Querschnitt des U-Teiles **(2.1**b**)** hineinpasst und in der zweiten Querrichtung **(11.2)** einfahrbar ist.
(allgemein)

20. Schneidemaschine nach einem der vorhergehenden Ansprüche, **dadurch gekennzeichnet, dass**
- der Längs-Pressstempel **(4)** an der ihn antreibenden Kolbenstange **(12)** austauschbar angeordnet ist,
und/oder
- die Schneidemaschine **(1)** eine Steuerung **(20)** umfasst, die alle beweglichen Teile der Schneidemaschine in der gewünschten zeitlichen und örtlichen Korrelation zueinander in ihren Bewegungen steuert.

21. Schneidemaschine nach einem der vorhergehenden Ansprüche, **dadurch gekennzeichnet, dass**
- die Quer-Pressstempel **(2.1**a**, 2.2**b**)** des Front-Formrohres **(2.1)** und des Heck-Formrohres **(2.2)** fest miteinander verbunden, insbesondere einstückig miteinander als gemeinsamer Querpressstempel **(2.1+2.**a**)** ausgebildet, sind,
und/oder
- eine Wiegestation **(18)** stromabwärts, insbesondere zwischen der Schneidemaschine **(1)** und einem die Scheiben oder Portionen von der Schneidemaschine **(1)** abtransportierenden Abförderer **(22)** angeordnet ist,, die insbesondere auf dem Untergrund steht und nicht mit dem Rest der der Schneidemaschine **(1)** verbunden ist.

22. Schneidemaschine nach einem der vorhergehenden Ansprüche **dadurch gekennzeichnet, dass**
die Schneidemaschine **(1)** aufweist
- einen Froster stromaufwärts der Schneideinheit **(27),**
und/oder
- einen Aussortierer stromabwärts der Schneideinheit **(27)** und/oder
- eine Ausgleichs-Station stromabwärts der Schneideinheit **(27)** zum Austauschen von Scheiben **(101,102)** innerhalb einer Portion **(110),** um das Soll-Gewicht der Portion **(110)** zu erreichen.

23. Verfahren, um aus einem Strang **(100)** eines elastischen Materials, z.B. einem Fleischstrang (100), Scheiben **(101,102)** und insbesondere aus mehreren Scheiben zusammengesetzte Portionen **(110),** insbesondere gewichtsgenau, herzustellen, indem
- ein Strang **(100)** in einem Formrohr **(2)** angeordnet wird,
- der Strang **(100)** im Formrohr **(2)** in wenigstens einer Querrichtung **(11.1, 11.2)** sowie in der Längs-Pressrichtung **(10**a**)** des Formrohres **(2)** verpresst wird,
- der Strang **(100)** in Längs-Pressrichtung **(10**a**)** vorwärts geschoben wird über das vordere Schneid-Ende **(2**a**)** des Formrohres **(2)** hinaus,
- vor dem vorderen Schneid-Ende **(2**a**)** des Formrohres **(2)** von jedem Strang **(100)** eine Scheibe **(101)** mittels wenigstens eines Messers **(3)** abgetrennt wird,
**dadurch gekennzeichnet, dass**
- mehrere Stränge **(100)** parallel in einer ersten Querrichtung **(11.1)** nebeneinander auf mehreren Verarbeitungsspuren, insbesondere gleichzeitig, verarbeitet werden und in je einem Formrohr **(2)** angeordnet werden,
zum Verpressen in Querrichtung
- diese Stränge **(100)** vor dem Längsverpressen jeweils in der ersten Querrichtung **(11.1)** im jeweiligen Formrohr **(2)** oder stromaufwärts davon querverpresst werden und
- diese Stränge **(100)** vor dem Längsverpressen, vorzugsweise nach dem Querverpressen in der ersten Querrichtung **(11.1),** jeweils in einer zweiten Querrichtung **(11.2),** die insbesondere lotrecht zur ersten Querrichtung **(11.1)** steht, im Formrohr **(2)** querverpresst werden,
zum Abtrennen der Scheiben **(101)**
- das wenigstens eine Messer **(3)** der Schneideinrichtung (27) in einer Querrichtung **(11)** zur Längs-Pressrichtung **(10**a**),** bewegt wird,
- die Geschwindigkeit der Querbewegung des Messers **(3)** relativ zum Durchmesser und der Drehzahl des Messers **(3)** gesteuert wird.

24. Verfahren nach Anspruch **23,**
**dadurch gekennzeichnet, dass**
das Vorwärtsschieben in Längs-Pressrichtung **(10**a**)** des Stranges **(100)** über das vordere Schneid-Ende **(2a)** des Formrohres **(2)** hinaus zum Aufschneiden in Scheiben **(100)** bis zu einer Anschlagplatte **(13)** erfolgt.

25. Verfahren nach einem der vorhergehenden Verfahrens-Ansprüche, **dadurch gekennzeichnet, dass**
von den wenigstens zwei nebeneinander angeordneten Fleischsträngen **(100)** im gleichen Arbeitsgang durch ein und dasselbe Messer **(3)** je eine Scheibe **(101,102)** abgetrennt wird, insbesondere durch Bewegen des Messers **(3)** in der zweiten Querrichtung **(11.2).**

26. Verfahren nach einem der vorhergehenden Verfahrens-Ansprüche, **dadurch gekennzeichnet, dass**
- das Messer **(3)** in Längs-Pressrichtung **(10**a**)** nach jedem Schnitt axial bewegt wird, und in dieser Zeit der Fleischstrang **(100)** bereits über das vordere Ende des Formrohres **(2)** hinaus vorgeschoben wird,
- insbesondere unmittelbar nach dem Abtrennen der wenigstens einen Scheibe **(101,102)** sich das Messer **(3)** in Vorschubrichtung **(10**a**)** um, insbesondere die Dicke einer Scheibe **(101),** vorwärtsbewegt wird, vor oder gleichzeitig mit dem Zurückverfahren des Messers **(3)** in Querrichtung in seine Ausgangsposition.

27. Verfahren nach einem der vorhergehenden Verfahrens-Ansprüche, **dadurch gekennzeichnet, dass**
- Anschlagplatte **(13)** und Messer **(3)** in Längsrichtung zueinander auf einen Abstand entsprechend der gewünschten Dicke der Scheibe eingestellt werden, insbesondere für jedes Formrohr **(2)** separat, und
- insbesondere Anschlagplatte **(13)** sowie Messer **(3)** als Schneideinheit **(27)** zumindest in der Schneidrichtung **(27)** gemeinsam bewegt werden.

28. Verfahren nach einem der vorhergehenden Verfahrens-Ansprüche, **dadurch gekennzeichnet, dass**
- jedes Formrohr **(2)** in seiner Längsrichtung **(10a)** zweiteilig ausgebildet ist mit einem Front-Formrohr **(2.1)** und einem Heck-Formrohr **(2.2),** wobei die Querverpressung des Stranges **(100)** im Front-Formrohr **(2.1)** unabhängig vom der Querverpressung im nachfolgenden Heck-Formrohr **(2.2)** gesteuert wird, und
- insbesondere Front-Formrohr **(2.1)** und Heck-Formrohr **(2.2)** des gleichen Formrohres **(2)** im verpressenden Zustand auf den gleichen, zueinander fluchtenden, inneren freien Querschnitt **(7')** eingestellt werden.

29. Verfahren nach einem der vorhergehenden Verfahrens-Ansprüche, **dadurch gekennzeichnet, dass**
- zwischen dem Front-Formrohr **(2.1)** und dem dazu fluchtenden Heck-Formrohr **(2.2)** eine quer, insbesondere lotrecht, zur Längs-Pressrichtung **(10**a**)** stehende Zwischenplatte **(8)** angeordnet ist, die in Querrichtung bewegt wird zwischen einer den inneren Freiraum **(7)** des Formrohres **(2)** verschließenden Schließstellung oder diesen offen lassenden Offenstellung,
und/oder
- zum Vorwärtsbewegen eines Fleischstranges **(100)** im Heck-Formrohr **(2.2)** wenigstens eine, besser zwei gegenüberliegende, besser alle vier, Wandungen des Heck-Formrohres **(2.2)** in Längsrichtung **(10)** mit dem Fleischstrang **(100)** mitbewegt werden und insbesondere in Vorschubrichtung **(10)** angetrieben werden.

30. Verfahren nach einem der vorhergehenden Verfahrens-Ansprüche, **dadurch gekennzeichnet, dass**
- im Front-Formrohr **(2.1)** und insbesondere auch im Heck-Formrohr **(2.2),** eine Querverpressung nur in der zweiten Querrichtung **(11.2)** durchgeführt wird,
und/oder
- die Querverpressung sowohl in der ersten Querrichtung **(11.1)** als auch in der zweiten Querrichtung **(11.2)** jeweils bis auf eine vorgegebene Soll-Position durchgeführt wird.

31. Verfahren nach einem der vorhergehenden Verfahrens-Ansprüche, **dadurch gekennzeichnet, dass**
sobald sich das hintere Ende eines oder insbesondere aller eingelegten Stränge **(100)** nur noch im axialen Bereich des jeweiligen Front-Formrohres **(2.1)** befindet, insbesondere nacheinander, in dem betreffenden Formrohr **(2)** oder in allen Formrohren **(2)**
- das Reststück des Stranges **(100)** im Front-Formrohr **(2.1),** insbesondere mit Hilfe des Längs-Pressstempels **(4),** in Vorschubrichtung **(10**a**)** weiterbewegt und vollständig aufgeschnitten wird,
- gleichzeitig das untere Heck-Formteil **(2.2b)** des Heck-Formrohres **(2.2)** wenigstens an seinem Belade-Ende **(2b),** insbesondere in seiner gesamten axialen Länge, nach unten abgesenkt wird in eine mit dem Zuförderer **(14**a**,** b) für neue Stränge **(100)** fluchtende, insbesondere horizontale, Beladestellung und
- in das untere Heck-Formteil **(2.2**b**)** des Heck-Formrohres **(2.2)** jeweils der nächste Strang **(100),** insbesondere unterhalb der Kolbenstange **(12)** des Längs-Pressstempels **(4),** eingelegt und insbesondere vorwärts transportiert wird, bis vorzugsweise zum vorderen Ende des Heck-Formteil **(2.2**b**),** insbesondere bis zur dortigen Zwischenplatte **(8)**
- sobald der Strang **(100)** aufgeschnitten ist, der Längs-Pressstempel **(4)** zurückgezogen wird.

32. Verfahren nach einem der vorhergehenden Verfahrens-Ansprüche, **dadurch gekennzeichnet, dass**
- vor oder nach dem Einlegen des neuen Stranges **(100)** in das untere Heck-Formteil **(2.2**b**)** der neue Strang **(100)** in der ersten Querrichtung (**11.1**) quer-verpresst wird,
insbesondere
- das untere Heck-Formteil **(2.2**b**)** des Heck-Formrohres **(2.2)** wieder angehoben wird in eine mit dem unteren Front-Formteil **(2.1**b**)** fluchtende Pressstellung, sodass sich der Strang **(100)** vor dem Längs-Pressstempel **(4)** befindet, und das Heck-Formrohr **(2.2)** dadurch insbesondere wieder umfänglich geschlossen wird und der darin befindliche Strang **(100)** in der zweiten Querrichtung **(11.2)** mittels eines Quer-Pressstempels **(2.2**b**1)** quer-verpresst wird,
und/oder
- der Längs-Pressstempels **(4)** mindestens bis zum hinteren Ende des in das Heck-Formteil **(2.2**b**)** eingelegten neuen Stranges **(100)** zurückgezogen wird,
und/oder
- der Fleischstrang **(100)** gegen die Zwischenplatte **(8)** mittels des Längs-Pressstempels **(4)** längs-verpresst wird,
und/oder
- die Zwischenplatte **(8)** aus dem inneren freien Querschnitt **(7)** des Formrohres **(2)** entfernt wird,
sowie
- der Strang **(100)** in Längsrichtung **(10)** weiter vorwärts durch das Front-Formrohr **(2.1)** hindurch, insbesondere bis zur Anschlagplatte (13), vorwärts geschoben wird für das Aufschneiden des neuen Stranges **(100).**

33. Verfahren nach einem der vorhergehenden Verfahrens-Ansprüche, **dadurch gekennzeichnet, dass**
- entweder eine am unteren Heck-Formteil **(2.2**b**)** eventuell vorhandene Quer-Presswand **(2.2**b**2)** vor dem Einlegen des neuen Stranges **(100)** bezüglich des Restes des unteren Heck-Formteiles **(2.2**b**)** radial nach außen verfahren wird und vor dem Anheben des unteren Heck-Formteiles **(2.2**b**)** wieder angenähert wird bis auf die vorgegebene Breite bei der Pressstellung und der neue Strang **(100)** quer-verpresst wird,
- oder der neue Strang **(100)** in einer zwischen dem unteren Heck-Formteil **(2.2**b**)** und dem Zuförderer **(14)** angeordneten Quer-Press-Station in der ersten Querrichtung **(11. 1)** quer-verpresst wird.

34. Verfahren nach einem der vorhergehenden Verfahrens-Ansprüche, **dadurch gekennzeichnet, dass**
in der Beladestellung der nächste Strang **(100)** in Längsrichtung **(10**b**)** vom Zuförderer **(14)** in den unteren, insbesondere U-förmigen, Heck-Formteil (**2.2**b) des Heck-Formrohres **(2b)**
- entweder von einem in Verlaufsrichtung des Zuförderer **(14)** verschiebbaren Einschieber **(21)** eingeschoben wird und dabei insbesondere die Länge des Fleischstranges **(100)** bestimmt wird, insbesondere durch Positionsbestimmung des Einschiebers **(21)** in seiner vordersten Lage,
- oder der nächste Strang **(100)** aufliegend auf einem in Längsrichtung **(10)** beweglichen Formrohr-Band **(6)** in das Heck-Formteil **(2.2**b**)** hinein transportiert wird, welches insbesondere Bestandteil dieses Heck-Formteiles **(2.2**b**)** ist.

## Claims

1. A **cutting machine** (1) for producing slices (101, 102) and in particular portions (110) assembled from plural slices, in particular in a weight precise manner from meat strands (100) of an elastic material e.g. meat strands (100),
wherein the cutting machine (1)
- comprises a least one form tube (2) that is open at a front side and at a back side and extends in a longitudinal pressing direction (10a), an axial direction, for a respective meat strand (100), advantageously plural form tubes (2) arranged parallel adjacent to each other,
- a longitudinal press plunger (4) is provided for each of the form tubes (2) wherein the press plunger is insertable into the form tube (2) from a rear loading end (2b) in the longitudinal pressing direction (10a) of the form tube (2),
- a blade (3) for cutting off the slices (101, 102) form the meat strands (100) is arranged at a forward cutting end (2a) of the form tube (2),
**characterized in that**
- the form tube (2) is made from plural form tube elements in a circumferential direction which are movable relative to each other in both transversal directions (11.1, 11.2) to the longitudinal pressing direction (10a) and thus the form tubes have a cross section that is adjustable in both transversal directions relative to the longitudinal direction.

2. The cutting machine according to claim 1,
**characterized in that** the
- the blade (3) is movable by a cutting unit (27) in a transversal direction (11), the first blade transversal direction (31.1), and in particular in the axial direction (10a), the feed direction, relative to the form tube (2) in a controlled manner,
and/or
- the blade (3) extends in a width over all form tubes (2) so that the blade is configured to cut slices (101, 102) in one cut from all adjacent form tubes (2) in one process step,
and/or
- the blade (3) oscillates in particular in extension direction (3'a) of its blade edge (3a) and is configured in particular as a bar shaped or strip shaped blade (3) or as a rotating, in particular a circular disc shaped blade (3).

3. The cutting machine according to one of the preceding claims,
**characterized in that**
- the stop plate (13) that is movable in the transversal direction (11.1, 11.2) in particular in the same transversal direction, the first blade transversal direction (31.1), as the blade (3) is in particular firmly connected with the blade (3) in this transversal direction, and
- viewed in the longitudinal pressing direction (10a) the blade (3) and the stop plate (13) in particular do not overlap with each other but advantageously only a narrow gap of less than 20 mm, in particular less than 10 mm is arranged there between in the transversal plane.

4. The cutting machine according to one of the preceding claims,
**characterized in that**
- the inner free cross section (7') of the form tubes (2) includes two respective sides that are arranged opposite to each other and extend parallel with each other and in particular the free inner cross section of the form tubes is rectangular or rhomboid,
and/or
- the longitudinal press plungers (4) for the individual form tubes (2) are controllable independently from each other with respect to their axial feed and include in particular a sensor for detecting the axial position of the longitudinal press plunger (4).

5. The cutting machine according to one of the preceding claims,
**characterized in that**
- the form tube (2) in circumferentially closed condition is slanted in the longitudinal pressing direction (10a) downward at an angle towards their forward cutting end (2a), in particular by an angle (15) between 20° and 70°, better between 30° and 60°, better between 40° and 50° relative to horizontal
and/or
- a stop plate (13) extending parallel to the blade plane (3"), in particular orthogonal to the longitudinal pressing direction (10a) is arranged on a side of the blade (3) that is arranged opposite to the form tube (2) wherein the stop plate (13) is adjustable with respect to its axial distance (9) from the blade (3).

6. The cutting machine according to one of the preceding claims,
**characterized in that**
each form tube (2) is divided in the longitudinal pressing direction (10a) into a front form tube (2.1) and a rear form tube (2.2) that is in particular directly adjacent to the front form tube (2.1), wherein the front form tube (2a) advantageously
- has a length between 2% and 50%, better between 5% and 30%, better between 10% and 20% of an entire length of the form tube (2),
and/or
- has a length of at least 5 cm, better at least 10 cm, better at least 12 cm.

7. The cutting machine according to one of the preceding claims,
**characterized in that**
an intermediary plate (8) is provided between the front form tube (2.1) and the rear form tube (2.2), in particular separately for each form tube (2), wherein the intermediary plate (8) is movable in a controlled manner in the transversal direction (11) relative to the longitudinal pressing direction (10a) between a closed position where it closes the free inner cross section (7') of the form tube (2) and an open position where it leaves the free inner cross section (7) of the form tube (2) open, wherein the control plate is in particular separately movable and is in particular attached to the rear form tube (2.2).

8. The cutting machine according to one of the preceding claims,
**characterized in that**
- each rear form tube (2.2) viewed in the longitudinal direction (10a,b) is made from at least two rear form elements (2.2a, b) that are movable relative to each other in at least the second transversal direction (11.2) relative to the longitudinal direction (10)
and/or
- the two rear form elements (2.2 a, b) of the rear form tube (2.2) are completely disengageable from each other and separable from each other in the second transversal direction (11.2).

9. The cutting machine according to one of the preceding claims,
**characterized in that**
- at least the rear form element (2.2b) including the lower wall of the inner free space (7) of the rear form tube (2.2) is lowerable into a in particular horizontal loading position, in particular pivotable downward, in which loading position said rear form element is aligned in particular with an infeed conveyor (14a, b) for strands (100)
and/or
- the intermediary plate (8) is attached to the rear form element (2.2b) at which the lower wall of the inner free space (7) of the of the rear form tube (2.2) is fixed.

10. The cutting machine according to one of the preceding claims,
**characterized in that**
- the rear form tube (2.2) is made from in particular only two rear form components (2.2a, b) and viewed in the longitudinal pressing direction (10a) a rear form component (2.2b) of each rear form tube (2.2) is configured as a U-shaped component (2.2b) and the other rear form element (2.2a) is configured as a transversal press plunger (2.2a) configured movable relative thereto wherein the transversal press plunger (2.2a) fits sealingly tight in the second transversal direction (11.1) into the open circumferential side of the U-shaped component (2.2b) and is insertable into the U-shaped component and in particular
- upstream of the U-shaped component (2.2b) that is lowered into the loading position a transversal pressing tub (16) that is open in the longitudinal direction (10b) in front and behind and on top is arranged as additional form tube element, in particular directly upstream wherein the two side walls of the transversal pressing tub (16) that are arranged opposite to each other are movable relative to each other in the first transversal direction (11.1).

11. The cutting machine according to one of the preceding claims,
**characterized in that**
a side wall of the transversal pressing tub (16) is firmly connected with a base of the transversal pressing tub (16), and
- either the base is formed by an infeed conveyor (6) for the strands (100) that is move able in the longitudinal direction (10b) of the transversal pressing tub (16),
- or an insertion plunger (21) is provided that is movable in the longitudinal direction (10b) and insertable into an inner free space of the transversal pressing tub (16) and/or of the U-shaped component (2.2b), and in particular a position sensor is provided for determining the longitudinal position of the insertion plunger (21).

12. The cutting machine according to one of the preceding claims, **characterized in that**
- the rear form element (2.2b) configured as a U-shaped component is configured viewed in the longitudinal pressing direction (10a) from an angle element (2.2b1) extending in the feed direction (10a) and a transversal pressing wall (2.2b2) extending parallel to its center arm and contacting tight on an inside of one of the other arms and movable in particular only in a first transversal direction (11.1), and
- in particular the transversal pressing wall (2.2b2) is movable against a stop in the transversal direction so that the width of the inner free space (7) of the U-shaped component (2.2b2) corresponds to the width of the transversal press plunger (2.2a) to be inserted therein.

13. The cutting machine according to one of the preceding claims,
**characterized in that**
the angle elements (2.2b1) of two adjacent rear form tubes (2.2) are configured in the longitudinal direction (10) integral in one piece as a T-element (2.2b1+1) and a respective transversal pressing wall (2.2b2) is movable on each of their aligned arms with pressing directions that are oriented opposite to each other.

14. The cutting machine according to one of the preceding claims,
**characterized in that**
out of four walls enveloping the free space (7) of the rear form tube (2.2) and forming an essentially rectangular inner free space (7) of the rear form tube (2.2) viewed in the longitudinal direction (10a,b) at least the lower wall is formed by the branch (6a) of a form tube band (6) running in the longitudinal direction (10a,b) of the rear form tube (2.2) arranged in particular in the loading position wherein the form tube band (6) forms part of a corresponding rear form element (2.2b), wherein in particular two to four walls are formed by form tube bands (6).

15. The cutting machine according to one of the preceding claims,
**characterized in that**
the U-shaped element (2.2b) in particular including the form tube band (6) and/or the transversal pressing wall (2.2b) are jointly movable in the second transversal direction (11.2), in particular by a scissor arrangement (19).

16. The cutting machine according to one of the preceding claims,
**characterized in that**
the at least one form tube band (6) has a greater width than the greatest diameter of the meat strand (100) to be processed, and in particular when two form tube bands (6) are arranged opposite to each other the transversal press plungers forming the other two walls can retract between the form tube bands (6) in the transversal direction.

17. The cutting machine according to one of the preceding claims,
**characterized in that**
- the transversal pressing wall (2.2b2) is movable in the transversal direction (11.1) with one of its longitudinal edges on a branch of the form tube band (6) which is oriented towards the inner free space (7),
and/or
- the transversal pressing wall (2.2b2) can approach an adjustable transversal position.

18. The cutting machine according to one of the preceding claims,
**characterized in that**
- a wall of the form tube that is arranged opposite to the form tube band (6) is formed by a transversal press plunger (5) that is insertable into the U-shaped component (2.2b),
and/or
- the transversal press plunger (5) is movably arranged in the second transversal direction (11.2) and the two form tube elements including the transversal pressing wall (9) on the one hand side and the form tube band (6) together with the side wall attached thereto are also movable in the second transversal direction (11.2).

19. The cutting machine according to one of the preceding claims,
**characterized in that**
each front form tube (2.1) is made from two front form elements (2.1a, b) wherein one form tube element is configured as a U-shaped component (2.1b) viewed in the longitudinal direction (10) and the other of the two front form elements is configured to fit as a movable transversal press plunger (2.1a) into the free inner cross section of the U-shaped component (2.1b) and is insertable in the second transversal direction (11.2).

20. The cutting machine according to one of the preceding claims,
**characterized in that**
- the longitudinal press plunger (4) is replaceably arranged at a piston rod (12) driving the longitudinal press plunger,
and/or
- the cutting machine (1) includes a control (20) which controls all movable components of the cutting machine in a desired and time based and local correlation relative to each other in their motions.

21. The cutting machine according to one of the preceding claims,
**characterized in that** the
- the transversal press plungers (2.1a, 2.2b) of the front form tube (2.1) and the rear form tube (2.2) are permanently connected with each other, in particular integrally configured with each other as a common transversal press plunger (2.1+2.a),
and/or
- a weighing station (18) is arranged downstream, in particular between the cutting machine (1) and an extraction conveyor (22) conveying the slices or the portions from the cutting machine (1), wherein the weighing station (18) rests in particular on the ground and is not connected with the rest of the cutting machine (1).

22. The cutting machine according to one of the preceding claims,
**characterized in that**
the cutting machine (1) comprises
- a froster upstream of the cutting unit (27)
and/or
- a sorter downstream of the cutting unit (27)
and/or
- a compensation station downstream of the cutting unit (27) for replacing slices (101, 102) within a portion (110) in order to obtain a nominal weight of the portion (110).

23. A method for producing slices (101, 102) from a meat strand (100) made from an elastic material, e.g. a meat strand (100) and in particular to produce portions (110) that are assembled from plural slices (101, 102), in particular in a weight precise manner, the method including the steps:
- arranging a meat strand (100) in a form tube (2),
- compressing the meat strand (100) in the form tube (2) in at least one transversal direction (11.1, 11.2) and in the longitudinal pressing direction (10a) of the form tube (2),
- moving the strand (100) forward in the longitudinal pressing direction (10a) beyond a forward cutting end (2a) of the form tube (2),
- cutting a slice (101) from each strand (100) using at least one blade (3) in front of the front cutting end (2a) of the form tube (2),
**characterized in that**
- plural meat strands (100) are processed in parallel with each other and adjacent to each other in a first transversal direction (11.1) on plural processing tracks, in particular simultaneously processed and eacharranged in a respective form tube (2),
for compressing in the transversal direction
- before longitudinal compressing the strands (100) are transversally compressed respectively in the first transversal direction (11.1) in the respective form tube (2) or upstream thereof, and
- before longitudinally compressing, advantageously after transversally compressing in the first transversal direction (11.1), the strands (100) are transversally compressed respectively in a second transversal direction (11.2) which is especially oriented perpendicular to the first transversal direction (11.1) in the form tube (2),
for cutting off the slices (101)
- the at least one blade (3) of the cutting device (27) is moved in a transversal direction (11) to the longitudinal pressing direction (10a),
- wherein a speed of the transversal movement of the blade (3) is controlled relative to a diameter and the revolution speed of the blade (3).

24. The method according to claim 23,
**characterized in that**
the forward movement in the longitudinal pressing direction (10a) of the strand (100) is performed beyond the front cutting end (2a) of the form tube (2) up to a stop plate (13) for cutting into slices.

25. The method according to one of the preceding method claims,
**characterized in that**
a respective slice (101, 102) is cut off from the at least two adjacent meat strands (100) in one process step by the blade (3), in particular by moving the blade (3) in the second transversal direction (11.2).

26. The method according to one of the preceding method claims,
**characterized in that**
- the blade (3) is moved in the longitudinal pressing direction (10a) after each step and during this time the meat strand (100) is already moved forward beyond the front end of the form tube (2),
- in particular directly after the cutting off of the at least one slice (101, 102) the blade (3) moves forward in the feed direction (10a) in particular by a thickness of a slice (101) before or simultaneously with returning the blade (3) in the transversal direction into its starting position.

27. The method according to one of the preceding method claims,
**characterized in that**
the stop plate (13) and the blade (3) are adjusted in the longitudinal direction at a distance from each other corresponding to a desired thickness of the slice, in particular for each form tube (2) separately and in particular the stop plate (13) and the blade (3) are moved as a cutting unit (27) at least in the cutting direction.

28. The method according to one of the preceding method claims,
**characterized in that**
- each form tube (2) is configured in two pieces in its longitudinal direction (10a) with a front form tube (2.1) and a rear form tube (2.2), wherein transversal compressing of the strand (100) in the front from tube (2.1) is controlled independently from the transversal compressing in the subsequent rear form tube (2.2), and
- in particular the front form tube (2.1) and the rear form tube (2.2) of the same form tube (2) is adjusted in the compressing condition to an identical aligned inner free cross section (7').

29. The method according to one of the preceding method claims,
**characterized in that**
- between the front form tube (2.1) and the aligned rear form tube (2.2) an intermediary plate (8) is arranged that is oriented transversal, in particular orthogonal to the longitudinal pressing direction (10a), wherein the intermediary plate (8) is moved in the transversal direction between a closing position closing the inner free space (7) of the form tube (2) and an open position leaving the inner free space open,
and/or
- for moving a meat strand (100) in the rear form tube (2.2) forward at least one wall, better two opposite walls, better all four walls of the rear form tube (2.2) are moved in the longitudinal direction (10) together with the meat strand (100) and are driven in particular in the feed direction (10).

30. The method according to one of the preceding method claims,
**characterized in that**
- in the front form tube (2.1) and in particular also in the rear form tube (2.2) a transversal compressing is performed only in the second transversal direction (11.2),
and/or
- the transversal compressing is performed in the first transversal direction (11.1) as well as in the second transversal direction (11.2) respectively to a predetermined nominal position.

31. The method according to one of the preceding method claims,
**characterized in that**
as soon as a rear end of an inserted strand (100) or in particular of all inserted strands (100) is only arranged in the axial area of the respective front form tube (2.1), in particular sequentially, in the respective form tube (2) or in all form tubes (2),
- a left over piece of the meat strand (100) in the front form tube (2.1) is advanced in the feed direction (10a) especially by the longitudinal press plunger (4) and sliced completely
- simultaneously a lower rear form element (2.2b) of the rear form tube (2.2) is lowered at least at its loading end (2b), in particular lowered in its entire axial length, into a loading position that is aligned with the infeed conveyor (14a,b) for new meat strands (100), wherein the loading position is in particular horizontal, and
- wherein a respective next strand (100) is inserted into the lower rear form element (2.b2b) of the rear form tube (2.2), in particular below the piston rod (12) of th longitudinal press plunger (4) and in particular transported forward, advantageously to the front end of the rear form element (2.2b), in particular to the intermediary plate (8) arranged at this location,
- the press plunger (4) is pulled back as soon as the strand (100) is sliced.

32. The method according to one of the preceding method claims,
**characterized in that**
- before or after inserting the new meat strand (100) into the lower rear form element (2.2b) the new meat strand (100) is transversally compressed in the first transversal direction (11.1),
in particular
- the lower rear form element (2.2b) of the rear form tube (2.2) is lifted again into a pressing position that is aligned with the lower front form element (2.1b), so that the meat strand (100) is arranged in front of the longitudinal press plunger (4) and the rear form tube (2.2) is thus in particular closed again circumferentially and the strand (100) arranged therein is transversally compressed in the second transversal direction (11.2) by a transversal press plunger (2.2b1),
and/or
- the longitudinal press plunger (4) is pulled back at least to a rear end of the new strand (100) inserted into the rear form element (2.2b),
and/or
- the meat strand (100) is longitudinally compressed against the intermediary plate (8) by the longitudinal press plunger (4),
and/or
- the intermediary plate (8) is removed from the inner free cross section (7) of the form tube (2),
and
- the strand (100) is pushed in the longitudinal direction (10) further forward through the front form tube (2.1), in particular up to the stop plate (13), for slicing the new meat strand (100).

33. The method according to one of the preceding method claims,
**characterized in that**
- either a transversal pressing wall (2.2b2) optionally provided at the lower rear form element (2.2b) is moved radially outward before inserting the new strand (100) wherein the radial outward movement is performed relative to a remainder of the lower rear form element (2.2b) and the transversal pressing wall (2.2b2) is approached again before raising the lower rear form element (2.2b) to the predetermined width in the pressing position and the new strand (100) is transversally compressed, or
- the new strand (100) is transversally compressed in a transversal pressing station in the first transversal direction (11.1) wherein the transversal pressing station is arranged between the lower rear form element (2.2b) and the infeed conveyor (14).

34. The method according to one of the preceding method claims,
**characterized in that**
in the loading position the next strand (100) is inserted in the longitudinal direction (10b) by the infeed conveyor (14) into the lower, in particular U-shaped, rear form element of the rear form element (2.2b) of the rear form tube (2b),
- either inserted by a insertion plunger (21) that is movable in the extension direction of the in feed conveyor (14) and thus in particular a length of the meat strand (100) is determined, in particular by position determination of the insertion plunger (21) in its most forward position,
- or the next strand (100) is transported into the rear form element (2.2b) on a form tube band (6) that is movable in the longitudinal direction (10) and which forms in particular a component of the rear form element (2.2b).

## Revendications

1. Machine de coupe **(1)** pour la fabrication de tranches **(101, 102),** et en particulier de portions **(110)** constituées de plusieurs tranches, en particulier avec un poids précis, à partir de blocs **(100)** de matière élastique, par exemple de blocs de viande **(100),** où la machine de coupe **(1)**
- comprend au moins un tube de façonnage **(2)** ouvert à l'avant et à l'arrière et s'étendant dans la direction longitudinale de pressage **(10a)** de la direction axiale, pour un bloc de viande **(100)** respectif, de préférence plusieurs de ces tubes de façonnage **(2)** disposés parallèlement les uns aux autres,
- où pour chacun des tubes de façonnage **(2),** un poinçon de pressage longitudinal **(4)** est prévu qui peut être inséré dans le tube de façonnage **(2)** depuis l'extrémité de chargement arrière **(2**b**)** dans la direction longitudinale de pressage **(10a)** du tube de façonnage **(2),**
- où un couteau **(3)** pour séparer des tranches (**101, 102**) des blocs de viande **(100)** est disposé à l'extrémité de coupe avant **(2**a**)** du tube de façonnage **(2), caractérisé en ce que**
- le tube de façonnage **(2)** comprend dans la direction circonférentielle plusieurs parties de tube de façonnage qui sont mobiles l'une par rapport à l'autre dans les deux directions transversales **(11.1, 11.2)** par rapport à la direction de pression longitudinale **(10**a**)** et présente ainsi une section transversale qui est réglable dans les deux directions transversales par rapport à la direction longitudinale.

2. Machine de coupe selon la revendication 1,
**caractérisée en ce que**
- le couteau **(3)** peut être déplacé de manière contrôlée dans une direction transversale **(11),** dans la première direction transversale de couteau **(31.1),** et en particulier dans la direction axiale **(10**a**),** la direction d'avance, vers le tube de façonnage **(2),** au moyen d'une unité de coupe **(27),**
et/ou
- le couteau **(3)** s'étend en largeur sur tous les tubes de façonnage **(2)** afin de couper des tranches **(101, 102)** en une coupe, de tous les tubes de façonnage **(2)** voisins en une seule opération,
et/ou
- le couteau **(3)** est un couteau **(3)** qui oscille, en particulier dans la direction d'extension **(3'**a**)** de son arête de couteau **(3**a**),** en particulier sous forme de poutre ou de bande, ou est un couteau rotatif **(3),** en particulier sous forme de disque circulaire.

3. Machine de coupe selon l'une des revendications précédentes,
**caractérisée en ce que**
- la plaque de butée **(13),** qui peut être déplacée dans une direction transversale **(11.1, 11.2),** en particulier dans la même direction transversale, la première direction transversale de couteau **(31.1),** est mobile comme le couteau **(3)** et en particulier est relié de manière fixe au couteau **(3)** dans cette direction transversale, et,
- vu dans la direction longitudinale de pressage **(10a),** le couteau **(3)** et la plaque de butée **(13)** en particulier ne se chevauchent pas, mais de préférence dans le plan transversal, seul un espace étroit inférieur à **20** mm, en particulier inférieur à **10** mm, est présent entre eux.

4. Machine de coupe selon l'une des revendications précédentes,
**caractérisée en ce que**
- la section transversale libre intérieure **(7')** des tubes de façonnage **(2)** présente deux côtés parallèles mutuellement opposés et est en particulier de forme rectangulaire ou parallélographique,
et/ou
- les poinçons de pressage longitudinaux **(4)** pour les tubes de façonnage individuels **(2)** peuvent être commandés indépendamment les uns des autres dans leur avance axiale et comprennent notamment un capteur pour détecter la position axiale du poinçon de pressage longitudinal **(4).**

5. Machine de coupe selon l'une des revendications précédentes,
**caractérisée en ce que**
- le tube de façonnage **(2)** à l'état circonférentiellement fermé est incliné obliquement vers le bas dans la direction longitudinale de pressage **(10**a**)** vers son extrémité de coupe avant **(2**a**),** en particulier par un angle **(15)** entre **20°** et **70°,** mieux entre **30°** et **60°,** mieux entre **40°** et **50°** par rapport à l'horizontale, et/ou
- une plaque de butée **(13)** s'étendant parallèlement au plan du couteau **(3"),** en particulier perpendiculairement à la direction longitudinale de pressage **(10**a**),** est disposée sur le côté du couteau **(3)** opposé au tube de façonnage **(2),** qui est réglable dans sa distance axiale **(9)** au couteau **(3).**

6. Machine de coupe selon l'une des revendications précédentes,
**caractérisée en ce que**
chaque tube de façonnage **(2)** est divisé dans la direction longitudinale de pressage **(10**a**)** en un tube de façonnage avant **(2.1)** et un tube de façonnage arrière **(2.2)** notamment immédiatement adjacent, le tube de façonnage avant **(2**a**)** ayant de préférence
- une longueur entre **2**% et **50**%, mieux entre **5**% et **30**%, mieux entre **10**% et **20**% de la longueur totale du tube de façonnage **(2)**
et/ou
- une longueur d'au moins 5 cm, mieux d'au moins 10 cm et mieux d'au moins 12 cm.

7. Machine de coupe selon l'une des revendications précédentes,
**caractérisée en ce que**
entre le tube de façonnage avant **(2.1)** et le tube de façonnage arrière **(2.2),** en particulier dans chaque tube de façonnage **(2)** séparément, il y a une plaque intermédiaire **(8)** qui peut être déplacée de manière contrôlée, notamment séparément, dans la direction transversale **(11)** à la direction longitudinale de pressage **(10**a**)** entre une position de fermeture, dans laquelle elle ferme la section intérieure libre (7') du tube de façonnage **(2),** et une position ouverte, dans laquelle elle laisse celle-ci ouverte, et est fixée en particulier au tube de façonnage arrière **(2.2).**

8. Machine de coupe selon l'une des revendications précédentes,
**caractérisée en ce que**
- chaque tube de façonnage arrière **(2.2),** vu dans la direction longitudinale **(10a,b),** est constitué d'au moins deux pièces de façonnage arrières **(2.2**a**,** b) qui peuvent être déplacées l'une par rapport à l'autre dans au moins la deuxième direction transversale **(11.2)** par rapport à la direction longitudinale **(10)** et/ou
- les deux pièces de façonnage arrières **(2.2**a**,** b) du tube de façonnage arrière **(2.2)** peuvent dans la deuxième direction transversale **(11.2)** être amenées complètement hors engagement et à une distance l'une de l'autre.

9. Machine de coupe selon l'une des revendications précédentes,
**caractérisée en ce que**
- au moins le tube de façonnage arrière **(2.2)** comprenant la paroi inférieure de l'espace libre intérieur **(7)** peut être abaissé, en particulier rabattu, dans une position de chargement, en particulier une position de chargement horizontale, dans laquelle il est notamment aligné avec un convoyeur **(14**a**,** b) pour les blocs **(100),**
et/ou
- la plaque intermédiaire **(8)** est fixée sur la pièce de façonnage arrière **(2.2**b**)** comprenant la paroi inférieure de l'espace libre intérieur (7) du tube de façonnage arrière **(2.2).**

10. Machine de coupe selon l'une des revendications précédentes,
**caractérisée en ce que**
- le tube de façonnage arrière **(2.2)** est constitué, en particulier seulement, de deux pièces de façonnage arrière **(2.2**a**,** b) et, vu dans la direction longitudinale de pressage **(10**a**),** une pièce de façonnage arrière **(2.2**b**)** de chaque tube de façonnage arrière **(2.2)** est adaptée en pièce en U en forme de U **(2.2**b**),** et l'autre pièce de façonnage arrière **(2.2**a**)** est adaptée en tant qu'un poinçon de pressage transversal **(2.2**a**)** mobile, et qui, dans la deuxième direction transversale **(11.2)** s'insère étroitement dans le côté circonférentiel ouvert de la pièce en U **(2.2**b**)** et peut être rentrée dans cette dernière et, en particulier,
- en amont de la pièce en U **(2.2**b**)** abaissée en position de chargement, une cuve de pressage transversale **(16),** ouverte dans la direction longitudinale **(10**b**)** à l'avant et à l'arrière et en haut, est montée directement en amont, sous forme d'autre pièce de tube de pressage, notamment directement, dans laquelle les deux parois latérales mutuellement opposées de la cuve de pressage transversale **(16)** peuvent être déplacées l'une par rapport à l'autre dans la première direction transversale **(11.1).**

11. Machine de coupe selon l'une des revendications précédentes,
**caractérisée en ce que**
une paroi latérale de la cuve de pressage transversale **(16)** est solidement reliée au fond de la cuve de pressage transversale **(16),** et
- soit, le fond est formé par une bande de transport **(6)** pour les blocs **(100),** qui est mobile dans une direction longitudinale **(10**b**)** de la cuve **(16),**
- soit un poinçon **(21)** est prévu, qui peut se déplacer dans la direction longitudinale **(10**b**)** et peut être inséré dans l'espace libre intérieur de la cuve de pressage transversale **(16)** et/ou de la pièce en U **(2.2**b**),** et en particulier un capteur de position pour déterminer la position longitudinale du poinçon **(21)** est prévu.

12. Machine de coupe selon l'une des revendications précédentes,
**caractérisée en ce que**
- la partie de façonnage arrière **(2.2**b**),** vue dans la direction longitudinale de pressage **(10**a**),** comprend une pièce angulaire (**2.2**b**1**) s'étendant dans la direction d'avance **(10**a) et une paroi de pressage transversale **(2.2**b**2)** parallèle à la branche centrale de la pièce angulaire et portant étroitement sur la face interne de l'une des autres branches, mobile en particulier dans la première direction transversale **(11.1),** et
- en particulier la paroi de pressage transversale **(2.2**b**2)** est mobile contre une telle butée dans la direction transversale, et **en ce que** la largeur de l'espace libre intérieur **(7)** de la pièce en U **(2.2**b**)** correspond alors à la largeur du poinçon de pressage transversal **(2.2**a**)** à y introduire.

13. Machine de coupe selon l'une des revendications précédentes,
**caractérisée en ce que**
les pièces angulaires (**2.2**b**1**) de deux tubes de façonnage arrières **(2.2)** adjacents, vus dans la direction longitudinale **(10),** sont formées en une seule pièce l'une avec l'autre en tant que pièce en T (**2.2**b**1+1**) et **en ce qu'**une paroi de pressage transversale **(2.2**b**2)** respective est mobile sur les branches mutuellement alignées, avec des directions de pressage opposées.

14. Machine de coupe selon l'une des revendications précédentes,
**caractérisée en ce que**
des quatre parois du tube de façonnage arrière **(2.2)** entourant l'espace libre **(7),** qui sont présentes dans un espace libre intérieur **(7)** sensiblement rectangulaire du tube de façonnage arrière **(2.2)** vu dans la direction longitudinale **(10**a**,** b), au moins la paroi inférieure est formée à partir du tronçon **(6a)** d'une bande de tube de façonnage **(6)** s'étendant dans la direction longitudinale **(10**a**)** du tube de façonnage arrière **(2.2),** en particulier dans la position de chargement, qui fait partie de la pièce de façonnage arrière correspondante **(2.2**b**),** en particulier deux à quatre parois sont formées de bande de tube de façonnage **(6).**

15. Machine de coupe selon l'une des revendications précédentes,
**caractérisée en ce que**
la pièce en U **(2.2**b**),** en particulier avec la bande de tube de façonnage **(6)** et/ou la paroi de pressage transversale **(2.2**b**),** peuvent être déplacées ensemble dans la deuxième direction transversale **(11.2),** en particulier au moyen d'une tringlerie en ciseaux **(19).**

16. Machine de coupe selon l'une des revendications précédentes,
**caractérisée en ce que**
ladite au moins une bande de tube de façonnage **(6)** présente une largeur supérieure au diamètre maximal du bloc **(100)** à traiter, et en particulier dans le cas de deux bandes de tube de façonnage opposées, les poinçons de pressage transversaux formant les deux autres parois peuvent être rentrés dans la direction transversale entre les deux bandes de tube de façonnage **(6).**

17. Machine de coupe selon l'une des revendications précédentes,
**caractérisée en ce que**
- la paroi de pressage transversale **(2.2**b**2)** peut être déplacée avec l'un de ses bords longitudinaux dans la direction transversale **(11.1)** sur le tronçon de la bande de tube de façonnage **(6)** tournée vers l'espace libre intérieur **(7)** et/ou
- la paroi de pressage transversale **(2.2**b**2)** peut approcher une position transversale réglable.

18. Machine de coupe selon l'une des revendications précédentes,
**caractérisée en ce que**
- la paroi du tube de façonnage opposée à la bande de tube de façonnage **(6)** est formée par un poinçon de pressage transversal **(5)** qui peut être inséré dans la pièce en U **(2. 2**b**)**
et/ou
- le poinçon de pressage transversal **(5)** est arrangé de façon mobile dans la deuxième direction transversale **(11. 2)** et les deux pièces de tube de pressage constituées de la paroi de pressage transversale **(9)** d'une part et de la bande de tube de façonnage **(6)** ainsi que de la paroi latérale fixée à celle-ci d'autre part, sont également mobiles dans la deuxième direction transversale **(11.2).**

19. Machine de coupe selon l'une des revendications précédentes,
**caractérisée en ce que**
chaque tube de façonnage frontal **(2.1)** est constitué de deux parties de façonnage frontales **(2.1**a,b)**,** dont l'une est réalisée sous la forme d'une pièce en U sous forme de U **(2.1**b**)** vue dans la direction longitudinale **(10)** et dont l'autre est réalisée sous forme de poinçon transversal **(2.1**a**)** mobile, s'insérant dans la pièce intérieure libre de la partie en U **(2.1**b**)** et pouvant être rentrée dans la deuxième direction transversale **(11.2).**

20. Machine de coupe selon l'une des revendications précédentes,
**caractérisée en ce que**
- le poinçon de pressage longitudinal **(4)** est disposé de manière interchangeable sur la tige de piston **(12)** qui l'entraîne,
et/ou
- la machine de coupe **(1)** comprend une commande **(20)** qui commande toutes les parties mobiles de la machine de coupe dans leurs mouvements selon la corrélation temporelle et locale souhaitée entre elles.

21. Machine de coupe selon l'une des revendications précédentes,
**caractérisée en ce que**
- les poinçons de pressage transversal **(2.1**a**, 2.2**b**)** du tube de façonnage avant **(2.1)** et du tube de façonnage arrière **(2.2)** sont solidaires l'un de l'autre, en particulier adaptés en une seule pièce l'un de l'autre en tant que poinçon de pressage transversal **(2.1 +2.**a**)** commun,
et/ou
- une station de pesage **(18)** est disposée en aval, en particulier entre la machine de coupe **(1)** et un convoyeur d'évacuation **(22)** qui transporte les tranches ou les portions à l'écart de la machine de coupe **(1)** qui repose notamment sur le fond et n'est pas relié au reste de la machine de coupe **(1).**

22. Machine de coupe selon l'une des revendications précédentes,
**caractérisée en ce que**
la machine de coupe **(1)** comprend
- un congélateur en amont de l'unité de coupe **(27),**
et/ou
- un trieur en aval de l'unité de coupe **(27)**
et/ou
- une station de compensation en aval de l'unité de coupe **(27)** pour échanger des tranches **(101, 102)** dans une portion **(110)** pour atteindre le poids souhaité de la portion **(110).**

23. Procédé pour fabriquer à partir d'un bloc d'un matériau élastique **(100),** par exemple un bloc de viande **(100),** des tranches **(101, 102),** et en particulier des portions **(110)** constituées de plusieurs tranches, en particulier avec un poids précis, en
- disposant un bloc **(100)** dans un tube de façonnage **(2),**
- en ce que le bloc **(100)** et pressé dans le tube de façonnage **(2),** dans au moins une direction transversale **(11.1, 11.2)** et dans la direction longitudinale de pressage **(10a)** du tube de façonnage **(2),**
- en poussant le bloc **(100)** vers l'avant dans la direction longitudinale de pressage **(10**a**)** au-delà de l'extrémité de coupe avant **(2**a**)** du tube de façonnage **(2),**
- en séparant avant l'extrémité de coupe avant **(2**a**)** du tube de façonnage **(2)** une tranche **(101)** de chaque bloc **(100)** par au moins un couteau **(3), caractérisé en ce que**
- plusieurs blocs **(100)** sont traités parallèlement dans une première direction transversale **(11.1)** sur plusieurs pistes de traitement, en particulier simultanément, et sont disposés chacun dans un tube de façonnage **(2)** respectif, pour être pressés dans la direction transversale
- lesdits blocs **(100)** sont pressés transversalement dans le tube de façonnage **(2)** respectif ou en amont de celui-ci dans la première direction transversale **(11.1)** avant chaque pressage longitudinal, et
- lesdits blocs **(100)** sont pressés transversalement dans le tube de façonnage **(2)** dans la première direction transversale **(11.1)** avant le pressage longitudinal, de préférence après le pressage transversal dans une deuxième direction transversale **(11.2),** qui est en particulier perpendiculaire à la première direction transversale **(11.1),**
pour séparer les tranches **(101),**
- ledit au moins un couteau **(3)** du dispositif de coupe **(27)** est déplacée dans une direction transversale **(11)** à la direction de pressage longitudinale **(10a),**
- la vitesse du déplacement transversal du couteau **(3)** est contrôlée par rapport au diamètre et à la vitesse de rotation du couteau (3).

24. Procédé selon la revendication 23,
**caractérisé en ce que**
l'avance dans la direction de pressage longitudinale **(10a)** du bloc **(100)** s'effectue au-delà de l'extrémité de coupe avant **(2**a**)** du tube de façonnage **(2)** pour couper en tranches **(100)** jusqu'à une plaque de butée **(13).**

25. Procédé selon l'une des revendications de procédé précédentes,
**caractérisé en ce que**
une tranche **(101, 102)** respective est séparée de chacun des au moins deux blocs de viande **(100)** disposés côte à côte dans la même opération par un seul et même couteau **(3),** en particulier en déplaçant le couteau **(3)** dans la deuxième direction transversale **(11.2).**

26. Procédé selon l'une des revendications de procédé précédentes,
**caractérisé en ce que**
- le couteau **(3)** est déplacé axialement dans la direction de pressage longitudinale **(10**a**)** après chaque coupe, et pendant ce temps le bloc de viande **(100)** est déjà avancé au-delà de l'extrémité avant du tube de façonnage **(2),**
- en particulier immédiatement après la séparation de ladite au moins une tranche (**101, 102**), le couteau **(3)** est déplacé vers l'avant, en direction de l'avance **(10**a**),** notamment par l'épaisseur d'une tranche **(101),** avant ou simultanément avec le retour du couteau **(3)** dans la direction transversale dans sa position initiale.

27. Procédé selon l'une des revendications de procédé précédentes,
**caractérisé en ce que**
- la plaque de butée **(13)** et le couteau **(3)** sont réglés l'un par rapport à l'autre dans la direction longitudinale à une distance correspondant à l'épaisseur souhaitée de la tranche, en particulier séparément pour chaque tube de façonnage **(2),** et
- en particulier la plaque de butée **(13)** et le couteau **(3)** sont déplacés ensemble au moins dans la direction de coupe **(27)** comme unité de coupe **(27).**

28. Procédé selon l'une des revendications de procédé précédentes,
**caractérisé en ce que**
- chaque tube de façonnage **(2)** est formé en deux parties dans sa direction longitudinale **(10**a**)** avec un tube de façonnage avant **(2.1)** et un tube de façonnage arrière **(2.2),** la pression transversale du bloc **(100)** dans le tube de façonnage avant **(2.1)** étant commandée indépendamment de la pression transversale dans le tube de façonnage arrière suivant **(2.2),** et
- en particulier le tube de façonnage avant **(2.1)** et le tube de façonnage arrière **(2.2)** du même tube de façonnage **(2)** étant réglés à l'état pressé à la même section intérieure libre **(7')** alignée l'un avec l'autre.

29. Procédé selon l'une des revendications de procédé précédentes,
**caractérisé en ce que**
- une plaque intermédiaire **(8)** disposée transversalement, en particulier perpendiculairement à la direction de pressage longitudinale **(10**a**)** est disposée entre le tube de façonnage avant **(2.1)** et le tube de façonnage arrière **(2.2)** alignés avec celui-ci, laquelle plaque intermédiaire est déplacée dans la direction transversale entre une position de fermeture fermant l'espace libre intérieure **(7)** du tube de façonnage **(2)** ou une position ouverte le laissant ouvert, et/ou
- **en ce que** pour avancer un bloc de viande **(100)** dans le tube de façonnage arrière **(2.2)** au moins une, mieux deux parois opposées, mieux les quatre parois du tube de façonnage arrière **(2.2)** sont déplacées avec le bloc de viande **(100)** dans la direction longitudinale **(10)** et en particulier sont entraînées dans la direction d'avance **(10).**

30. Procédé selon l'une des revendications de procédé précédentes,
**caractérisé en ce que**
- une pression transversale n'est effectuée que dans la deuxième direction transversale **(11.2)** dans le tube de façonnage avant **(2.1)** et en particulier aussi dans le tube de façonnage arrière **(2.2),**
et/ou
- la pression transversale est effectuée dans la première direction transversale (**11.1**) et dans la deuxième direction transversale **(11.2)** jusqu'à une position souhaitée prédéterminée, respectivement.

31. Procédé selon l'une des revendications de procédé précédentes,
**caractérisé en ce que,**
dès que l'extrémité arrière d'un ou en particulier de tous les blocs insérés **(100)** est située uniquement dans la région axiale du tube de façonnage avant respectif **(2.1),** en particulier les uns après les autres, dans le tube de façonnage respectif **(2)** ou dans tous les tubes de façonnage **(2),**
- le reste du bloc **(100)** est avancé dans le tube de façonnage avant **(2.1)** dans la direction d'avance, en particulier au moyen du poinçon de pressage longitudinal **(4),** et est complètement coupé,
- simultanément la pièce de façonnage arrière inférieure **(2.2**b**)** du tube de façonnage arrière **(2.2)** est abaissée vers le bas au moins à son extrémité de chargement **(2**b**),** en particulier sur toute sa longueur axiale, dans une position de chargement, en particulier une position de chargement horizontale, qui est alignée avec le convoyeur **(14**a**,** b) pour des nouveaux blocs **(100),** et
- le bloc suivant **(100)** est inséré dans la pièce de façonnage arrière inférieure (**2.2**b) du tube de façonnage arrière **(2.2),** en particulier sous la tige de piston **(12)** du poinçon de pressage longitudinal **(4),** et en particulier transporté vers l'avant, de préférence jusqu'à l'extrémité avant de la pièce de façonnage arrière **(2.2**b**),** en particulier jusqu'à la plaque intermédiaire **(8),**
- dès que le bloc **(100)** est coupé, le poinçon de pressage longitudinal **(4)** est rétracté.

32. Procédé selon l'une des revendications de procédé précédentes,
**caractérisé en ce que**
- avant ou après l'insertion du nouveau bloc **(100)** dans la pièce de façonnage arrière inférieure **(2.2**b**),** le nouveau bloc **(100)** est pressé transversalement dans la première direction transversale **(11.1),**
- en particulier la pièce de façonnage arrière inférieure **(2.2**b**)** du tube de façonnage arrière **(2.2)** est soulevée dans une position de pressage alignée avec la pièce de façonnage avant inférieure **(2.1**b**),** de sorte que le bloc **(100)** se trouve devant le poinçon de pressage longitudinal **(4)** et que le tube de façonnage arrière **(2.2)** se referme ainsi, en particulier dans le sens périphérique, et que le bloc **(100)** qui s'y trouve soit pressé transversalement dans la deuxième direction transversale **(11.2)** au moyen d'un poinçon de pression transversal (**2.2**b**1**), et/ou
- le poinçon de pressage longitudinal **(4)** est rétracté au moins jusqu'à l'extrémité arrière du bloc **(100)** inséré dans la pièce de façonnage arrière **(2.2**b**),**
- et/ou le bloc de viande **(100)** est pressé longitudinalement contre la plaque intermédiaire **(8)** au moyen du poinçon de pressage longitudinal **(4),** et/ou
- la plaque intermédiaire **(8)** est retirée de la section transversale libre intérieure **(7)** du tube de façonnage **(2),**
et
- le bloc **(100)** est poussé plus en avant dans la direction longitudinale **(10)** à travers le tube de façonnage avant **(2.1),** notamment jusqu'à la plaque de butée **(13),** pour couper le nouveau bloc **(100).**

33. Procédé selon l'une des revendications de procédé précédentes,
**caractérisé en ce que**
- soit une paroi de pressage transversale **(2.2**b**2)** éventuellement présente sur la pièce de façonnage arrière inférieure **(2.2**b**)** est déplacée radialement vers l'extérieur avant l'insertion du nouveau bloc **(100)** par rapport au reste de la pièce de façonnage arrière **(2.2**b**)** inférieure et est rapprochée avant le soulèvement de la pièce de façonnage arrière inférieure **(2.2**b**)** jusqu'à la largeur prédéterminée lors de la position de pressage et le nouveau bloc **(100)** est pressé transversalement,
- ou le nouveau bloc **(100)** est pressé transversalement dans la première direction transversale **(11.1)** dans un poste de pressage transversal disposé entre la pièce de façonnage arrière inférieure **(2.2**b**)** et le convoyeur **(14).**

34. Procédé selon l'une des revendications de procédé précédentes,
**caractérisé en ce que,**
dans la position de chargement, le bloc suivant **(100)** dans la direction longitudinale **(10**b**)** du convoyeur **(14)** dans la pièce de façonnage arrière inférieure (2.2b), en particulier en U du tube de façonnage arrière **(2**b**)**
- est inséré soit par un poussoir **(21)** déplaçable dans la direction de déplacement du convoyeur **(14)** et, en particulier, la longueur du bloc de viande **(100)** est alors déterminée, notamment en déterminant la position du poussoir **(21)** dans sa position antérieure,
- ou le bloc suivant **(100)** est transporté dans la pièce de façonnage arrière **(2.2**b**)** reposant sur une bande de tube de pressage **(6)** mobile dans le sens longitudinal **(10)** qui fait notamment partie de cette pièce de façonnage arrière **(2.2**b**).**
